(19) Europäisches Patentamt
European Patent Office
Office européen des brevets

(11) **EP 4 191 928 A1**

(12) **EUROPEAN PATENT APPLICATION**
published in accordance with Art. 153(4) EPC

(43) Date of publication:
**07.06.2023 Bulletin 2023/23**

(21) Application number: **21855605.8**

(22) Date of filing: **12.08.2021**

(51) International Patent Classification (IPC):
**H04L 5/00** (2006.01)

(52) Cooperative Patent Classification (CPC):
**H04L 5/00**

(86) International application number:
**PCT/CN2021/112306**

(87) International publication number:
**WO 2022/033555 (17.02.2022 Gazette 2022/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.08.2020 CN 202010821303**
**17.03.2021 CN 202110286619**

(71) Applicant: **Huawei Technologies Co., Ltd.**
**Shenzhen, Guangdong 518129 (CN)**

(72) Inventors:
- YU, Jian
  Shenzhen, Guangdong 518129 (CN)
- GUO, Zhiheng
  Shenzhen, Guangdong 518129 (CN)
- SU, Liyan
  Shenzhen, Guangdong 518129 (CN)
- LU, Shaozhong
  Shenzhen, Guangdong 518129 (CN)
- YU, Yawei
  Shenzhen, Guangdong 518129 (CN)

(74) Representative: **Epping - Hermann - Fischer Patentanwaltsgesellschaft mbH**
**Schloßschmidstraße 5**
**80639 München (DE)**

(54) **SIGNAL TRANSMISSION METHOD AND APPARATUS**

(57) A signal transmission method and an apparatus are provided. The method includes: A sending device generates a sequence of a demodulation reference signal, and maps the sequence of the demodulation reference signal to a time-frequency resource of the demodulation reference signal for sending. The demodulation reference signal is used to estimate a channel state of a first channel, and the first channel carries uplink data. The time-frequency resource includes frequency-domain resources corresponding to a first CDM group, and the frequency-domain resources corresponding to the first CDM group are non-contiguous and equally spaced. A first PRB in the frequency-domain resources corresponding to the first CDM group includes a first group of subcarriers and a second group of subcarriers, the first group of subcarriers and the second group of subcarriers each include two subcarriers, the first group of subcarriers corresponds to a first group of OCCs, the second group of subcarriers corresponds to a second group of OCCs, and the first group of OCCs is orthogonal to the second group of OCCs.

FIG. 3

**Description**

**CROSS-REFERENCE TO RELATED APPLICATIONS**

This application claims priority to Chinese Patent Application No. 202010821303.5, filed with the China National Intellectual Property Administration on August 14, 2020 and entitled "SIGNAL TRANSMISSION METHOD AND APPARATUS", which is incorporated herein by reference in its entirety; and this application claims priority to Chinese Patent Application No. 202110286619.3, filed with the China National Intellectual Property Administration on March 17, 2021 and entitled "SIGNAL TRANSMISSION METHOD AND APPARATUS", which is incorporated herein by reference in its entirety.

**TECHNICAL FIELD**

This application relates to the field of mobile communication technologies, and in particular, to a signal transmission method and an apparatus.

**BACKGROUND**

In a fourth generation (fourth generation, 4G) wireless communication system and a fifth generation (fifth generation, 5G) wireless communication system-new radio access technology (new radio access technology, NR) system, a demodulation reference signal (demodulation reference signal, DMRS) is defined to be used for channel estimation, and then physical uplink shared channel (physical uplink shared channel, PUSCH) data demodulation is performed.

A manner of generating a DMRS sequence is related to a used waveform configuration. The NR system supports two waveforms: a cyclic prefixed orthogonal frequency division multiplexing (cyclic prefixed orthogonal frequency division multiplexing, CP-OFDM) waveform and a discrete Fourier transform-spread-orthogonal frequency division multiplexing (discrete Fourier transform-spread-orthogonal frequency division multiplexing, DFT-S-OFDM) waveform.

According to the current NR protocol, the DFT-S-OFDM waveform supports a maximum of eight orthogonal DMRS ports, that is, eight layers of multi-user orthogonal pairing, and the CP-OFDM waveform supports a maximum of 12 orthogonal DMRS ports, that is, 12 layers of multi-user orthogonal pairing. If a quantity of pairing layers exceeds a maximum quantity of multi-user orthogonal pairing layers supported by the corresponding waveform (for example, the quantity of pairing layers exceeds 8 in the case of using the DFT-S-OFDM waveform or the quantity of pairing layers exceeds 12 in the case of using the CP-OFDM waveform), DMRS ports cannot be orthogonal to each other. As a result, pilot interference is introduced, DMRS channel estimation is inaccurate, and PUSCH demodulation performance is affected.

With the development of mobile communication and the emergence of new services, the demand for an uplink capacity is increasing. For example, in some video surveillance scenarios, a terminal device needs to upload a high-definition video to a base station, and a quantity of layers for transmission needs to be greater than a maximum quantity of layers for multi-user orthogonal pairing supported by a current system, to improve a transmission capacity and satisfy a requirement for a high capacity in the future.

**SUMMARY**

Embodiments of this application provide a signal transmission method and an apparatus, to increase a transmission capacity.

A first aspect provides a signal transmission method, including:

A sending device generates a sequence of a demodulation reference signal, where the demodulation reference signal is used to estimate a channel state of a first channel; and

the sending device maps the sequence of the demodulation reference signal to a time-frequency resource of the demodulation reference signal for sending, where the time-frequency resource include frequency-domain resources corresponding to a first code division multiplexing (CDM) group, and the frequency-domain resources corresponding to the first CDM group are non-contiguous and equally spaced; a first physical resource block (PRB) in the frequency-domain resources corresponding to the first CDM group includes a first group of subcarriers and a second group of subcarriers; and the first group of subcarriers and the second group of subcarriers each include two subcarriers, the first group of subcarriers corresponds to a first group of orthogonal cover codes (OCCs), the second group of subcarriers corresponds to a second group of OCCs, and the first group of OCCs is orthogonal to the second group of OCCs.

In the foregoing embodiment of this application, subcarriers on the first PRB in the frequency-domain resources corresponding to the first CDM group are divided into the first group of subcarriers and the second group of subcarriers, the first group of subcarriers corresponds to the first group of OCCs, the second group of subcarriers corresponds to the second group of OCCs, and the first group of OCCs is orthogonal to the second group of OCCs. Because different demodulation reference signal ports in the first CDM group are orthogonal to each other by using the OCCs, the OCCs are extended in the foregoing embodiment of this application, so that a quantity of the demodulation reference signal ports that are orthogonal to each other in the first CDM group can be increased without additionally increasing time-frequency resource overheads of the demodulation reference signal, thereby increasing a system transmission capacity.

In a possible design, the first PRB further includes a third group of subcarriers, the third group of subcarriers includes two subcarriers, and the third group of subcarriers corresponds to the first group of OCCs.

In a possible design, a configuration information table of the demodulation reference signal includes a correspondence between a demodulation reference signal port index, a CDM group frequency-domain offset, and an OCC, the OCC includes a frequency-domain OCC and a time-domain OCC, and the frequency-domain OCC includes a first group of OCCs and a second group of OCCs.

In the foregoing embodiment of this application, the configuration information table of the demodulation reference signal is extended, that is, the frequency-domain OCC in the configuration information table is extended to the first group of OCCs and the second group of OCCs that are orthogonal to each other. In this way, when the time-domain OCC and the frequency-domain OCC are queried based on the configuration information table, to map the sequence of the demodulation reference signal to the corresponding time-frequency resource, the first group of subcarriers on the first PRB in the frequency-domain resources corresponding to the first CDM group can use the first group of OCCs, and the second group of subcarriers can use the second group of OCCs, to ensure orthogonality between the demodulation reference signal mapped to the first group of subcarriers and the demodulation reference signal mapped to the second group of subcarriers.

In a possible design, a configuration information table of the demodulation reference signal includes a first configuration information table and a second configuration information table;

the first configuration information table includes a correspondence between a demodulation reference signal port index, a CDM group frequency-domain offset, and an OCC, and the OCC includes a frequency-domain OCC and a time-domain OCC; and

the second configuration information table includes a correspondence between a demodulation reference signal port index, a CDM group frequency-domain offset, and an OCC, the OCC includes a frequency-domain OCC and a time-domain OCC, the frequency-domain OCC includes a first group of OCCs and a second group of OCCs, and the demodulation reference signal port indexes included in the second configuration information table and the first configuration information table are different.

In the foregoing embodiment of this application, the configuration information table of the demodulation reference signal is extended, that is, extended to the first configuration information table and the second configuration information table, and the frequency-domain OCC in the second configuration information table is extended to the first group of OCCs and the second group of OCCs that are orthogonal to each other. In this way, when the time-domain OCC and the frequency-domain OCC are queried based on the first configuration information table and the second configuration information table, to map the sequence of the demodulation reference signal to the corresponding time-frequency resource, corresponding configuration information tables can be queried based on different demodulation reference signal port indexes, the first group of subcarriers on the first PRB in the frequency-domain resources corresponding to the first CDM group can use the first group of OCCs, and the second group of subcarriers can use the second group of OCCs, to ensure orthogonality between the demodulation reference signal mapped to the first group of subcarriers and the demodulation reference signal mapped to the second group of subcarriers.

In a possible design, the method further includes: The sending device obtains, based on the configuration information table, a first group of OCCs corresponding to the first group of subcarriers and a second group of OCCs corresponding to the second group of subcarriers.

In a possible design, that the sending device maps the sequence of the demodulation reference signal to a time-frequency resource of the demodulation reference signal includes:

the sending device obtains, based on the configuration information table, a CDM group frequency-domain offset, a frequency-domain OCC, and a time-domain OCC that correspond to a first RE $(k, l)$, where the first RE $(k, l)$ has a subcarrier index of $k$ and a symbol index of $l$ in the time-frequency resource; and

the sending device obtains, based on the CDM group frequency-domain offset, the frequency-domain OCC, and the time-domain OCC, data $\widetilde{\alpha}_{k,l}^{(\widetilde{p}_j,\mu)}$ of the sequence of the demodulation reference signal mapped to the first RE

$(k, l)$, where the data $\widetilde{\alpha}_{k,l}^{(\widetilde{p}_j,\mu)}$ mapped to the first RE $(k, l)$ satisfies:

$$\widetilde{\alpha}_{k,l}^{(\widetilde{p}_j,\mu)} = W_f(k' + 2t)W_t(l')r(2n + k')$$

$$k = 4n + 2k' + \Delta$$

k' = 0,1
t = mod(n, 2)
$l = \overline{l} + l'$
n = 0,1,···
j = 0,1,-,v- 1
where $W_f(k' + 2t)$ is a frequency-domain OCC, $W_t(l')$ is a time-domain OCC, and r(2n + k') is an initial sequence of the demodulation reference signal; and $\Delta$ is a CDM group frequency-domain offset, $\overline{l}$ is an index of a start symbol of the demodulation reference signal, $l'$ is a symbol offset of the demodulation reference signal, and v is a quantity of transmission layers, where when t=0, the frequency-domain OCC is a first group of OCCs; and when t=1, the frequency-domain OCC is a second group of OCCs.

In the foregoing embodiment of this application, the mapping formula of the demodulation reference signal may be used with the extended configuration information table of the demodulation reference signal in the foregoing embodiment to map the demodulation reference signal to the time-frequency resource, and orthogonality between demodulation reference signal ports in the first CDM group can be ensured.

In a possible design, the method further includes: The sending device sends indication information of the demodulation reference signal port index in the first CDM group to a receiving device.

In a possible design, a maximum quantity of demodulation reference signal ports included in the first CDM group is at least 4N, and N is a quantity of symbols occupied by the demodulation reference signal.

In the foregoing embodiment of this application, the quantity of demodulation reference signal ports that can be included in the first CDM group may be increased to at least 4N. For example, when the foregoing embodiment of this application is applied to a DMRS whose configuration type is a type 1 DMRS, one CDM group can support orthogonality between eight DMRS ports, and two CDM groups can support orthogonality between 16 DMRS ports in total without increasing DMRS overheads, thereby implementing 16-layer orthogonal multi-user pairing and effectively improving a system capacity.

A second aspect provides a signal transmission method, including:

A sending device generates a sequence of a demodulation reference signal, where the demodulation reference signal is used to estimate a channel state of a first channel; and

the sending device maps the sequence of the demodulation reference signal to a time-frequency resource of the demodulation reference signal for sending, where the time-frequency resource includes frequency-domain resources corresponding to a first CDM group, and the frequency-domain resources corresponding to the first CDM group are non-contiguous and equally spaced; time-domain resources corresponding to the first CDM group include a first group of symbols and a second group of symbols, the first group of symbols corresponds to a first group of OCCs, the second group of symbols corresponds to a second group of OCCs, and the first group of OCCs is orthogonal to the second group of OCCs.

In the foregoing embodiment of this application, the time-domain resources corresponding to the first CDM group is divided into the first group of symbols and the second group of symbols, the first group of symbols corresponds to the first group of OCCs, the second group of symbols corresponds to the second group of OCCs, and the first group of OCCs is orthogonal to the second group of OCCs. Because different demodulation reference signal ports in the first CDM group are orthogonal to each other by using the OCCs, the OCCs are extended in the foregoing embodiment of this application, so that a quantity of the demodulation reference signal ports that are orthogonal to each other in the first CDM group can be increased without additionally increasing time-frequency resource overheads of the demodulation reference signal, thereby increasing a system transmission capacity.

In a possible design, a configuration information table of the demodulation reference signal includes a correspondence between a demodulation reference signal type, a demodulation reference signal port index, a CDM group frequency-domain offset, and an OCC, the OCC includes a frequency-domain OCC and a time-domain OCC, the time-domain OCC includes a first group of OCCs and a second group of OCCs, the first group of OCCs corresponds to a first demodulation reference signal type, the second group of OCCs corresponds to a second demodulation reference signal type, the first demodulation reference signal type corresponds to the first group of symbols, and the second demodulation reference signal type corresponds to the second group of symbols.

In the foregoing embodiment of this application, the configuration information table of the demodulation reference signal is extended, that is, the time-domain OCC in the configuration information table is extended to the first group of OCCs and the second group of OCCs that are orthogonal to each other. In this way, when the time-domain OCC and the frequency-domain OCC are queried based on the configuration information table, to map the sequence of the demodulation reference signal to the corresponding time-frequency resource, the first group of symbols in the time-domain resources corresponding to the first CDM group can use the first group of OCCs, and the second group of symbols can use the second group of OCCs, to ensure orthogonality between the demodulation reference signal mapped to the first group of symbols and the demodulation reference signal mapped to the second group of symbols.

In a possible design, the configuration information table of the demodulation reference signal includes a first configuration information table and a second configuration information table, the first configuration information table corresponds to a first demodulation reference signal type, the second configuration information table corresponds to a second demodulation reference signal type, the first demodulation reference signal type corresponds to the first group of symbols, and the second demodulation reference signal type corresponds to the second group of symbols;

the first configuration information table includes a correspondence between a demodulation reference signal port index, a CDM group frequency-domain offset, and an OCC, the OCC includes a frequency-domain OCC and a time-domain OCC, and the time-domain OCC is the first group of OCCs; and

the second configuration information table includes a correspondence between a demodulation reference signal port index, a CDM group frequency-domain offset, and an OCC, where the OCC includes a frequency-domain OCC and a time-domain OCC, and the time-domain OCC is the second group of OCCs.

In the foregoing embodiment of this application, the configuration information table of the demodulation reference signal is extended, that is, the configuration information table of the demodulation reference signal is extended to the first configuration information table and the second configuration information table. The first configuration information table and the second configuration information table correspond to different demodulation reference signal types (the different demodulation reference signal types are associated with different symbol groups), the time-domain OCC in the first configuration information table is the first group of OCCs, and the time-domain OCC in the second configuration information table is the second group of OCCs. In this way, when the time-domain OCC and the frequency-domain OCC are queried based on the first configuration information table and the second configuration information table, to map the sequence of the demodulation reference signal to the corresponding time-frequency resource, different configuration information tables can be queried based on the different demodulation reference signal types. Specifically, the first configuration information table is queried based on the first demodulation reference signal type to obtain the first group of OCCs used for the first group of symbols, and the second configuration information table is queried based on the first demodulation reference signal type to obtain the second group of OCCs used for the second group of symbols, to ensure orthogonality between the demodulation reference signal mapped to the first group of symbols and the demodulation reference signal mapped to the second group of symbols.

In a possible design, a configuration information table of the demodulation reference signal includes a correspondence between a demodulation reference signal type, a demodulation reference signal port index, a CDM group frequency-domain offset, and an OCC, the OCC includes a frequency-domain OCC and a time-domain OCC, the frequency-domain OCC includes a first group of OCCs and a second group of OCCs, the first group of OCCs corresponds to a first demodulation reference signal type, the second group of OCCs corresponds to a second demodulation reference signal type, the first demodulation reference signal type corresponds to the first group of symbols, and the second demodulation reference signal type corresponds to the second group of symbols.

In the foregoing embodiment of this application, the configuration information table of the demodulation reference signal is extended, that is, the frequency-domain OCC in the configuration information table is extended to the first group of OCCs and the second group of OCCs that are orthogonal to each other. In this way, when the time-domain OCC and the frequency-domain OCC are queried based on the configuration information table, to map the sequence of the demodulation reference signal to the corresponding time-frequency resource, the first group of symbols in the time-domain resources corresponding to the first CDM group can use the first group of OCCs, and the second group of symbols can use the second group of OCCs, to ensure orthogonality between the demodulation reference signal mapped to the first group of symbols and the demodulation reference signal mapped to the second group of symbols.

In a possible design, the configuration information table of the demodulation reference signal includes a first configuration information table and a second configuration information table, the first configuration information table corresponds to a first demodulation reference signal type, the second configuration information table corresponds to a second demodulation reference signal type, the first demodulation reference signal type corresponds to the first group of symbols, and the second demodulation reference signal type corresponds to the second group of symbols;

the first configuration information table includes a correspondence between a demodulation reference signal port index, a CDM group frequency-domain offset, and an OCC, the OCC includes a frequency-domain OCC and a time-domain OCC, and the frequency-domain OCC is the first group of OCCs; and

the second configuration information table includes a correspondence between a demodulation reference signal port index, a CDM group frequency-domain offset, and an OCC, where the OCC includes a frequency-domain OCC and a time-domain OCC, and the frequency-domain OCC is the second group of OCCs.

In the foregoing embodiment of this application, the configuration information table of the demodulation reference signal is extended, that is, the configuration information table of the demodulation reference signal is extended to the first configuration information table and the second configuration information table. The first configuration information table and the second configuration information table correspond to different demodulation reference signal types (the different demodulation reference signal types are associated with different symbol groups), the frequency-domain OCC in the first configuration information table is the first group of OCCs, and the frequency-domain OCC in the second configuration information table is the second group of OCCs. In this way, when the time-domain OCC and the frequency-domain OCC are queried based on the first configuration information table and the second configuration information table, to map the sequence of the demodulation reference signal to the corresponding time-frequency resource, different configuration information tables can be queried based on the different demodulation reference signal types. Specifically, the first configuration information table is queried based on the first demodulation reference signal type to obtain the first group of OCCs used for the first group of symbols, and the second configuration information table is queried based on the first demodulation reference signal type to obtain the second group of OCCs used for the second group of symbols, to ensure orthogonality between the demodulation reference signal mapped to the first group of symbols and the demodulation reference signal mapped to the second group of symbols.

In a possible design, the method further includes: The sending device obtains, based on the configuration information table and a demodulation reference signal type, a first group of OCCs corresponding to the first group of symbols and a second group of OCCs corresponding to the second group of symbols.

In a possible design, that the sending device maps the sequence of the demodulation reference signal to a time-frequency resource of the demodulation reference signal includes:

the sending device obtains, based on the configuration information table, a CDM group frequency-domain offset, a frequency-domain OCC, and a time-domain OCC that correspond to a first RE *(k, l)*, where the first RE *(k, l)* has a subcarrier index of *k* and a symbol index of *l* in the time-frequency resource; and

the sending device obtains, based on the CDM group frequency-domain offset, the frequency-domain OCC, and the time-domain OCC, data $\widetilde{\alpha}_{k,l}^{(\widetilde{p}_j,\mu)}$ of the sequence of the demodulation reference signal mapped to the first RE *(k, l)*, where the data $\widetilde{\alpha}_{k,l}^{(\widetilde{p}_j,\mu)}$ mapped to the first RE *(k, l)* satisfies:

$$\widetilde{\alpha}_{k,l}^{(\widetilde{p}_j,\mu)} = W_f(k')W_t(l',s)r(2n + k')$$

$$k = 4n + 2k' + \Delta$$

k' = 0,1
s = 0,1
*l* = $\overline{l}$ + *l'*
n = 0,1,···
j = 0,1,-,v- 1

where $W_f(k')$ is a frequency-domain OCC, $W_t(l')$ is a time-domain OCC, and r(2n + k') is an initial sequence of the demodulation reference signal; and $\Delta$ is a CDM group frequency-domain offset, $\overline{l}$ is an index of a start symbol of the demodulation reference signal, *l'* is a symbol offset of the demodulation reference signal, and v is a quantity of transmission layers, where when s=0, the time-domain OCC is a first group of OCCs; and when s=1, the time-domain OCC is a second group of OCCs.

In the foregoing embodiment of this application, the mapping formula of the demodulation reference signal may be used with the extended configuration information table of the demodulation reference signal in the foregoing embodiment to map the demodulation reference signal to the time-frequency resource, and orthogonality between demodulation reference signal ports in the first CDM group can be ensured.

In a possible design, that the sending device maps the sequence of the demodulation reference signal to a time-frequency resource of the demodulation reference signal includes:

the sending device obtains, based on the configuration information table, a CDM group frequency-domain offset, a frequency-domain OCC, and a time-domain OCC that correspond to a first RE (*k, l*), where the first RE (*k, l*) has a subcarrier index of *k* and a symbol index of *l* in the time-frequency resource; and
the sending device obtains, based on the CDM group frequency-domain offset, the frequency-domain OCC, and the time-domain OCC, data $\widetilde{\alpha}_{k,l}^{(\widetilde{p}_j,\mu)}$ of the sequence of the demodulation reference signal mapped to the first RE (*k, l*), where the data $\widetilde{\alpha}_{k,l}^{(\widetilde{p}_j,\mu)}$ mapped to the first RE (*k, l*) satisfies:

$$\widetilde{\alpha}_{k,l}^{(\widetilde{p}_j,\mu)} = W_f(k', s)W_t(l')r(2n + k')$$

$$k = 4n + 2k' + \Delta$$

k' = 0,1
s = 0,1
*l* = $\overline{l}$ + *l'*
n = 0,1,···
j = 0,1,···,v - 1
where $W_f(k')$ is a frequency-domain OCC, $W_t(l')$ is a time-domain OCC, and r(2n + k') is an initial sequence of the demodulation reference signal; and $\Delta$ is a CDM group frequency-domain offset, $\overline{l}$ is an index of a start symbol of the demodulation reference signal, *l'* is a symbol offset of the demodulation reference signal, and v is a quantity of transmission layers, where when s=0, the frequency-domain OCC is a first group of OCCs; and when s=1, the frequency-domain OCC is a second group of OCCs.

In the foregoing embodiment of this application, the mapping formula of the demodulation reference signal may be used with the extended configuration information table of the demodulation reference signal in the foregoing embodiment to map the demodulation reference signal to the time-frequency resource, and orthogonality between demodulation reference signal ports in the first CDM group can be ensured.

In a possible design, the method further includes: The sending device sends port index indication information of the demodulation reference signal to a terminal.

In a possible design, a maximum quantity of demodulation reference signal ports included in the first CDM group is at least 4N, N is a quantity of symbols included in the first group of symbols or the second group of symbols, and the first group of symbols and the second group of symbols include a same quantity of symbols.

In the foregoing embodiment of this application, the quantity of demodulation reference signal ports that can be included in the first CDM group may be increased to at least 4N. For example, when the foregoing embodiment of this application is applied to a DMRS whose configuration type is a type 1 DMRS, one CDM group can support orthogonality between eight DMRS ports, and two CDM groups can support orthogonality between 16 DMRS ports in total without increasing DMRS overheads, thereby implementing 16-layer orthogonal multi-user pairing and effectively improving a system capacity.

A third aspect provides a signal transmission method, including:

A sending device generates a sequence of a demodulation reference signal, where the demodulation reference signal is used to estimate a channel state of a first channel; and
the sending device maps the sequence of the demodulation reference signal to a time-frequency resource of the demodulation reference signal for sending, where
the time-frequency resource include a frequency-domain resource corresponding to a first port of a demodulation reference signal in a first CDM group and a frequency-domain resource corresponding to a second port of the demodulation reference signal, the frequency-domain resource corresponding to the first port is the same as the frequency-domain resource corresponding to the second port, the frequency-domain resource corresponding to the first port and the frequency-domain resource corresponding to the second port are non-contiguous and equally spaced, a first PRB in the frequency-domain resource corresponding to the first port and the frequency-domain resource corresponding to the second port includes at least two subcarrier groups, each of the at least two subcarrier groups includes two subcarriers, and the at least two subcarrier groups include a first subcarrier group and a second subcarrier group, or include a first subcarrier group, a second subcarrier group, and a third subcarrier group; and orthogonal cover codes OCCs used on REs corresponding to all subcarriers in the at least two subcarrier groups for the frequency-domain resource corresponding to the first port form a first OCC code sequence, and OCC codes used on the REs corresponding to all the subcarriers in the at least two subcarrier groups for the frequency-domain resource corresponding to the second port form a second OCC code sequence; and for the frequency-domain resource corresponding to the first port or the second port, OCC codes used on the REs corresponding to two subcarriers in the first subcarrier group form a third OCC code sequence, and OCC codes used on REs corresponding to two subcarriers in the second subcarrier group form a fourth OCC code sequence, where the second OCC code sequence is obtained by performing cyclic shift based on the first OCC code sequence, and the third OCC code sequence is different from the fourth OCC code sequence.

In the foregoing embodiment of this application, the OCCs used on the REs corresponding to the subcarrier group for the frequency-domain resource corresponding to the first port of the demodulation reference signal in the first CDM group form the first OCC code sequence, the OCCs used on the REs corresponding to the subcarrier group for the frequency-domain resource corresponding to the second port of the demodulation reference signal in the first CDM group form the second OCC code sequence, and the second OCC code sequence is obtained by performing cyclic shift on the first OCC code sequence, so that cyclic shift may be performed on OCCs of some demodulation reference signal ports to obtain orthogonal OCCs, and the OCC code sequence obtained by performing cyclic shift is used for other demodulation reference signal ports. Because different demodulation reference signal ports in the first CDM group are orthogonal to each other by using the OCCs, the OCCs are extended in the foregoing embodiment of this application, so that a quantity of the demodulation reference signal ports that are orthogonal to each other in the first CDM group can be increased without additionally increasing time-frequency resource overheads of the demodulation reference signal, thereby increasing a system transmission capacity.

In a possible design, a configuration information table of the demodulation reference signal includes a correspondence between a demodulation reference signal port index, a CDM group frequency-domain offset, an OCC, and a cyclic shift factor, where the OCC includes a frequency-domain OCC and a time-domain OCC.

In the foregoing embodiment of this application, the configuration information table of the demodulation reference signal is extended, that is, a cyclic shift factor is introduced into the configuration information table. In this way, when the time-domain OCC and the frequency-domain OCC are queried based on the configuration information table, to map the sequence of the demodulation reference signal to the corresponding time-frequency resource, cyclic shift can be performed on the OCC corresponding to the demodulation reference signal port index based on the cyclic shift factor corresponding to the demodulation reference signal port index, to obtain orthogonal OCCs, so that orthogonality between demodulation reference signal ports in the first CDM group can be ensured.

In a possible design, the method further includes: obtaining, by the sending device based on the configuration information table, a frequency-domain OCC, a time-domain OCC, and a cyclic shift factor that correspond to a demodulation reference signal port index, and performing cyclic shift on the obtained frequency-domain OCC and the obtained time-domain OCC based on the obtained cyclic shift factor.

In a possible design, that the sending device maps the sequence of the demodulation reference signal to a time-frequency resource of the demodulation reference signal includes:

the sending device obtains, based on the configuration information table, a CDM group frequency-domain offset, a frequency-domain OCC, a time-domain OCC, and a cyclic shift factor that correspond to a first RE $(k, l)$, where the first RE $(k, l)$ has a subcarrier index of $k$ and a symbol index of $l$ in the time-frequency resource; and

the sending device obtains, based on the CDM group frequency-domain offset, the frequency-domain OCC, the time-domain OCC, and the cyclic shift factor, data $\tilde{\alpha}_{k,l}^{(\tilde{p}_j,\mu)}$ of the sequence of the demodulation reference signal mapped to the first RE $(k, l)$, where the data $\tilde{\alpha}_{k,l}^{(\tilde{p}_j,\mu)}$ mapped to the first RE $(k, l)$ satisfies:

$$\tilde{\alpha}_{k,l}^{(\tilde{p}_j,\mu)} = e^{\frac{j2\phi\pi m}{6M}} W_f(k') W_t(l') r(2n + k')$$

$$k = 4n + 2k' + \Delta$$

k' = 0,1

$$m = \mathrm{mod}(\lfloor k/2 \rfloor, 6M)$$

$l = \bar{l} + l'$
n = 0, 1, ...
j = 0,1,···,v- 1

or the data $\widetilde{\alpha}_{k,l}^{(\widetilde{p}_j,\mu)}$ mapped to the first RE (*k, l*) satisfies:

$$\widetilde{\alpha}_{k,l}^{(\widetilde{p}_j,\mu)} = e^{\frac{j2\phi\pi m}{4}} W_f(k') W_t(l') r(2n + k')$$

$$k = 4n + 2k' + \Delta$$

k' = 0,1

$$m = \mathrm{mod}(\lfloor k/2 \rfloor, 4)$$

$l = \bar{l} + l'$
n = 0,1,···
j = 0,1,···,v- 1

where $W_f(k')$ is a frequency-domain OCC, $W_t(l')$ is a time-domain OCC, and r(2n + k') is an initial sequence of the demodulation reference signal; and $\Delta$ is a CDM group frequency-domain offset, *l* is an index of a start symbol of the demodulation reference signal, *l'* is a symbol offset of the demodulation reference signal, v is a quantity of transmission layers, $\phi$ is a cyclic shift factor, and M is a positive integer greater than or equal to 1.

In the foregoing embodiment of this application, the mapping formula of the demodulation reference signal may be used with the extended configuration information table of the demodulation reference signal in the foregoing embodiment to map the demodulation reference signal to the time-frequency resource, and orthogonality between demodulation reference signal ports in the first CDM group can be ensured.

In a possible design, the method further includes: The sending device sends indication information of the demodulation reference signal port index in the first CDM group to a receiving device.

In a possible design, a maximum quantity of demodulation reference signal ports included in the first CDM group is at least 4N, and N is a quantity of symbols occupied by the demodulation reference signal.

In the foregoing embodiment of this application, the quantity of demodulation reference signal ports that can be included in the first CDM group may be increased to at least 4N. For example, when the foregoing embodiment of this application is applied to a DMRS whose configuration type is a type 1 DMRS, one CDM group can support orthogonality between eight DMRS ports, and two CDM groups can support orthogonality between 16 DMRS ports in total without increasing DMRS overheads, thereby implementing 16-layer orthogonal multi-user pairing and effectively improving a system capacity. In another example, when the foregoing embodiment of this application is applied to a DMRS whose configuration type is a type 1 DMRS, one CDM group can support orthogonality between 12 DMRS ports, and two CDM groups can support orthogonality between 24 DMRS ports in total without increasing DMRS overheads, thereby implementing 24-layer orthogonal multi-user pairing and effectively improving a system capacity.

A fourth aspect provides a signal transmission method, including:

A receiving device receives, on a time-frequency resource of a demodulation reference signal, the demodulation reference signal sent by a sending device, where the demodulation reference signal is used to estimate a channel state of a first channel; the time-frequency resource include frequency-domain resources corresponding to a first CDM group, and the frequency-domain resources corresponding to the first CDM group are non-contiguous and equally spaced; a first PRB in the frequency-domain resources corresponding to the first CDM group includes a first group of subcarriers and a second group of subcarriers; and the first group of subcarriers and the second group of subcarriers each include two subcarriers, the first group of subcarriers corresponds to a first group of OCCs, the second group of subcarriers corresponds to a second group of OCCs, and the first group of OCCs is orthogonal to the second group of OCCs; and

the receiving device obtains a sequence of the demodulation reference signal.

In a possible design, the first PRB further includes a third group of subcarriers, the third group of subcarriers includes two subcarriers, and the third group of subcarriers corresponds to the first group of OCCs.

In a possible design, a configuration information table of the demodulation reference signal includes a correspondence between a demodulation reference signal port index, a CDM group frequency-domain offset, and an OCC, the OCC includes a frequency-domain OCC and a time-domain OCC, and the frequency-domain OCC includes a first group of OCCs and a second group of OCCs.

In a possible design, a configuration information table of the demodulation reference signal includes a first configuration information table and a second configuration information table;

the first configuration information table includes a correspondence between a demodulation reference signal port index, a CDM group frequency-domain offset, and an OCC, and the OCC includes a frequency-domain OCC and a time-domain OCC; and

the second configuration information table includes a correspondence between a demodulation reference signal port index, a CDM group frequency-domain offset, and an OCC, the OCC includes a frequency-domain OCC and a time-domain OCC, the frequency-domain OCC includes a first group of OCCs and a second group of OCCs, and the demodulation reference signal port indexes included in the second configuration information table and the first configuration information table are different.

In a possible design, the method further includes: The receiving device, based on the configuration information table, a first group of OCCs corresponding to the first group of subcarriers and a second group of OCCs corresponding to the second group of subcarriers.

In a possible design, that the receiving device obtains a sequence of the demodulation reference signal includes:

the receiving device obtains, based on the configuration information table, a CDM group frequency-domain offset, a frequency-domain OCC, and a time-domain OCC that correspond to a first RE (*k, l*), where the first RE (*k, l*) has a subcarrier index of *k* and a symbol index of *l* in the time-frequency resource; and

the receiving device obtains, based on the CDM group frequency-domain offset, the frequency-domain OCC, and the time-domain OCC, data $\widetilde{\alpha}_{k,l}^{(\widetilde{p}_j,\mu)}$ of the sequence of the demodulation reference signal mapped to the first RE

(*k, l*), where the data $\widetilde{\alpha}_{k,l}^{(\widetilde{p}_j,\mu)}$ mapped to the first RE (*k, l*) satisfies:

$$\widetilde{\alpha}_{k,l}^{(\widetilde{p}_j,\mu)} = W_f(k' + 2t)W_t(l')r(2n + k')$$

$$k = 4n + 2k' + \Delta$$

k' = 0,1
t = mod(n, 2)
*l* = $\bar{l}$ + *l'*
n = 0,1,···
j = 0,1,···,v- 1

where $W_f(k' + 2t)$ is a frequency-domain OCC, $W_t(l')$ is a time-domain OCC, and $r(2n + k')$ is an initial sequence of the demodulation reference signal; and Δ is a CDM group frequency-domain offset, *l* is an index of a start symbol of the demodulation reference signal, *l'* is a symbol offset of the demodulation reference signal, and v is a quantity of transmission layers, where when t=0, the frequency-domain OCC is a first group of OCCs; and when t=1, the frequency-domain OCC is a second group of OCCs.

In a possible design, the method further includes: The receiving device receives indication information that is of the demodulation reference signal port index in the first CDM group and that is sent by the sending device.

In a possible design, a maximum quantity of demodulation reference signal ports included in the first CDM group is at least 4N, and N is a quantity of symbols occupied by the demodulation reference signal.

A fifth aspect provides a signal transmission method, including:

A receiving device receives, on a time-frequency resource of a demodulation reference signal, the demodulation reference signal sent by a sending device, where the demodulation reference signal is used to estimate a channel state of a first channel; the time-frequency resource includes frequency-domain resources corresponding to a first CDM group, and the frequency-domain resources corresponding to the first CDM group are non-contiguous and equally spaced; time-domain resources corresponding to the first CDM group include a first group of symbols and a second group of symbols, the first group of symbols corresponds to a first group of OCCs, the second group of symbols corresponds to a second group of OCCs, and the first group of OCCs is orthogonal to the second group of OCCs; and

the receiving device obtains a sequence of the demodulation reference signal.

In a possible design, a configuration information table of the demodulation reference signal includes a correspondence between a demodulation reference signal type, a demodulation reference signal port index, a CDM group frequency-domain offset, and an OCC, the OCC includes a frequency-domain OCC and a time-domain OCC, the time-domain OCC includes a first group of OCCs and a second group of OCCs, the first group of OCCs corresponds to a first demodulation reference signal type, the second group of OCCs corresponds to a second demodulation reference signal type, the first demodulation reference signal type corresponds to the first group of symbols, and the second demodulation reference signal type corresponds to the second group of symbols.

In a possible design, the configuration information table of the demodulation reference signal includes a first configuration information table and a second configuration information table, the first configuration information table corresponds to a first demodulation reference signal type, the second configuration information table corresponds to a second demodulation reference signal type, the first demodulation reference signal type corresponds to the first group of symbols, and the second demodulation reference signal type corresponds to the second group of symbols;

the first configuration information table includes a correspondence between a demodulation reference signal port index, a CDM group frequency-domain offset, and an OCC, the OCC includes a frequency-domain OCC and a time-domain OCC, and the time-domain OCC is the first group of OCCs; and

the second configuration information table includes a correspondence between a demodulation reference signal port index, a CDM group frequency-domain offset, and an OCC, where the OCC includes a frequency-domain OCC and a time-domain OCC, and the time-domain OCC is the second group of OCCs.

In a possible design, a configuration information table of the demodulation reference signal includes a correspondence between a demodulation reference signal type, a demodulation reference signal port index, a CDM group frequency-domain offset, and an OCC, the OCC includes a frequency-domain OCC and a time-domain OCC, the frequency-domain OCC includes a first group of OCCs and a second group of OCCs, the first group of OCCs corresponds to a first demodulation reference signal type, the second group of OCCs corresponds to a second demodulation reference signal type, the first demodulation reference signal type corresponds to the first group of symbols, and the second demodulation reference signal type corresponds to the second group of symbols.

In a possible design, the configuration information table of the demodulation reference signal includes a first configuration information table and a second configuration information table, the first configuration information table corresponds to a first demodulation reference signal type, the second configuration information table corresponds to a second demodulation reference signal type, the first demodulation reference signal type corresponds to the first group of symbols, and the second demodulation reference signal type corresponds to the second group of symbols;

the first configuration information table includes a correspondence between a demodulation reference signal port index, a CDM group frequency-domain offset, and an OCC, the OCC includes a frequency-domain OCC and a time-domain OCC, and the frequency-domain OCC is the first group of OCCs; and

the second configuration information table includes a correspondence between a demodulation reference signal port index, a CDM group frequency-domain offset, and an OCC, where the OCC includes a frequency-domain OCC and a time-domain OCC, and the frequency-domain OCC is the second group of OCCs.

In a possible design, the method further includes: The receiving device obtains, based on the configuration information table and a demodulation reference signal type, a first group of OCCs corresponding to the first group of symbols and a second group of OCCs corresponding to the second group of symbols.

In a possible design, that the receiving device obtains a sequence of the demodulation reference signal includes:

the receiving device obtains, based on the configuration information table, a CDM group frequency-domain offset, a frequency-domain OCC, and a time-domain OCC that correspond to a first RE $(k, l)$, where the first RE $(k, l)$ has a subcarrier index of $k$ and a symbol index of $l$ in the time-frequency resource; and

the receiving device obtains, based on the CDM group frequency-domain offset, the frequency-domain OCC, and the time-domain OCC, data $\widetilde{\alpha}_{k,l}^{(\widetilde{p}_j,\mu)}$ of the sequence of the demodulation reference signal mapped to the first RE $(k, l)$, where the data $\widetilde{\alpha}_{k,l}^{(\widetilde{p}_j,\mu)}$ mapped to the first RE $(k, l)$ satisfies:

$$\widetilde{\alpha}_{k,l}^{(\widetilde{p}_j,\mu)} = W_f(k')W_t(l',s)r(2n + k')$$

$$k = 4n + 2k' + \Delta$$

k' = 0,1
s = 0,1
$l = \overline{l} + l'$
n = 0,1,···
j = 0,1,···,v- 1

where $W_f(k')$ is a frequency-domain OCC, $W_t(l')$ is a time-domain OCC, and $r(2n + k')$ is an initial sequence of the demodulation reference signal; and $\Delta$ is a CDM group frequency-domain offset, $\overline{l}$ is an index of a start symbol of the demodulation reference signal, $l'$ is a symbol offset of the demodulation reference signal, and v is a quantity of transmission layers, where when s=0, the time-domain OCC is a first group of OCCs; and when s=1, the time-domain OCC is a second group of OCCs.

In a possible design, the receiving device obtains a sequence of the demodulation reference signal includes:

the receiving device obtains, based on the configuration information table, a CDM group frequency-domain offset, a frequency-domain OCC, and a time-domain OCC that correspond to a first RE $(k, l)$, where the first RE $(k, l)$ has a subcarrier index of $k$ and a symbol index of $l$ in the time-frequency resource; and
the receiving device obtains, based on the CDM group frequency-domain offset, the frequency-domain OCC, and the time-domain OCC, data $\widetilde{\alpha}_{k,l}^{(\widetilde{p}_j,\mu)}$ of the sequence of the demodulation reference signal mapped to the first RE $(k, l)$, where the data $\widetilde{\alpha}_{k,l}^{(\widetilde{p}_j,\mu)}$ mapped to the first RE $(k, l)$ satisfies:

$$\widetilde{\alpha}_{k,l}^{(\widetilde{p}_j,\mu)} = W_f(k',s)W_t(l')r(2n + k')$$

$$k = 4n + 2k' + \Delta$$

k' = 0,1
s = 0,1
$l = \overline{l} + l'$
n = 0,1,···
j = 0,1,···,v - 1

where $W_f(k')$ is a frequency-domain OCC, $W_t(l')$ is a time-domain OCC, and $r(2n + k')$ is an initial sequence of the demodulation reference signal; and $\Delta$ is a CDM group frequency-domain offset, $\overline{l}$ is an index of a start symbol of the demodulation reference signal, $l'$ is a symbol offset of the demodulation reference signal, and v is a quantity of transmission layers, where when s=0, the frequency-domain OCC is a first group of OCCs; and when s=1, the frequency-domain OCC is a second group of OCCs.

In a possible design, the method further includes: The receiving device obtains port index indication information that is of the demodulation reference signal and that is sent by the sending device.
In a possible design, a maximum quantity of demodulation reference signal ports included in the first CDM group is at least 4N, N is a quantity of symbols included in the first group of symbols or the second group of symbols, and the first group of symbols and the second group of symbols include a same quantity of symbols.

A sixth aspect provides a signal transmission method, including:

A receiving device receives, on a time-frequency resource of a demodulation reference signal, the demodulation reference signal sent by a sending device, where the demodulation reference signal is used to estimate a channel state of a first channel; and

the receiving device obtains a sequence of the demodulation reference signal, where

the time-frequency resource includes a frequency-domain resource corresponding to a first port of a demodulation reference signal in a first CDM group and a frequency-domain resource corresponding to a second port of the demodulation reference signal, the frequency-domain resource corresponding to the first port is the same as the frequency-domain resource corresponding to the second port, the frequency-domain resource corresponding to the first port and the frequency-domain resource corresponding to the second port are non-contiguous and equally spaced, a first PRB in the frequency-domain resource corresponding to the first port and the frequency-domain resource corresponding to the second port includes at least two subcarrier groups, each of the at least two subcarrier groups includes two subcarriers, and the at least two subcarrier groups include a first subcarrier group and a second subcarrier group, or include a first subcarrier group, a second subcarrier group, and a third subcarrier group; and

orthogonal cover codes OCCs used on REs corresponding to all subcarriers in the at least two subcarrier groups for the frequency-domain resource corresponding to the first port form a first OCC code sequence, and OCC codes used on the REs corresponding to all the subcarriers in the at least two subcarrier groups for the frequency-domain resource corresponding to the second port form a second OCC code sequence; and for the frequency-domain resource corresponding to the first port or the second port, OCC codes used on the REs corresponding to two subcarriers in the first subcarrier group form a third OCC code sequence, and OCC codes used on REs corresponding to two subcarriers in the second subcarrier group form a fourth OCC code sequence, where the second OCC code sequence is obtained by performing cyclic shift based on the first OCC code sequence, and the third OCC code sequence is different from the fourth OCC code sequence.

In a possible design, a configuration information table of the demodulation reference signal includes a correspondence between a demodulation reference signal port index, a CDM group frequency-domain offset, an OCC, and a cyclic shift factor, where the OCC includes a frequency-domain OCC and a time-domain OCC.

In a possible design, the method further includes: The receiving device obtains, based on the configuration information table, a frequency-domain OCC, a time-domain OCC, and a cyclic shift factor that correspond to a demodulation reference signal port index, and performing cyclic shift on the obtained frequency-domain OCC and the obtained time-domain OCC based on the obtained cyclic shift factor.

In a possible design, that the receiving device obtains a sequence of the demodulation reference signal includes:

the receiving device obtains, based on the configuration information table, a CDM group frequency-domain offset, a frequency-domain OCC, a time-domain OCC, and a cyclic shift factor that correspond to a first RE (*k, l*), where the first RE (*k, l*) has a subcarrier index of *k* and a symbol index of *l* in the time-frequency resource; and

the receiving device obtains, based on the CDM group frequency-domain offset, the frequency-domain OCC, the time-domain OCC, and the cyclic shift factor, data $\widetilde{\alpha}_{k,l}^{(\widetilde{p}_j,\mu)}$ of the sequence of the demodulation reference signal mapped to the first RE (*k, l*), where the data $\widetilde{\alpha}_{k,l}^{(\widetilde{p}_j,\mu)}$ mapped to the first RE (*k, l*) satisfies:

$$\widetilde{\alpha}_{k,l}^{(\widetilde{p}_j,\mu)} = e^{\frac{j2\phi\pi m}{6M}} W_f(k') W_t(l') r(2n + k')$$

$$k = 4n + 2k' + \Delta$$

k' = 0,1

$$m = \mathrm{mod}(\lfloor k/2 \rfloor, 6M)$$

*l* = $\overline{l}$ + *l'*

n = 0,1,···

j = 0,1,···,v - 1

or the data $\widetilde{\alpha}_{k,l}^{(\widetilde{p}_j,\mu)}$ mapped to the first RE (*k, l*) satisfies:

$$\widetilde{\alpha}_{k,l}^{(\widetilde{p}_j,\mu)} = e^{\frac{j2\phi\pi m}{4}}W_f(k')W_t(l')r(2n + k')$$

$$k = 4n + 2k' + \Delta$$

k' = 0,1

$$m = \mathrm{mod}(\lfloor k/2 \rfloor, 4)$$

$l = \overline{l} + l'$

n = 0,1,···

j = 0, 1, ... v - 1

where $W_f(k')$ is a frequency-domain OCC, $W_t(l')$ is a time-domain OCC, and r(2n + k') is an initial sequence of the demodulation reference signal; and $\Delta$ is a CDM group frequency-domain offset, $\overline{l}$ is an index of a start symbol of the demodulation reference signal, $l'$ is a symbol offset of the demodulation reference signal, v is a quantity of transmission layers, $\phi$ is a cyclic shift factor, and M is a positive integer greater than or equal to 1.

In a possible design, the method further includes: The receiving device obtains indication information that is of the demodulation reference signal port index in the first CDM group and that is sent by the sending device.

In a possible design, a maximum quantity of demodulation reference signal ports included in the first CDM group is at least 4N, and N is a quantity of symbols occupied by the demodulation reference signal.

A seventh aspect provides a communication apparatus, including at least one processor. The at least one processor is connected to a memory, and the at least one processor is configured to read and execute a program stored in the memory, to enable the apparatus to perform the following operations:

generating a sequence of a demodulation reference signal, where the demodulation reference signal is used to estimate a channel state of a first channel; and

mapping the sequence of the demodulation reference signal to a time-frequency resource of the demodulation reference signal for sending, where the time-frequency resource includes frequency-domain resources corresponding to a first code division multiplexing (CDM) group, and the frequency-domain resources corresponding to the first CDM group are non-contiguous and equally spaced; a first physical resource block (PRB) in the frequency-domain resources corresponding to the first CDM group includes a first group of subcarriers and a second group of subcarriers; and the first group of subcarriers and the second group of subcarriers each include two subcarriers, the first group of subcarriers corresponds to a first group of orthogonal cover codes (OCCs), the second group of subcarriers corresponds to a second group of OCCs, and the first group of OCCs is orthogonal to the second group of OCCs.

In a possible design, the first PRB further includes a third group of subcarriers, the third group of subcarriers includes two subcarriers, and the third group of subcarriers corresponds to the first group of OCCs.

In a possible design, a configuration information table of the demodulation reference signal includes a correspondence between a demodulation reference signal port index, a CDM group frequency-domain offset, and an OCC, the OCC includes a frequency-domain OCC and a time-domain OCC, and the frequency-domain OCC includes a first group of OCCs and a second group of OCCs.

In a possible design, a configuration information table of the demodulation reference signal includes a first configuration information table and a second configuration information table;

the first configuration information table includes a correspondence between a demodulation reference signal port index, a CDM group frequency-domain offset, and an OCC, and the OCC includes a frequency-domain OCC and a time-domain OCC; and

the second configuration information table includes a correspondence between a demodulation reference signal port index, a CDM group frequency-domain offset, and an OCC, the OCC includes a frequency-domain OCC and a time-domain OCC, the frequency-domain OCC includes a first group of OCCs and a second group of OCCs, and the demodulation reference signal port indexes included in the second configuration information table and the first configuration information table are different.

In a possible design, the method further includes: obtaining, based on the configuration information table, a first group of OCCs corresponding to the first group of subcarriers and a second group of OCCs corresponding to the second group of subcarriers.

In a possible design, the mapping the sequence of the demodulation reference signal to a time-frequency resource of the demodulation reference signal includes:

obtaining, based on the configuration information table, a CDM group frequency-domain offset, a frequency-domain OCC, and a time-domain OCC that correspond to a first RE ($k$, $l$), where the first RE ($k$, $l$) has a subcarrier index of $k$ and a symbol index of $l$ in the time-frequency resource; and

obtaining, based on the CDM group frequency-domain offset, the frequency-domain OCC, and the time-domain OCC, data $\widetilde{\alpha}_{k,l}^{(\widetilde{p}_j,\mu)}$ of the sequence of the demodulation reference signal mapped to the first RE ($k$, $l$), where the data $\widetilde{\alpha}_{k,l}^{(\widetilde{p}_j,\mu)}$ mapped to the first RE ($k$, $l$) satisfies:

$$\widetilde{\alpha}_{k,l}^{(\widetilde{p}_j,\mu)} = W_f(k' + 2t)W_t(l')r(2n + k')$$

$$k = 4n + 2k' + \Delta$$

k' = 0,1
t = mod(n,2)
$l = \overline{l} + l'$
n = 0,1,···
j = 0,1,···,v - 1

where $W_f(k' + 2t)$ is a frequency-domain OCC, $W_t(l')$ is a time-domain OCC, and $r(2n + k')$ is an initial sequence of the demodulation reference signal; and $\Delta$ is a CDM group frequency-domain offset, $\overline{l}$ is an index of a start symbol of the demodulation reference signal, $l'$ is a symbol offset of the demodulation reference signal, and v is a quantity of transmission layers, where when t=0, the frequency-domain OCC is a first group of OCCs; and when t=1, the frequency-domain OCC is a second group of OCCs.

In a possible design, the method further includes: sending indication information of the demodulation reference signal port index in the first CDM group to a receiving device.

In a possible design, a maximum quantity of demodulation reference signal ports included in the first CDM group is at least 4N, and N is a quantity of symbols occupied by the demodulation reference signal.

An eighth aspect provides a communication apparatus, including at least one processor. The at least one processor is connected to a memory, and the at least one processor is configured to read and execute a program stored in the memory, to enable the apparatus to perform the following operations:

generating a sequence of a demodulation reference signal, where the demodulation reference signal is used to estimate a channel state of a first channel; and

mapping the sequence of the demodulation reference signal to a time-frequency resource of the demodulation reference signal for sending, where the time-frequency resource includes frequency-domain resources corresponding to a first CDM group, and the frequency-domain resources corresponding to the first CDM group are non-contiguous and equally spaced; a time-domain resources corresponding to the first CDM group includes a first group of symbols and a second group of symbols, the first group of symbols corresponds to a first group of OCCs, the second group of symbols corresponds to a second group of OCCs, and the first group of OCCs is orthogonal to the second group of OCCs.

In a possible design, a configuration information table of the demodulation reference signal includes a correspondence between a demodulation reference signal type, a demodulation reference signal port index, a CDM group frequency-domain offset, and an OCC, the OCC includes a frequency-domain OCC and a time-domain OCC, the time-domain OCC includes a first group of OCCs and a second group of OCCs, the first group of OCCs corresponds to a first demodulation reference signal type, the second group of OCCs corresponds to a second demodulation reference signal type, the first demodulation reference signal type corresponds to the first group of symbols, and the second demodulation reference signal type corresponds to the second group of symbols.

In a possible design, the configuration information table of the demodulation reference signal includes a first configuration information table and a second configuration information table, the first configuration information table corresponds to a first demodulation reference signal type, the second configuration information table corresponds to a second demodulation reference signal type, the first demodulation reference signal type corresponds to the first group of symbols, and the second demodulation reference signal type corresponds to the second group of symbols;

the first configuration information table includes a correspondence between a demodulation reference signal port index, a CDM group frequency-domain offset, and an OCC, the OCC includes a frequency-domain OCC and a time-domain OCC, and the time-domain OCC is the first group of OCCs; and

the second configuration information table includes a correspondence between a demodulation reference signal port index, a CDM group frequency-domain offset, and an OCC, where the OCC includes a frequency-domain OCC and a time-domain OCC, and the time-domain OCC is the second group of OCCs.

In a possible design, a configuration information table of the demodulation reference signal includes a correspondence between a demodulation reference signal type, a demodulation reference signal port index, a CDM group frequency-domain offset, and an OCC, the OCC includes a frequency-domain OCC and a time-domain OCC, the frequency-domain OCC includes a first group of OCCs and a second group of OCCs, the first group of OCCs corresponds to a first demodulation reference signal type, the second group of OCCs corresponds to a second demodulation reference signal type, the first demodulation reference signal type corresponds to the first group of symbols, and the second demodulation reference signal type corresponds to the second group of symbols.

In a possible design, the configuration information table of the demodulation reference signal includes a first configuration information table and a second configuration information table, the first configuration information table corresponds to a first demodulation reference signal type, the second configuration information table corresponds to a second demodulation reference signal type, the first demodulation reference signal type corresponds to the first group of symbols, and the second demodulation reference signal type corresponds to the second group of symbols;

the first configuration information table includes a correspondence between a demodulation reference signal port index, a CDM group frequency-domain offset, and an OCC, the OCC includes a frequency-domain OCC and a time-domain OCC, and the frequency-domain OCC is the first group of OCCs; and

the second configuration information table includes a correspondence between a demodulation reference signal port index, a CDM group frequency-domain offset, and an OCC, where the OCC includes a frequency-domain OCC and a time-domain OCC, and the frequency-domain OCC is the second group of OCCs.

In a possible design, the method further includes: obtaining, based on the configuration information table and a demodulation reference signal type, a first group of OCCs corresponding to the first group of symbols and a second group of OCCs corresponding to the second group of symbols.

In a possible design, the mapping the sequence of the demodulation reference signal to a time-frequency resource of the demodulation reference signal includes:

obtaining, based on the configuration information table, a CDM group frequency-domain offset, a frequency-domain OCC, and a time-domain OCC that correspond to a first RE ($k, l$), where the first RE ($k, l$) has a subcarrier index of $k$ and a symbol index of $l$ in the time-frequency resource; and

obtaining, based on the CDM group frequency-domain offset, the frequency-domain OCC, and the time-domain OCC, data $\widetilde{\alpha}_{k,l}^{(\widetilde{p}_j,\mu)}$ of the sequence of the demodulation reference signal mapped to the first RE ($k, l$), where the data $\widetilde{\alpha}_{k,l}^{(\widetilde{p}_j,\mu)}$ mapped to the first RE ($k, l$) satisfies:

$$\widetilde{\alpha}_{k,l}^{(\widetilde{p}_j,\mu)} = W_f(k')W_t(l',s)r(2n+k')$$

$$k = 4n + 2k' + \Delta$$

$k' = 0,1$
$s = 0,1$
$l = \overline{l} + l'$

$n = 0,1,\cdots$

$j = 0,1,\cdots,v - 1$

where $W_f(k')$ is a frequency-domain OCC, $W_t(l')$ is a time-domain OCC, and $r(2n + k')$ is an initial sequence of the demodulation reference signal; and $\Delta$ is a CDM group frequency-domain offset, $\bar{l}$ is an index of a start symbol of the demodulation reference signal, $l'$ is a symbol offset of the demodulation reference signal, and $v$ is a quantity of transmission layers, where when $s=0$, the time-domain OCC is a first group of OCCs; and when $s=1$, the time-domain OCC is a second group of OCCs.

In a possible design, the mapping the sequence of the demodulation reference signal to a time-frequency resource of the demodulation reference signal includes:

obtaining, based on the configuration information table, a CDM group frequency-domain offset, a frequency-domain OCC, and a time-domain OCC that correspond to a first RE ($k$, $l$), where the first RE ($k$, $l$) has a subcarrier index of $k$ and a symbol index of $l$ in the time-frequency resource; and

obtaining, based on the CDM group frequency-domain offset, the frequency-domain OCC, and the time-domain OCC, data $\widetilde{\alpha}_{k,l}^{(\widetilde{p}_j,\mu)}$ of the sequence of the demodulation reference signal mapped to the first RE ($k$, $l$), where the data $\widetilde{\alpha}_{k,l}^{(\widetilde{p}_j,\mu)}$ mapped to the first RE ($k$, $l$) satisfies:

$$\widetilde{\alpha}_{k,l}^{(\widetilde{p}_j,\mu)} = W_f(k',s)W_t(l')r(2n + k')$$

$$k = 4n + 2k' + \Delta$$

$k' = 0,1$

$s = 0,1$

$l = \bar{l} + l'$

$n = 0,1,\cdots$

$j = 0,1,\cdots,v - 1$

where $W_f(k')$ is a frequency-domain OCC, $W_t(l')$ is a time-domain OCC, and $r(2n + k')$ is an initial sequence of the demodulation reference signal; and $\Delta$ is a CDM group frequency-domain offset, $\bar{l}$ is an index of a start symbol of the demodulation reference signal, $l'$ is a symbol offset of the demodulation reference signal, and $v$ is a quantity of transmission layers, where when $s=0$, the frequency-domain OCC is a first group of OCCs; and when $s=1$, the frequency-domain OCC is a second group of OCCs.

In a possible design, the method further includes: sending port index indication information of the demodulation reference signal to a terminal.

In a possible design, a maximum quantity of demodulation reference signal ports included in the first CDM group is at least 4N, N is a quantity of symbols included in the first group of symbols or the second group of symbols, and the first group of symbols and the second group of symbols include a same quantity of symbols.

A ninth aspect provides a communication apparatus, including at least one processor. The at least one processor is connected to a memory, and the at least one processor is configured to read and execute a program stored in the memory, to enable the apparatus to perform the following operations:

generating a sequence of a demodulation reference signal, where the demodulation reference signal is used to estimate a channel state of a first channel; and

mapping the sequence of the demodulation reference signal to a time-frequency resource of the demodulation reference signal for sending, where the time-frequency resource includes a frequency-domain resource corresponding to a first port and a second port in a first CDM group, and the frequency-domain resource corresponding to the first port and the second port is non-contiguous and equally spaced, where

the time-frequency resource includes a frequency-domain resource corresponding to a first port of a demodulation reference signal in a first CDM group and a frequency-domain resource corresponding to a second port of the demodulation reference signal, the frequency-domain resource corresponding to the first port is the same as the frequency-domain resource corresponding to the second port, the frequency-domain resource corresponding to the first port and the frequency-domain resource corresponding to the second port are non-contiguous and equally spaced, a first PRB in the frequency-domain resource corresponding to the first port and the frequency-domain resource corresponding to the second port includes at least two subcarrier groups, each of the at least two subcarrier groups includes two subcarriers, and the at least two subcarrier groups include a first subcarrier group and a second subcarrier group, or include a first subcarrier group, a second subcarrier group, and a third subcarrier group; and orthogonal cover codes OCCs used on REs corresponding to all subcarriers in the at least two subcarrier groups for the frequency-domain resource corresponding to the first port form a first OCC code sequence, and OCC codes used on the REs corresponding to all the subcarriers in the at least two subcarrier groups for the frequency-domain resource corresponding to the second port form a second OCC code sequence; and for the frequency-domain resource corresponding to the first port or the second port, OCC codes used on the REs corresponding to two subcarriers in the first subcarrier group form a third OCC code sequence, and OCC codes used on REs corresponding to two subcarriers in the second subcarrier group form a fourth OCC code sequence, where the second OCC code sequence is obtained by performing cyclic shift based on the first OCC code sequence, and the third OCC code sequence is different from the fourth OCC code sequence.

In a possible design, a configuration information table of the demodulation reference signal includes a correspondence between a demodulation reference signal port index, a CDM group frequency-domain offset, an OCC, and a cyclic shift factor, where the OCC includes a frequency-domain OCC and a time-domain OCC.

In a possible design, the method further includes: obtaining, based on the configuration information table, a frequency-domain OCC, a time-domain OCC, and a cyclic shift factor that correspond to a demodulation reference signal port index, and perform cyclic shift on the obtained frequency-domain OCC and the obtained time-domain OCC based on the obtained cyclic shift factor.

In a possible design, the mapping the sequence of the demodulation reference signal to a time-frequency resource of the demodulation reference signal includes:

obtaining, based on the configuration information table, a CDM group frequency-domain offset, a frequency-domain OCC, a time-domain OCC, and a cyclic shift factor that correspond to a first RE $(k, l)$, where the first RE $(k, l)$ has a subcarrier index of $k$ and a symbol index of $l$ in the time-frequency resource; and

obtaining, based on the CDM group frequency-domain offset, the frequency-domain OCC, the time-domain OCC, and the cyclic shift factor, data $\widetilde{\alpha}_{k,l}^{(\widetilde{p}_j,\mu)}$ of the sequence of the demodulation reference signal mapped to the first RE $(k, l)$, where the data $\widetilde{\alpha}_{k,l}^{(\widetilde{p}_j,\mu)}$ mapped to the first RE $(k, l)$ satisfies:

$$\widetilde{\alpha}_{k,l}^{(\widetilde{p}_j,\mu)} = e^{\frac{j2\phi\pi m}{6M}} W_f(k') W_t(l') r(2n + k')$$

$$k = 4n + 2k' + \Delta$$

k' = 0,1
$$m = \mathrm{mod}(\lfloor k/2 \rfloor, 6M)$$

$l = \bar{l} + l'$
n = 0,1,···
j = 0,1,···,v - 1

or the data $\widetilde{\alpha}_{k,l}^{(\widetilde{p}_j,\mu)}$ mapped to the first RE $(k, l)$ satisfies:

$$\widetilde{\alpha}_{k,l}^{(\widetilde{p}_j,\mu)} = e^{\frac{j2\phi\pi m}{4}} W_f(k') W_t(l') r(2n + k')$$

$$k = 4n + 2k' + \Delta$$

k' = 0,1
$$m = \mathrm{mod}(\lfloor k/2 \rfloor, 4)$$

$l = \bar{l} + l'$

$n = 0, 1, \cdots$

$j = 0, 1, \cdots, v - 1$

where $W_f(k')$ is a frequency-domain OCC, $W_t(l')$ is a time-domain OCC, and $r(2n + k')$ is an initial sequence of the demodulation reference signal; and $\Delta$ is a CDM group frequency-domain offset, $\bar{l}$ is an index of a start symbol of the demodulation reference signal, $l'$ is a symbol offset of the demodulation reference signal, v is a quantity of transmission layers, $\phi$ is a cyclic shift factor, and M is a positive integer greater than or equal to 1.

In a possible design, the method further includes: sending indication information of the demodulation reference signal port index in the first CDM group to a receiving device.

In a possible design, a maximum quantity of demodulation reference signal ports included in the first CDM group is at least 4N, and N is a quantity of symbols occupied by the demodulation reference signal.

A tenth aspect provides a communication apparatus, including at least one processor. The at least one processor is connected to a memory, and the at least one processor is configured to read and execute a program stored in the memory, to enable the apparatus to perform the following operations:

receiving, on a time-frequency resource of a demodulation reference signal, the demodulation reference signal sent by a sending device, where the demodulation reference signal is used to estimate a channel state of a first channel; the time-frequency resource includes frequency-domain resources corresponding to a first CDM group, and the frequency-domain resources corresponding to the first CDM group are non-contiguous and equally spaced; a first PRB in the frequency-domain resources corresponding to the first CDM group includes a first group of subcarriers and a second group of subcarriers; and the first group of subcarriers and the second group of subcarriers each include two subcarriers, the first group of subcarriers corresponds to a first group of OCCs, the second group of subcarriers corresponds to a second group of OCCs, and the first group of OCCs is orthogonal to the second group of OCCs; and

obtaining a sequence of the demodulation reference signal.

In a possible design, the first PRB further includes a third group of subcarriers, the third group of subcarriers includes two subcarriers, and the third group of subcarriers corresponds to the first group of OCCs.

In a possible design, a configuration information table of the demodulation reference signal includes a correspondence between a demodulation reference signal port index, a CDM group frequency-domain offset, and an OCC, the OCC includes a frequency-domain OCC and a time-domain OCC, and the frequency-domain OCC includes a first group of OCCs and a second group of OCCs.

In a possible design, a configuration information table of the demodulation reference signal includes a first configuration information table and a second configuration information table;

the first configuration information table includes a correspondence between a demodulation reference signal port index, a CDM group frequency-domain offset, and an OCC, and the OCC includes a frequency-domain OCC and a time-domain OCC; and

the second configuration information table includes a correspondence between a demodulation reference signal port index, a CDM group frequency-domain offset, and an OCC, the OCC includes a frequency-domain OCC and a time-domain OCC, the frequency-domain OCC includes a first group of OCCs and a second group of OCCs, and the demodulation reference signal port indexes included in the second configuration information table and the first configuration information table are different.

In a possible design, the method further includes: obtaining, based on the configuration information table, a first group of OCCs corresponding to the first group of subcarriers and a second group of OCCs corresponding to the second group of subcarriers.

In a possible design, the obtaining a sequence of the demodulation reference signal includes:

obtaining, based on the configuration information table, a CDM group frequency-domain offset, a frequency-domain OCC, and a time-domain OCC that correspond to a first RE $(k, l)$, where the first RE $(k, l)$ has a subcarrier index of $k$ and a symbol index of $l$ in the time-frequency resource; and

obtaining, based on the CDM group frequency-domain offset, the frequency-domain OCC, and the time-domain OCC, data $\widetilde{a}_{k,l}^{(\widetilde{p}_j, \mu)}$ of the sequence of the demodulation reference signal mapped to the first RE $(k, l)$, where the

data $\widetilde{\alpha}_{k,l}^{(\widetilde{p}_j,\mu)}$ mapped to the first RE (*k, l*) satisfies:

$$\widetilde{\alpha}_{k,l}^{(\widetilde{p}_j,\mu)} = W_f(k' + 2t)W_t(l')r(2n + k')$$

$$k = 4n + 2k' + \Delta$$

k' = 0,1
t = mod(n, 2)
$l = \bar{l} + l'$
n = 0,1,···
j = 0,1,···,v- 1
where $W_f(k' + 2t)$ is a frequency-domain OCC, $W_t(l')$ is a time-domain OCC, and $r(2n + k')$ is an initial sequence of the demodulation reference signal; and $\Delta$ is a CDM group frequency-domain offset, *l* is an index of a start symbol of the demodulation reference signal, *l'* is a symbol offset of the demodulation reference signal, and v is a quantity of transmission layers, where when t=0, the frequency-domain OCC is a first group of OCCs; and when t=1, the frequency-domain OCC is a second group of OCCs.

In a possible design, the method further includes: receiving indication information that is of the demodulation reference signal port index in the first CDM group and that is sent by the sending device.

In a possible design, a maximum quantity of demodulation reference signal ports included in the first CDM group is at least 4N, and N is a quantity of symbols occupied by the demodulation reference signal.

An eleventh aspect provides a communication apparatus, including at least one processor. The at least one processor is connected to a memory, and the at least one processor is configured to read and execute a program stored in the memory, to enable the apparatus to perform the following operations:

receiving, on a time-frequency resource of a demodulation reference signal, the demodulation reference signal sent by a sending device, where the demodulation reference signal is used to estimate a channel state of a first channel; the time-frequency resource includes frequency-domain resources corresponding to a first CDM group, and the frequency-domain resources corresponding to the first CDM group are non-contiguous and equally spaced; a time-domain resources corresponding to the first CDM group includes a first group of symbols and a second group of symbols, the first group of symbols corresponds to a first group of OCCs, the second group of symbols corresponds to a second group of OCCs, and the first group of OCCs is orthogonal to the second group of OCCs; and obtaining a sequence of the demodulation reference signal.

In a possible design, a configuration information table of the demodulation reference signal includes a correspondence between a demodulation reference signal type, a demodulation reference signal port index, a CDM group frequency-domain offset, and an OCC, the OCC includes a frequency-domain OCC and a time-domain OCC, the time-domain OCC includes a first group of OCCs and a second group of OCCs, the first group of OCCs corresponds to a first demodulation reference signal type, the second group of OCCs corresponds to a second demodulation reference signal type, the first demodulation reference signal type corresponds to the first group of symbols, and the second demodulation reference signal type corresponds to the second group of symbols.

In a possible design, the configuration information table of the demodulation reference signal includes a first configuration information table and a second configuration information table, the first configuration information table corresponds to a first demodulation reference signal type, the second configuration information table corresponds to a second demodulation reference signal type, the first demodulation reference signal type corresponds to the first group of symbols, and the second demodulation reference signal type corresponds to the second group of symbols;

the first configuration information table includes a correspondence between a demodulation reference signal port index, a CDM group frequency-domain offset, and an OCC, the OCC includes a frequency-domain OCC and a time-domain OCC, and the time-domain OCC is the first group of OCCs; and
the second configuration information table includes a correspondence between a demodulation reference signal port index, a CDM group frequency-domain offset, and an OCC, where the OCC includes a frequency-domain OCC and a time-domain OCC, and the time-domain OCC is the second group of OCCs.

In a possible design, a configuration information table of the demodulation reference signal includes a correspondence between a demodulation reference signal type, a demodulation reference signal port index, a CDM group frequency-domain offset, and an OCC, the OCC includes a frequency-domain OCC and a time-domain OCC, the frequency-domain OCC includes a first group of OCCs and a second group of OCCs, the first group of OCCs corresponds to a first demodulation reference signal type, the second group of OCCs corresponds to a second demodulation reference signal type, the first demodulation reference signal type corresponds to the first group of symbols, and the second demodulation reference signal type corresponds to the second group of symbols.

In a possible design, the configuration information table of the demodulation reference signal includes a first configuration information table and a second configuration information table, the first configuration information table corresponds to a first demodulation reference signal type, the second configuration information table corresponds to a second demodulation reference signal type, the first demodulation reference signal type corresponds to the first group of symbols, and the second demodulation reference signal type corresponds to the second group of symbols;

the first configuration information table includes a correspondence between a demodulation reference signal port index, a CDM group frequency-domain offset, and an OCC, the OCC includes a frequency-domain OCC and a time-domain OCC, and the frequency-domain OCC is the first group of OCCs; and

the second configuration information table includes a correspondence between a demodulation reference signal port index, a CDM group frequency-domain offset, and an OCC, where the OCC includes a frequency-domain OCC and a time-domain OCC, and the frequency-domain OCC is the second group of OCCs.

In a possible design, the method further includes: obtaining, based on the configuration information table and a demodulation reference signal type, a first group of OCCs corresponding to the first group of symbols and a second group of OCCs corresponding to the second group of symbols.

In a possible design, the obtaining a sequence of the demodulation reference signal includes:

obtaining, based on the configuration information table, a CDM group frequency-domain offset, a frequency-domain OCC, and a time-domain OCC that correspond to a first RE ($k, l$), where the first RE ($k, l$) has a subcarrier index of $k$ and a symbol index of $l$ in the time-frequency resource; and

obtaining, based on the CDM group frequency-domain offset, the frequency-domain OCC, and the time-domain OCC, data $\widetilde{\alpha}_{k,l}^{(\widetilde{p}_j,\mu)}$ of the sequence of the demodulation reference signal mapped to the first RE ($k, l$), where the data $\widetilde{\alpha}_{k,l}^{(\widetilde{p}_j,\mu)}$ mapped to the first RE ($k, l$) satisfies:

$$\widetilde{\alpha}_{k,l}^{(\widetilde{p}_j,\mu)} = W_f(k')W_t(l',s)r(2n + k')$$

$$k = 4n + 2k' + \Delta$$

k' = 0,1
s = 0,1
$l = \bar{l} + l'$
n = 0,1,⋯
j = 0,1,⋯,v- 1

where $W_f(k')$ is a frequency-domain OCC, $W_t(l')$ is a time-domain OCC, and $r(2n + k')$ is an initial sequence of the demodulation reference signal; and $\Delta$ is a CDM group frequency-domain offset, $\bar{l}$ is an index of a start symbol of the demodulation reference signal, $l'$ is a symbol offset of the demodulation reference signal, and v is a quantity of transmission layers, where when s=0, the time-domain OCC is a first group of OCCs; and when s=1, the time-domain OCC is a second group of OCCs.

In a possible design, the obtaining a sequence of the demodulation reference signal includes:

obtaining, based on the configuration information table, a CDM group frequency-domain offset, a frequency-domain OCC, and a time-domain OCC that correspond to a first RE ($k, l$), where the first RE ($k, l$) has a subcarrier index of $k$ and a symbol index of $l$ in the time-frequency resource; and

obtaining, based on the CDM group frequency-domain offset, the frequency-domain OCC, and the time-domain OCC, data $\widetilde{\alpha}_{k,l}^{(\widetilde{p}_j,\mu)}$ of the sequence of the demodulation reference signal mapped to the first RE ($k$, $l$), where the data $\widetilde{\alpha}_{k,l}^{(\widetilde{p}_j,\mu)}$ mapped to the first RE ($k$, $l$) satisfies:

$$\widetilde{\alpha}_{k,l}^{(\widetilde{p}_j,\mu)} = W_f(k', s)W_t(l')r(2n + k')$$

$$k = 4n + 2k' + \Delta$$

k' = 0,1
s = 0,1
$l = \bar{l} + l'$
n = 0,1,···
j = 0,1,···,v - 1

where $W_f(k')$ is a frequency-domain OCC, $W_t(l')$ is a time-domain OCC, and r(2n + k') is an initial sequence of the demodulation reference signal; and $\Delta$ is a CDM group frequency-domain offset, $\bar{l}$ is an index of a start symbol of the demodulation reference signal, $l'$ is a symbol offset of the demodulation reference signal, and v is a quantity of transmission layers, where when s=0, the frequency-domain OCC is a first group of OCCs; and when s=1, the frequency-domain OCC is a second group of OCCs.

In a possible design, the method further includes: receiving port index indication information that is of the demodulation reference signal and that is sent by the sending device.

In a possible design, a maximum quantity of demodulation reference signal ports included in the first CDM group is at least 4N, N is a quantity of symbols included in the first group of symbols or the second group of symbols, and the first group of symbols and the second group of symbols include a same quantity of symbols.

A twelfth aspect provides a communication apparatus, including at least one processor. The at least one processor is connected to a memory, and the at least one processor is configured to read and execute a program stored in the memory, to enable the apparatus to perform the following operations:

receiving, on a time-frequency resource of a demodulation reference signal, the demodulation reference signal sent by a sending device, where the demodulation reference signal is used to estimate a channel state of a first channel; obtaining a sequence of the demodulation reference signal, where
the time-frequency resource includes a frequency-domain resource corresponding to a first port of a demodulation reference signal in a first CDM group and a frequency-domain resource corresponding to a second port of the demodulation reference signal, the frequency-domain resource corresponding to the first port is the same as the frequency-domain resource corresponding to the second port, the frequency-domain resource corresponding to the first port and the frequency-domain resource corresponding to the second port are non-contiguous and equally spaced, a first PRB in the frequency-domain resource corresponding to the first port and the frequency-domain resource corresponding to the second port includes at least two subcarrier groups, each of the at least two subcarrier groups includes two subcarriers, and the at least two subcarrier groups include a first subcarrier group and a second subcarrier group, or include a first subcarrier group, a second subcarrier group, and a third subcarrier group; and orthogonal cover codes OCCs used on REs corresponding to all subcarriers in the at least two subcarrier groups for the frequency-domain resource corresponding to the first port form a first OCC code sequence, and OCC codes used on the REs corresponding to all the subcarriers in the at least two subcarrier groups for the frequency-domain resource corresponding to the second port form a second OCC code sequence; and for the frequency-domain resource corresponding to the first port or the second port, OCC codes used on the REs corresponding to two subcarriers in the first subcarrier group form a third OCC code sequence, and OCC codes used on REs corresponding to two subcarriers in the second subcarrier group form a fourth OCC code sequence, where the second OCC code sequence is obtained by performing cyclic shift based on the first OCC code sequence, and the third OCC code sequence is different from the fourth OCC code sequence.

In a possible design, a configuration information table of the demodulation reference signal includes a correspondence between a demodulation reference signal port index, a CDM group frequency-domain offset, an OCC, and a cyclic shift factor, where the OCC includes a frequency-domain OCC and a time-domain OCC.

In a possible design, the method further includes: obtaining, based on the configuration information table, a frequency-domain OCC, a time-domain OCC, and a cyclic shift factor that correspond to a demodulation reference signal port index, and perform cyclic shift on the obtained frequency-domain OCC and the obtained time-domain OCC based on the obtained cyclic shift factor.

In a possible design, the obtaining a sequence of the demodulation reference signal includes:

obtaining, based on the configuration information table, a CDM group frequency-domain offset, a frequency-domain OCC, a time-domain OCC, and a cyclic shift factor that correspond to a first RE (*k, l*), where the first RE (*k, l*) has a subcarrier index of *k* and a symbol index of *l* in the time-frequency resource; and

obtaining, based on the CDM group frequency-domain offset, the frequency-domain OCC, the time-domain OCC, and the cyclic shift factor, data $\tilde{\alpha}_{k,l}^{(\tilde{p}_j,\mu)}$ of the sequence of the demodulation reference signal mapped to the first RE (*k, l*), where the data $\tilde{\alpha}_{k,l}^{(\tilde{p}_j,\mu)}$ mapped to the first RE (*k, l*) satisfies:

$$\tilde{\alpha}_{k,l}^{(\tilde{p}_j,\mu)} = e^{\frac{j2\phi\pi m}{6M}}W_f(k')W_t(l')r(2n+k')$$

$$k = 4n + 2k' + \Delta$$

k' = 0,1

$$m = \mathrm{mod}(\lfloor k/2 \rfloor, 6M)$$

*l* = $\bar{l}$ + *l'*

n = 0,1,···

j = 0,1,···,v - 1

or the data $\tilde{\alpha}_{k,l}^{(\tilde{p}_j,\mu)}$ mapped to the first RE (*k, l*) satisfies:

$$\tilde{\alpha}_{k,l}^{(\tilde{p}_j,\mu)} = e^{\frac{j2\phi\pi m}{4}}W_f(k')W_t(l')r(2n+k')$$

$$k = 4n + 2k' + \Delta$$

k' = 0,1

$$m = \mathrm{mod}(\lfloor k/2 \rfloor, 4)$$

*1* = *1* + *1'*

n = 0,1,···

j = 0,1,···,v- 1

where $W_f(k')$ is a frequency-domain OCC, $W_t(l')$ is a time-domain OCC, and r(2n + k') is an initial sequence of the demodulation reference signal; and $\Delta$ is a CDM group frequency-domain offset, $\bar{l}$ is an index of a start symbol of the demodulation reference signal, *l'* is a symbol offset of the demodulation reference signal, v is a quantity of transmission layers, $\phi$ is a cyclic shift factor, and M is a positive integer greater than or equal to 1.

In a possible design, the method further includes: receiving indication information that is of the demodulation reference signal port index in the first CDM group and that is sent by the sending device.

In a possible design, a maximum quantity of demodulation reference signal ports included in the first CDM group is at least 4N, and N is a quantity of symbols occupied by the demodulation reference signal.

A thirteenth aspect provides a chip, coupled to a memory. The chip is configured to read and execute program instructions stored in the memory, to implement the method according to any one of the first aspect to the sixth aspect.

A fourteenth aspect provides a computer-readable storage medium. The computer-readable storage medium stores computer instructions. When the instructions are run on a computer, the computer is enabled to perform the method according to any one of the first aspect to the sixth aspect.

A fifteenth aspect provides a computer program product. When the computer program product is invoked by a computer, the computer is enabled to perform the method according to any one of the first aspect to the sixth aspect.

## BRIEF DESCRIPTION OF DRAWINGS

FIG. 1 is a schematic diagram of a network architecture according to an embodiment of this application;

FIG. 2 is a schematic diagram of a DMRS pilot pattern according to an embodiment of this application;

FIG. 3 is a flowchart of a demodulation reference signal transmission method implemented on a sending device side according to an embodiment of this application;

FIG. 4 is a schematic diagram of a correspondence between a DMRS time-frequency resource, a subcarrier group, and an OCC group according to an embodiment of this application;

FIG. 5 is a schematic diagram of a DMRS time-frequency resource and an OCC corresponding to a port in a CDM group 0 according to an embodiment of this application;

FIG. 6 is a flowchart of a demodulation reference signal transmission method implemented on a receiving device side according to an embodiment of this application;

FIG. 7 is a flowchart of a demodulation reference signal transmission method implemented on a sending device side according to an embodiment of this application;

FIG. 8 is a schematic diagram of a correspondence between a DMRS time-frequency resource, a symbol group, and an OCC group according to an embodiment of this application;

FIG. 9 is a schematic diagram of a DMRS time-frequency resource and an OCC corresponding to a port in a CDM group 0 according to an embodiment of this application;

FIG. 10 is a flowchart of a demodulation reference signal transmission method implemented on a receiving device side according to an embodiment of this application;

FIG. 11 is a flowchart of a demodulation reference signal transmission method implemented on a sending device side according to an embodiment of this application;

FIG. 12 is a schematic diagram of an OCC code used when a DMRS is mapped to an RE according to an embodiment of this application;

FIG. 13 is a flowchart of a demodulation reference signal transmission method implemented on a receiving device side according to an embodiment of this application;

FIG. 14 is a schematic diagram of a structure of a communication apparatus according to an embodiment of this application;

FIG. 15 is a schematic diagram of a structure of a communication apparatus according to an embodiment of this application;

FIG. 16 is a schematic diagram of a structure of a communication apparatus according to an embodiment of this application; and

FIG. 17 is a schematic diagram of a structure of a communication apparatus according to another embodiment of this application.

## DESCRIPTION OF EMBODIMENTS

To make objectives, technical solution, and advantages of embodiments of this application clearer, the following further describes embodiments of this application in detail with reference to the accompanying drawings.

The following describes some terms in embodiments of this application, to facilitate understanding of a person skilled in the art.

(1) A terminal device may be a device that provides users with voice and/or data connectivity, for example, may be a handheld device with a wireless connection function, or a processing device connected to a wireless modem. The terminal device may communicate with a core network through a radio access network (radio access network, RAN), and exchange a voice and/or data with the RAN. The terminal device may include user equipment (user equipment, UE), a wireless terminal device, a mobile terminal device, a subscriber unit (subscriber unit), a subscriber station (subscriber station), a mobile station (mobile station), a mobile console (mobile), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer with a mobile terminal device, a portable, pocket-sized, handheld, computer built-in, or vehicle-mounted mobile apparatus, or a smart wearable device. For example, the terminal device may be a device such as a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). The terminal device alternatively includes a limited device, for example, a device having low power consumption, a device having a limited storage capability, or a device having a limited computing capability. For example, the terminal device includes an information sensing device such as a barcode, a radio frequency identification (radio frequency identification, RFID), a sensor, a global positioning system (global positioning system, GPS), or a laser scanner.

As an example instead of a limitation, in embodiments of this application, the terminal device may alternatively be a wearable device. The wearable device may also be referred to as a wearable intelligent device, and is a general term for wearable devices, such as glasses, gloves, watches, clothes, and shoes, that are developed by applying wearable technologies to intelligent designs of daily wear. The wearable device is a portable device that is directly worn on the body or integrated into clothes or an accessory of a user. The wearable device is not merely a hardware device, but is used to implement a powerful function through software support, data interaction, and cloud interaction. In a broad sense, wearable intelligent devices include full-featured and large-sized devices that can implement complete or partial functions without depending on smartphones, for example, smart watches or smart glasses, and devices that focus on only one type of application function and need to work with other devices such as smartphones, such as various smart bands, smart helmets, or smart jewelry for monitoring physical signs.

(2) A network device includes, for example, an access network (access network, AN) device, for example, a base station (for example, an access point), and may be a device that is in an access network and that communicates with a wireless terminal device over an air interface through one or more cells. The network device may be configured to mutually convert a received over-the-air frame and an Internet Protocol (IP) packet and serve as a router between the terminal device and a rest portion of the access network, where the rest portion of the access network may include an IP network. The network device may further coordinate attribute management of the air interface. For example, the network device may include an evolved NodeB (NodeB, eNB, or e-NodeB, evolved NodeB) in a long term evolution (long term evolution, LTE) system or an LTE-advanced (LTE-Advanced, LTE-A) system, or may include a next generation NodeB (next generation NodeB, gNB) in a fifth generation (fifth generation, 5G) mobile communication technology new radio (new radio, NR) system, or may include a central unit (central unit, CU) and a distributed unit (distributed unit, DU) in a cloud access network (cloud radio access network, Cloud RAN) system. This is not limited in embodiments of this application.

(3) Terms "system" and "network" may be used interchangeably in embodiments of this application. "A plurality of" means two or more. In view of this, "a plurality of" may also be understood as "at least two" in embodiments of this application. "At least one" may be understood as one or more, for example, one, two, or more. For example, "include at least one" means "include one, two, or more", and there is no limitation on which is included. For example, "include at least one of A, B, and C" may mean "include A, B, or C", "include A and B, A and C, or B and C", or "include A, B, and C". The term "and/or" describes an association relationship for describing associated objects and represents that three relationships may exist. For example, A and/or B may represent the following three cases: Only A exists, both A and B exist, and only B exists. In addition, the character "/" generally indicates an "or" relationship between the associated objects.

Unless otherwise specified, ordinal numbers such as "first" and "second" in embodiments of this application are used to distinguish between a plurality of objects, and are not intended to limit a sequence, a time sequence, priorities, or importance of the plurality of objects.

Embodiments of this application is applicable to various communication systems, for example, an LTE system, an LTE-A system, an NR system, or a new communication system emerging in future communication development. A communication method provided in embodiments of this application may be used provided that an entity in a communication system transmits a demodulation reference signal on a time-frequency resource corresponding to a same CDM group by using different orthogonal cover code groups, to increase a quantity of orthogonal demodulation reference signal ports supported by the system.

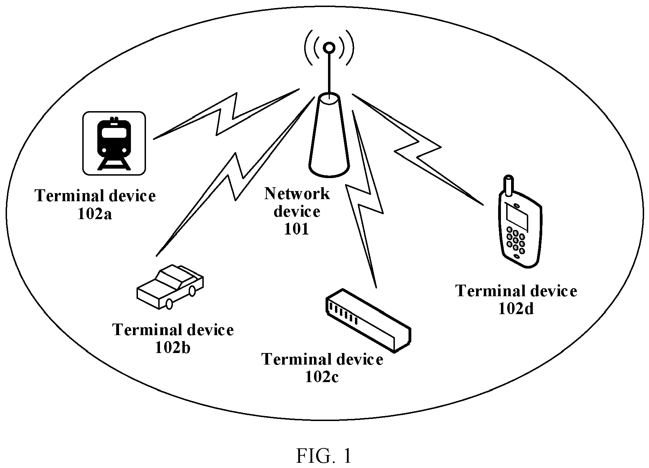

FIG. 1 shows a communication system to which an embodiment of this application can be applied. The communication system shown in FIG. 1 includes a network device 101 and four terminal devices (102a to 102d). The network device 101 may send downlink data and DMRSs to the terminal devices (102a to 102d). Any one of the terminal devices (102a to 102d) may perform downlink channel estimation based on the received DMRSs, and send the DMRSs and uplink data to the network device 101. The network device performs uplink channel estimation based on the received DMRSs.

The network device 101 is configured to receive uplink signals from the terminal devices (102a to 102d), or send downlink signals to the terminal devices. The network device 101 may be an LTE and/or NR network device, and may be specifically a NodeB (NodeB), an evolved NodeB (eNodeB), a gNB (gNB) in a 5G NR mobile communication system, a base station in a future mobile communication system, an access node in a Wi-Fi system, or the like.

The terminal devices (102a to 102d) are user-side entities configured to receive or transmit signals, and are configured to send uplink signals to the network device, or receive downlink signals from the network device. The terminal devices (102a to 102d) mainly include a mobile phone, a vehicle, a tablet computer, a smart speaker, a train detector, a gas station sensor, and the like, and have main functions including collecting data (some terminal devices), receiving control information and downlink data of the network device, sending electromagnetic waves, and transmitting uplink data to the network device.

FIG. 1 is only an example, but does not limit a type of the communication system, or a quantity, types, and the like of devices included in the communication system. A system architecture and a service scenario described in embodiments of this application are intended to describe the technical solutions in embodiments of this application, and do not constitute any limitation on the technical solutions provided in embodiments of this application. A person of ordinary skill in the art may know that with evolution of the network architecture and emergence of a new service scenario, the technical solutions provided in embodiments of this application are also applicable to similar technical problems.

Based on the communication system shown in FIG. 1, an NR system is used as an example. According to the current NR protocol, the DFT-S-OFDM waveform supports a maximum of eight orthogonal DMRS ports, that is, eight layers of multi-user orthogonal pairing, and the CP-OFDM waveform supports a maximum of 12 orthogonal DMRS ports, that is, 12 layers of multi-user orthogonal pairing. For the CP-OFDM waveform, the system supports two DMRS configuration types: a type 1 DMRS (also referred to as a first configuration type in the following embodiments) and a type 2 DMRS (also referred to as a second configuration type in the following embodiments). The type 1 DMRS supports 8-port DMRS orthogonality, and has a higher frequency domain density than that of the type 2 DMRS.

Each cell independently configures a set of DMRS generation parameters for a terminal. DMRSs are classified into front-loaded (front-loaded) DMRSs and additional DMRSs (additional DMRSs) based on different time-domain positions of the DMRSs. The front-loaded DMRSs are placed in the first several symbols in a slot, and a maximum of two symbols can be configured. In frequency domain, different DMRS ports are divided into different code division multiplexing (code division multiplexing, CDM) groups (CDM group). In addition, for DMRS ports in a same CDM group, an orthogonal cover code (orthogonal cover code, OCC) is used to perform extension in time domain and frequency domain, and orthogonality between different ports can be ensured, thereby improving accuracy of channel estimation. Different CDM groups are orthogonal in frequency domain, that is, occupy different subcarriers.

That two sequences or vectors are orthogonal means that an inner product of the two sequences or vectors is equal to 0.

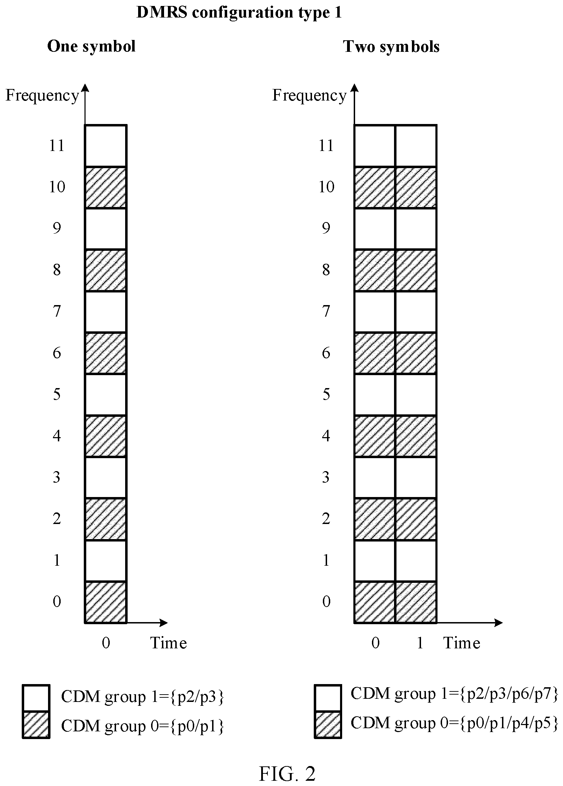

FIG. 2 shows an example of a time-frequency resource position (that is, a DMRS pilot pattern) of a DMRS of the first configuration type (Type 1 DMRS). Resource elements (resource element, RE) shown by different filling patterns belong to different CDM groups. p0, p1, ..., and p7 indicate DMRS port indexes.

As shown in FIG. 2, for the type 1 DMRS, when one symbol is configured for DMRS transmission, cyclic shift on a sequence or a frequency-domain OCC is used in frequency domain to ensure that sequences on two DMRS ports in a same CDM group are orthogonal; or when two symbols are configured for DMRS transmission, it is ensured by using a frequency-domain cyclic shift or by using a frequency-domain OCC (a code length is 2) and a time-domain OCC (a code length is 2) in a same CDM group that sequences on four DMRS ports in the CDM group are orthogonal.

It can be learned from FIG. 2 that the type 1 DMRS includes two CDM groups, and can support only a maximum of eight orthogonal DMRS ports. If there are more than eight network pairing layers (for example, 16 layers), orthogonality between DMRS ports cannot be ensured. As a result, channel estimation performance deteriorates, PUSCH demodulation performance is affected, and an uplink capacity cannot be improved. Similarly, the foregoing problem also exists in downlink DMRS transmission.

Based on the foregoing existing problem, embodiments of this application provide a signal transmission method and an apparatus, to increase a quantity of orthogonal demodulation reference signal ports that can be supported by a system without additionally increasing demodulation reference signal overheads. The method and the apparatus are based on a same inventive concept. Because the method and the apparatus have a similar problem-resolving principle, for implementations of the apparatus and the method, refer to each other, and no repeated description is provided.

The embodiments of this application are applicable to transmission of a downlink demodulation reference signal, and are also applicable to transmission of an uplink demodulation reference signal.

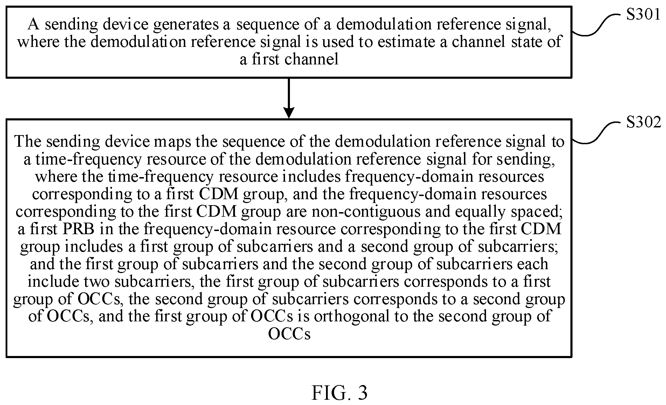

FIG. 3 is a flowchart of a signal transmission method implemented on a sending device side according to an embodiment of this application. The method may be applied to the network architecture shown in FIG. 1, or certainly may be applied to another network architecture. This is not limited in this application. When the method is applied to the network architecture shown in FIG. 1, for downlink demodulation reference signal transmission, a sending device in the method may be the network device 101 in FIG. 1, and a receiving device in the method may be the terminal device (102a to 102d) in FIG. 1. For uplink demodulation reference signal transmission, a sending device in the method may be the terminal device (102a to 102d) in FIG. 1, and a receiving device in the method may be the network device 101 in FIG. 1.

Refer to FIG. 3. The method may include the following processing procedure.

S301: A sending device generates a sequence of a demodulation reference signal.

The demodulation reference signal is used to estimate a channel state of a first channel. That the demodulation reference signal is used to estimate a channel state of a first channel may be understood as that the demodulation reference signal is a demodulation reference signal of the first channel. For downlink demodulation reference signal transmission, the first channel carries uplink data; and for uplink demodulation reference signal transmission, the first channel carries downlink data.

Specifically, the demodulation reference signal may be a DMRS of downlink transmission, and is used to perform channel estimation on a PUSCH. Alternatively, the demodulation reference signal may be a DMRS of uplink transmission, and is used to perform channel estimation on a PDSCH.

More specifically, the DMRS may be a DMRS based on a CP-OFDM waveform, a DMRS configuration type is a first configuration type (Type 1 DMRS), and a time-domain position of the DMRS is the first one or two symbols in one slot (namely, a front-loaded DMRS).

Using the DMRS based on the CP-OFDM waveform as an example, a DMRS sequence may be generated based on a gold sequence. Specifically, the DMRS sequence may be generated by using the following formula:

$$\text{r(n)} = \frac{1}{\sqrt{2}}\big(1 - 2 - c(2n)\big) + j\frac{1}{\sqrt{2}}\big(1 - 2 - c(2n+1)\big)\ldots\ldots\ldots\ldots\ldots\ldots\ldots(1)$$

r(n) is a DMRS sequence, and c(i) is a binary sequence, is a pseudo-random sequence, and needs to be initialized during generation. A formula for generating the pseudo-random sequence is:

$$C(\text{n}) = \big(x_1(\text{n} + N_C) + x_2(\text{n} + N_C)\big)\text{mod}2$$
$$x_1(\text{n} + 31) = \big(x_1(\text{n} + 3) + x_1(\text{n})\big)\text{mod}2 \qquad\ldots\ldots\ldots\ldots(2)$$
$$x_2(\text{n} + 31) = \big(x_2(\text{n} + 3) + x_2(\text{n} + 2) + x_2(\text{n} + 1) + x_2(\text{n})\big)\text{mod}2$$

$N_C = 1600$, $x_1(n)$ may be initialized to $x_1(0)=1$, $x_1(n)=0$, n=1, 2,..., 30, and $x_2(n)$ satisfies $c_{init} = \sum_{j=0}^{30} x_2(i) \cdot 2^i$ .

Corresponding to the DMRS sequence of the PUSCH, an initialization seed $c_{init}$ is defined as:

$$c_{init} = (2^{17}\big(N_{symb}^{slot}n_{s,f}^{\mu} + l + 1\big)\big(2N_{ID}^{n_{SCID}} + 1\big) + 2N_{ID}^{n_{SCID}} + n_{SCID})mod2^{31}\ldots(3)$$

$l$ is an OFDM symbol index, $n_{s,f}^{\mu}$ is a quantity of slots in a frame, $N_{symb}^{slot}$ is a quantity of symbols in a slot, $n_{SCID} \in \{0,1\}$ is a DMRS sequence initialization parameter, and $N_{ID}^{n_{SCID}}$ is a cover code. $N_{ID}^{n_{SCID}}$ has a value depending on configuration of different upper-layer parameters.

S302: The sending device maps the sequence of the demodulation reference signal to a time-frequency resource of the demodulation reference signal for sending.

The time-frequency resource to which the sequence of the demodulation reference signal is mapped may include a time-frequency resource corresponding to a first CDM group. Frequency-domain resources in the time-frequency resource corresponding to the first CDM group are non-contiguous and equally spaced. A first PRB in the frequency-domain resources corresponding to the first CDM group includes a first group of subcarriers and a second group of subcarriers. The first PRB may be any PRB in the frequency-domain resources corresponding to the first CDM group.

The time-frequency resource to which the sequence of the demodulation reference signal is mapped may further include a time-frequency resource corresponding to a second CDM group. A frequency-domain resource in the time-frequency resource corresponding to the second CDM group is non-contiguous and equally spaced. A first PRB in the frequency-domain resource corresponding to the second CDM group includes a first group of subcarriers and a second group of subcarriers. The first PRB may be any PRB in the frequency-domain resource corresponding to the second CDM group.

The first group of subcarriers corresponds to a first group of OCCs, the second group of subcarriers corresponds to a second group of OCCs, and the first group of OCCs is orthogonal to the second group of OCCs.

The first group of subcarriers and the second group of subcarriers each include two subcarriers. Correspondingly, that frequency-domain resources in the time-frequency resources corresponding to the first CDM group and the second CDM group are non-contiguous and equally spaced may be understood as follows: Subcarriers in the frequency-domain resources corresponding to the first CDM group and the second CDM group are distributed at intervals with a spacing distance of one subcarrier.

In some embodiments, the first PRB in the frequency-domain resources corresponding to the first CDM group and/or the second CDM group further includes a third group of subcarriers, the third group of subcarriers includes two subcarriers, and the third group of subcarriers corresponds to the first group of OCCs.

For example, one PRB in a frequency-domain resource corresponding to one CDM group includes three groups of subcarriers (a first group of subcarriers, a second group of subcarriers, and a third group of subcarriers). In some examples, a first group of subcarriers of a first CDM group in the PRB includes a first subcarrier and a third subcarrier in the PRB, a second group of subcarriers of the first CDM group in the PRB includes a fifth subcarrier and a seventh subcarrier in the PRB, and a third group of subcarriers of the first CDM group in the PRB includes a ninth subcarrier and an eleventh subcarrier in the PRB; and a first group of subcarriers of a second CDM group in the PRB includes a second subcarrier and a fourth subcarrier in the PRB, a second group of subcarriers of the second CDM group in the PRB includes a sixth subcarrier and an eighth subcarrier in the PRB, and a third group of subcarriers of the second CDM group in the PRB includes a tenth subcarrier and a twelfth subcarrier in the PRB. The first subcarrier to the twelfth subcarrier in the PRB may be arranged in ascending order of subcarrier indexes or frequencies, or may be arranged in descending order of subcarrier indexes or frequencies.

Certainly, the foregoing is merely an example. In another example, a first group of subcarriers of a first CDM group in the PRB includes a second subcarrier and a fourth subcarrier in the PRB, a second group of subcarriers of the first CDM group in the PRB includes a sixth subcarrier and an eighth subcarrier in the PRB, and a third group of subcarriers of the first CDM group in the PRB includes a tenth subcarrier and a twelfth subcarrier in the PRB; and a first group of subcarriers of a second CDM group in the PRB includes a first subcarrier and a third subcarrier in the PRB, a second group of subcarriers of the second CDM group in the PRB includes a fifth subcarrier and a seventh subcarrier in the PRB, and a third group of subcarriers of the second CDM group in the PRB includes a ninth subcarrier and an eleventh subcarrier in the PRB.

In some embodiments of this application, a maximum quantity of demodulation reference signal ports included in the first CDM group is at least 4N, and N is a quantity of symbols occupied by the demodulation reference signal. For example, if the demodulation reference signal is transmitted by using one symbol, each CDM group may include a maximum of four demodulation reference signal ports. In this way, two CDM groups may support a maximum of eight demodulation reference signal ports. If the demodulation reference signal is transmitted by using two symbols, each CDM group may include a maximum of eight demodulation reference signal ports. In this way, two CDM groups may support a maximum of 16 demodulation reference signal ports.

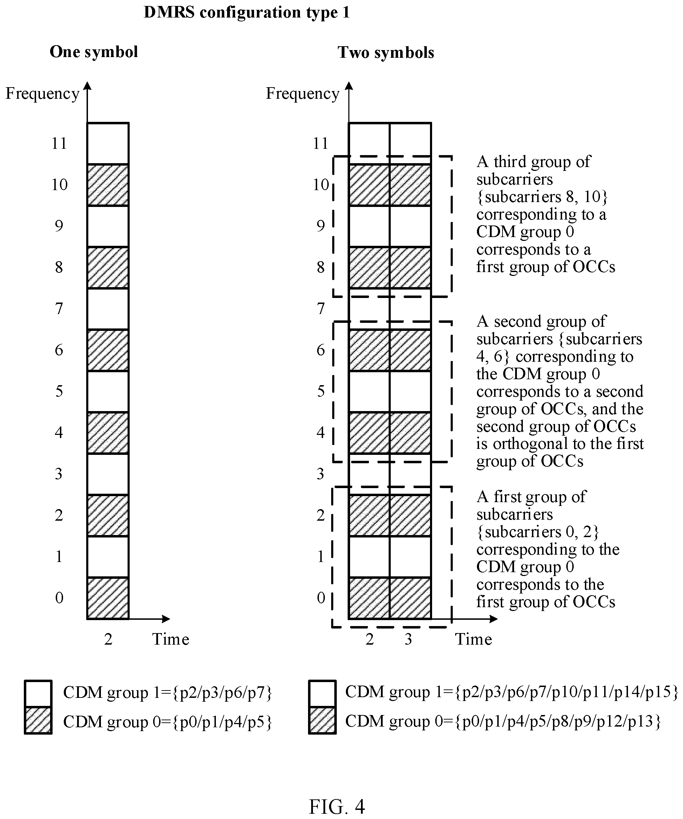

According to the foregoing embodiment, a DMRS whose configuration type is the first configuration type (Type 1 DMRS) is used as an example, and a time-domain position of the DMRS is the first one or two symbols in one slot (namely, a front-loaded DMRS). In this case, in some embodiments of this application, a time-frequency resource position of the DMRS may be shown in FIG. 4.

As shown in FIG. 4, when one symbol is configured for DMRS transmission, a frequency-domain OCC is used in frequency domain to ensure that sequences on four DMRS ports in a same CDM group are orthogonal; or when two symbols are configured for DMRS transmission, a frequency-domain OCC is used in frequency domain and a time-domain OCC is used in time domain to ensure that sequences on eight DMRS ports in a same CDM group are orthogonal.

In FIG. 4, when two symbols are configured, subcarriers corresponding to a CDM group 0 include subcarriers {0, 2, 4, 6, 8, 10}, where subcarriers {0, 2} form a first group of subcarriers, subcarriers {4, 6} form a second group of subcarriers, and subcarriers {8, 10} form a third group of subcarriers. The first group of subcarriers corresponds to a first group of OCCs, the second group of subcarriers corresponds to a second group of OCCs, the third group of subcarriers corresponds to the first group of OCCs, and the first group of OCCs is orthogonal to the second group of OCCs.

Subcarriers corresponding to a CDM group 1 include subcarriers {1, 3, 5, 7, 9, 11}, where subcarriers {1, 3} form a first group of subcarriers, subcarriers {5, 7} form a second group of subcarriers, and subcarriers {9, 11} form a third group of subcarriers. The first group of subcarriers and the third group of subcarriers correspond to a same group of OCCs that is orthogonal to a group of OCCs corresponding to the second group of subcarriers.

In FIG. 4, when one symbol is configured, subcarriers corresponding to a CDM group 0 include subcarriers {0, 2, 4, 6, 8, 10}, where subcarriers {0, 2} form a first group of subcarriers, subcarriers {4, 6} form a second group of subcarriers, and subcarriers {8, 10} form a third group of subcarriers. Subcarriers corresponding to a CDM group 1 include subcarriers {1, 3, 5, 7, 9, 11}, where subcarriers {1, 3} form a first group of subcarriers, subcarriers {5, 7} form a second group of subcarriers, and subcarriers {9, 11} form a third group of subcarriers. The first group of subcarriers and the third group of subcarriers correspond to a same group of OCCs that is orthogonal to a group of OCCs corresponding to the second group of subcarriers.

It should be noted that, in FIG. 4, when one symbol is configured for DMRS transmission, only an example in which the CDM group 0 includes DMRS ports {p0, p1, p4, p5} and the CDM group 1 includes DMRS ports {p2, p3, p6, p7} is used for description. In some other embodiments, a combination of ports included in the CDM group 0 and the CDM group 1 may also be another case. For example, the CDM group 0 includes DMRS ports {p0, p1, p6, p7}, and the CDM group 1 includes DMRS ports {p2, p3, p4, p5}. Details are not listed one by one herein. When two symbols are configured for DMRS transmission, only an example in which the CDM group 0 includes DMRS ports {p0, p1, p4, p5, p8, p9, p12, p13} and the CDM group 1 includes DMRS ports {p2, p3, p6, p7, p10, p11, p14, p15} is used for description. In some other embodiments, a combination of ports included in the CDM group 0 and the CDM group 1 may also be another case. For example, the CDM group 0 includes DMRS ports {p0, p1, p4, p5, p10, p11, p14, p15}, and the CDM group 1 includes DMRS ports {p2, p3, p6, p7, p8, p9, p12, p13}. Details are not listed one by one herein.

It should be further noted that a symbol position used to transmit the DMRS is configurable. In FIG. 4, only an example in which a symbol whose index is 2 is configured to transmit the DMRS or symbols whose indexes are 2 and 3 are configured to transmit the DMRS is used. In some other embodiments, another symbol may also be configured to transmit the DMRS.

It can be learned from the foregoing embodiment that, in this embodiment of this application, time-frequency resource overheads of the demodulation reference signal are not additionally increased. Instead, subcarriers on one PRB in a frequency-domain resource corresponding to one CDM group are divided into a first group of subcarriers and a second group of subcarriers. In addition, the first group of subcarriers corresponds to a first group of OCCs, the second group of subcarriers corresponds to a second group of OCCs, and the first group of OCCs and the second group of OCCs are orthogonal, so that a quantity of demodulation reference signal ports that are orthogonal to each other in one CDM group can be increased. In this way, a quantity of orthogonal demodulation reference signal ports that can be supported by the system is increased.

When the foregoing embodiment of this application is applied to the DMRS whose configuration type is the type 1 DMRS, orthogonality between 16 DMRS ports may be supported without increasing DMRS overheads, thereby implementing 16-layer orthogonal multi-user pairing, helping reduce inter-layer interference between DMRSs, and obtaining a more accurate channel estimation result.

In this embodiment of this application, after generating the sequence of the demodulation reference signal, the sending device may obtain OCCs by querying a configuration information table of the demodulation reference signal, and map the sequence of the demodulation reference signal to the time-frequency resource based on the OCCs, that is, map the sequence of the demodulation reference signal to the time-frequency resource of the demodulation reference signal.

In some embodiments, a configuration information table of the demodulation reference signal includes a correspondence between a demodulation reference signal port index, a CDM group frequency-domain offset, and an OCC, the OCC includes a frequency-domain OCC and a time-domain OCC, and the frequency-domain OCC includes a first group of OCCs and a second group of OCCs. The sending device may obtain, based on the configuration information table, the first group of OCCs corresponding to the first group of subcarriers and the second group of OCCs corresponding to the second group of subcarriers, to map the sequence of the demodulation reference signal to the time-frequency resource of the demodulation reference signal based on the obtained OCCs.

In some other embodiments, a configuration information table of the demodulation reference signal includes a first configuration information table and a second configuration information table, and demodulation reference signal port indexes included in the first configuration information table and the second configuration information table are different. The first configuration information table includes a correspondence between a demodulation reference signal port index, a CDM group frequency-domain offset, and an OCC, and the OCC includes a frequency-domain OCC and a time-domain OCC. The second configuration information table includes a correspondence between a demodulation reference signal port index, a CDM group frequency-domain offset, and an OCC, where the OCC includes a frequency-domain OCC and a time-domain OCC, and the frequency-domain OCC includes a first group of OCCs and a second group of OCCs. The sending device may obtain, based on the configuration information table, the first group of OCCs corresponding to the first group of subcarriers and the second group of OCCs corresponding to the second group of subcarriers, to map the sequence of the demodulation reference signal to the time-frequency resource of the demodulation reference signal based on the obtained OCCs.

In some embodiments of this application, the sending device may map the sequence of the demodulation reference signal to the time-frequency resource of the demodulation reference signal based on the following formula:

$$\widetilde{\alpha}_{k,l}^{(\widetilde{p}_j,\mu)} = W_f(k' + 2t)W_t(l')r(2n + k')\dots\dots\dots\dots\dots\dots\dots\dots\dots\dots(4)$$

$$k = 4n + 2k' + \Delta$$

k' = 0,1

t = mod(n, 2)

$l = \overline{l} + l'$

n = 0,1,···

j = 0,1,···,v- 1

$\widetilde{\alpha}_{k,l}^{(\widetilde{p}_j,\mu)}$ represents data of the sequence of the demodulation reference signal mapped to an RE (*k*, *l*), where *k* is a subcarrier index, and *l* is a symbol index; $W_f(k' + 2t)$ is a frequency-domain OCC, $W_t(l')$ is a time-domain OCC, and r(2n + k') is an initial sequence of the demodulation reference signal; and Δ is a CDM group frequency-domain offset, $\overline{l}$ is an index of a start symbol of the demodulation reference signal, *l'* is a symbol offset of the demodulation reference signal, and v is a quantity of transmission layers. When t=0, the frequency-domain OCC is a first group of OCCs; and when t=1, the frequency-domain OCC is a second group of OCCs. The first group of OCCs corresponds to the first group of subcarriers, and the second group of OCCs corresponds to the second group of subcarriers.

In Formula (4), the expression $W_f(k' + 2t)$ of the frequency-domain OCC may also be replaced with the following expression: $W_f(k', t)$ , and a mapping manner is the same as the foregoing described mapping manner.

In some embodiments, based on Formula (4), a process in which the sending device maps the sequence of the demodulation reference signal to the time-frequency resource of the demodulation reference signal may include the following steps:

Step 1: The sending device obtains, based on the configuration information table of the demodulation reference signal, a CDM group frequency-domain offset, a frequency-domain OCC, and a time-domain OCC that correspond to an RE (*k, l*).

Step 2: The sending device obtains, based on the obtained CDM group frequency-domain offset, frequency-domain OCC, and time-domain OCC, data $\widetilde{\alpha}_{k,l}^{(\widetilde{p}_j,\mu)}$ of the sequence of the demodulation reference signal mapped to the RE (*k, l*), where the data $\widetilde{\alpha}_{k,l}^{(\widetilde{p}_j,\mu)}$ mapped to the RE (*k, l*) satisfies Formula (4), that is, the sending device may perform processing based on Formula (4) and the obtained CDM group frequency-domain offset, frequency-domain OCC, and time-domain OCC, thereby obtaining the data $\widetilde{\alpha}_{k,l}^{(\widetilde{p}_j,\mu)}$ of the sequence of the demodulation reference signal mapped to the RE (*k, l*).

The following describes an implementation process of this embodiment of this application with reference to Formula (4) that needs to be satisfied in the foregoing mapping process and with reference to the foregoing two different setting manners of the configuration information table of the demodulation reference signal by using a DMRS whose configuration type is the first configuration type (Type 1 DMRS) as an example.

In some embodiments of this application, a configuration information table may be set for a DMRS, where the configuration information table includes 16 DMRS port indexes, and a CDM group frequency-domain offset and an OCC that correspond to each DMRS port index. The frequency-domain OCC includes a first group of OCCs and a second group of OCCs, the first group of OCCs corresponds to the first group of subcarriers, and the second group of OCCs corresponds to the second group of subcarriers. Details may be shown in Table 1.

Table 1 shows an example of a DMRS configuration information table according to an embodiment of this application.

**Table 1: DMRS configuration information for a type 1 DMRS**

| (Parameters for PUSCH DM-RS configuration type 1) | | | | | | | | |
|---|---|---|---|---|---|---|---|---|
| $\widetilde{p}$ | CDM group $\lambda$ | Δ | $w_f(k' + 2t)$ | | | | $w_t(l')$ | |
| | | | $k' = 0$ t=0 | $k' = 1$ t=0 | $k' = 0$ t=1 | $k' = 1$ t=1 | $l' = 0$ | $l' = 1$ |
| 0 | 0 | 0 | +1 | +1 | +1 | +1 | +1 | +1 |
| 1 | 0 | 0 | +1 | -1 | +1 | -1 | +1 | +1 |
| 2 | 1 | 1 | +1 | +1 | +1 | +1 | +1 | +1 |
| 3 | 1 | 1 | +1 | -1 | +1 | -1 | +1 | +1 |

(continued)

| (Parameters for PUSCH DM-RS configuration type 1) | | | | | | | | |
|---|---|---|---|---|---|---|---|---|
| $\tilde{p}$ | CDM group $\lambda$ | $\Delta$ | $w_f(k' + 2t)$ | | | | $w_t(l')$ | |
| | | | $k' = 0$ t=0 | $k' = 1$ t=0 | $k' = 0$ t=1 | $k' = 1$ t=1 | $l' = 0$ | $l' = 1$ |
| 4 | 0 | 0 | +1 | +1 | +1 | +1 | +1 | -1 |
| 5 | 0 | 0 | +1 | -1 | +1 | -1 | +1 | -1 |
| 6 | 1 | 1 | +1 | +1 | +1 | +1 | +1 | -1 |
| 7 | 1 | 1 | +1 | -1 | +1 | -1 | +1 | -1 |
| 8 | 0 | 0 | +1 | +1 | -1 | -1 | +1 | +1 |
| 9 | 0 | 0 | +1 | -1 | -1 | +1 | +1 | +1 |
| 10 | 1 | 1 | +1 | +1 | -1 | -1 | +1 | +1 |
| 11 | 1 | 1 | +1 | -1 | -1 | +1 | +1 | +1 |
| 12 | 0 | 0 | +1 | +1 | -1 | -1 | +1 | -1 |
| 13 | 0 | 0 | +1 | -1 | -1 | +1 | +1 | -1 |
| 14 | 1 | 1 | +1 | +1 | -1 | -1 | +1 | -1 |
| 15 | 1 | 1 | +1 | -1 | -1 | +1 | +1 | -1 |

In Table 1, $\tilde{p}$ represents a DMRS port index, $\lambda$ represents a CDM group index, $\Delta$ represents a CDM group frequency-domain offset (values of the CDM group frequency-domain offset are 0 and 1), $W_f(k' + 2t)$ is a frequency-domain OCC, and $W_t(l')$ is a time-domain OCC. The frequency-domain OCC includes two groups, where a group of OCCs corresponding to t=0 is a first group of OCCs, and a group of OCCs corresponding to t=1 is a second group of OCCs.

In Table 1, DMRS ports whose port indexes are 8 to 15 are ports newly added based on existing ports in this embodiment of this application. Although OCCs corresponding to DMRS ports whose port indexes are 0 to 7 are also extended, extended frequency-domain OCCs (two columns of frequency-domain OCCs corresponding to t=1) are the same as original frequency-domain OCCs (two columns of frequency-domain OCCs corresponding to t=0), so that the OCCs corresponding to the DMRS ports whose port indexes are 0 to 7 in Table 1 are the same as OCCs corresponding to DMRS ports in the original DMRS configuration information table. This indicates that the newly added DMRS ports do not affect use of original DMRS ports, and can be compatible with a receiving device in an original standard.

For example, two symbols are configured. If the sending device configures DMRS ports {p0, p1, p4, p5, p8, p9, p12, p13} in the CDM group 0 for the receiving device, after generating the DMRS sequence, the sending device may query Table 1 based on a DMRS port index to obtain a corresponding OCC, and map the DMRS sequence to a corresponding time-frequency resource based on Formula (4) and the OCC obtained through query.

The time-frequency resource shown in FIG. 4 is used as an example. A sequence of each DMRS port in the CDM group 0 may be mapped to an RE filled with slashes in FIG. 4.

For example, a sequence of a DMRS port p8 is mapped, and an initial symbol index $\bar{l}$ of the DMRS is 2, where $l' = 0,1$ (that is, the DMRS is transmitted on symbols whose indexes are 2 and 3):

When n=0,

$$t = \mod(n, 2) = 0;$$

when k' = 0 and $l'$ = 0, k = 4n + 2k' + $\Delta$ = 0 and $l = \bar{l} + l'$ = 2; it may be obtained by querying Table 1 that $W_f(k' + 2t)$ = 1 and $W_t(l')$ = 1, that is, a frequency-domain OCC and a time-domain OCC of the sequence of the DMRS port p8 on the RE (0, 2) are respectively (1, 1);
when k' = 0 and $l'$ = 1, k = 4n + 2k' + $\Delta$ = 0 and $l = \bar{l} + l'$ = 3; it may be obtained by querying Table 1 that $W_f(k' + 2t)$ = 1 and $W_t(l')$ = 1, that is, a frequency-domain OCC and a time-domain OCC of the sequence of the DMRS port p8 on the RE (0, 3) are respectively (1, 1);
when k' = 1 and $l'$ = 0, k = 4n + 2k' + $\Delta$ = 2 and $l = \bar{l} + l'$ = 2; it may be obtained by querying Table 1 that $W_f(k' +$

2t) = 1 and $W_t(l') = 1$, that is, a frequency-domain OCC and a time-domain OCC of the sequence of the DMRS port p8 on the RE (2, 2) are respectively (1, 1);

when k' = 1 and $l'$ = 1, k = 4n + 2k' + Δ= 2 and $l = \bar{l} + l'$ = 3; it may be obtained by querying Table 1 that $W_f(k' + 2t)$ = 1 and $W_t(l')$ = 1, that is, a frequency-domain OCC and a time-domain OCC of the sequence of the DMRS port p8 on the RE (2, 3) are respectively (1, 1);

a group of frequency-domain OCCs {1, 1, 1, 1} may be obtained based on OCCs used on a first group of subcarriers (whose subcarrier indexes are 0 and 2) in the CDM group 0 and four REs corresponding to a symbol 2 and a symbol 3 for the DMRS port p8.

When n=1,

$$t = \mathrm{mod}(n, 2) = 1;$$

when k' = 0 and $l'$ = 0, k = 4n + 2k' + Δ= 4 and $l = \bar{l} + l'$ = 2; it may be obtained by querying Table 1 that $W_f(k' + 2t)$ = -1 and $W_t(l')$ = 1, that is, a frequency-domain OCC and a time-domain OCC of the sequence of the DMRS port p0 on the RE (4, 2) are respectively (-1, 1);

when k' = 0 and $l'$ = 1, k = 4n + 2k' + Δ= 4 and $l = \bar{l} + l'$ = 3; it may be obtained by querying Table 1 that $W_f(k' + 2t)$ = -1 and $W_t(l')$ = 1, that is, a frequency-domain OCC and a time-domain OCC of the sequence of the DMRS port p0 on the RE (4, 3) are respectively (-1, 1);

when k' = 1 and $l'$ = 0, k = 4n + 2k' + Δ= 6 and $l = \bar{l} + l'$ = 2; it may be obtained by querying Table 1 that $W_f(k' + 2t)$ = -1 and $W_t(l')$ = 1, that is, a frequency-domain OCC and a time-domain OCC of the sequence of the DMRS port p0 on the RE (6, 2) are respectively (-1, 1);

when k' = 1 and $l'$ = 1, k = 4n + 2k' + Δ= 6 and $l = \bar{l} + l'$ = 3; it may be obtained by querying Table 1 that $W_f(k' + 2t)$ = -1 and $W_t(l')$ = 1, that is, a frequency-domain OCC and a time-domain OCC of the sequence of the DMRS port p0 on the RE (6, 3) are respectively (-1, 1);

a group of frequency-domain OCCs {-1, -1, -1, -1} may be obtained based on OCCs used on a second group of subcarriers (whose subcarrier indexes are 4 and 6) in the CDM group 0 and four REs corresponding to a symbol 2 and a symbol 3 for the DMRS port p8.

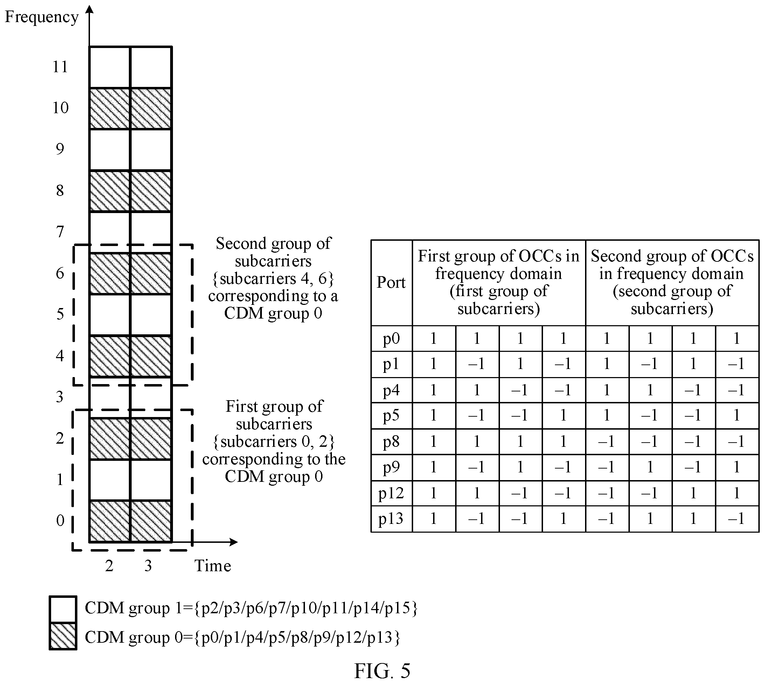

According to the same method, for a sequence of another DMRS port in the CDM group 0, a first group of OCCs used on the first group of subcarriers (whose subcarrier indexes are 0 and 2) and the four REs corresponding to the symbol 2 and the symbol 3, and a second group of OCCs used on the second group of subcarriers (whose subcarrier indexes are 4 and 6) and the four REs corresponding to the symbol 2 and the symbol 3 may be obtained. For the DMRS port p8, the DMRS port p9, the DMRS port p12, and the DMRS port p13 in the CDM group 0, only a first group of OCCs used on the foregoing eight REs, and a second group of OCCs used on the second group of subcarriers and the four REs corresponding to the symbol 2 and the symbol 3 are listed herein. For details, refer to FIG. 5.

As shown in FIG. 5, on the first group of subcarriers (whose subcarrier indexes are 0 and 2) corresponding to the CDM group 0, frequency-domain OCCs of a first group of REs (two REs in frequency domain and two symbols in time domain) corresponding to the port p8 are {1, 1, 1, 1}, and on the second group of subcarriers (whose subcarrier indexes are 4 and 6) corresponding to the CDM group 0, frequency-domain OCCs of the second group of REs corresponding to the port p8 are {-1, -1, -1, -1}. The two groups of OCCs are orthogonal.

On the first group of subcarriers (whose subcarrier indexes are 0 and 2) corresponding to the CDM group 0, frequency-domain OCCs of a first group of REs corresponding to the port p9 are {1, -1, 1, -1}. On the second group of subcarriers (whose subcarrier indexes are 4 and 6) corresponding to the CDM group 0, frequency-domain OCCs of a second group of REs corresponding to the port p9 are {-1, 1, -1, 1}. The two groups of OCCs are orthogonal.

On the first group of subcarriers (whose subcarrier indexes are 0 and 2) corresponding to the CDM group 0, frequency-domain OCCs of a first group of REs corresponding to the port p12 are {1, 1, -1, -1}. On the second group of subcarriers (whose subcarrier indexes are 4 and 6) corresponding to the CDM group 0, frequency-domain OCCs of a second group of REs corresponding to the port p12 are {-1, -1, 1, 1}. The two groups of OCCs are orthogonal.

On the first group of subcarriers (whose subcarrier indexes are 0 and 2) corresponding to the CDM group 0, frequency-domain OCCs of a first group of REs corresponding to the port p13 are {1, -1, -1, 1}. On the second group of subcarriers (whose subcarrier indexes are 4 and 6) corresponding to the CDM group 0, frequency-domain OCCs of a second group of REs corresponding to the port p13 are {-1, 1, 1, -1}. The two groups of OCCs are orthogonal.

In this embodiment of this application, the eight REs corresponding to the first group of subcarriers, the second group of subcarriers, and the two symbols are jointly orthogonalized, and the frequency-domain OCC may be equivalent to an OCC whose length is 8.

OCCs of sequences of DMRS ports {p0, p1, p4, p5} in the CDM group 0 on the foregoing two groups of subcarriers and the eight REs corresponding to the two symbols are consistent with those defined in the current standard. In this way, if the DMRS ports in the CDM group 0 configured by the sending device for the receiving device do not include the ports {p8, p9, p12, p13}, the current DMRS sequence mapping method does not need to be changed. If the DMRS ports in the CDM group 0 configured by the sending device for the receiving device include at least one of the ports {p8, p9, p12, p13}, DMRS mapping is performed in the foregoing manner provided in this embodiment of this application, to ensure that signals of the four newly added DMRS ports are orthogonal to signals of the original four DMRS ports.

In some other embodiments of this application, a first configuration information table and a second configuration information table may be set for a DMRS. The first configuration information table includes eight DMRS port indexes, and a CDM group frequency-domain offset and an OCC that correspond to each DMRS port index. The second configuration information table includes another eight DMRS port indexes, and a CDM group frequency-domain offset and an OCC that correspond to each DMRS port index. In addition, in the second configuration information table, frequency-domain OCCs in the OCCs include a first group of OCCs and a second group of OCCs. The first configuration information table may be shown in Table 2, and the second configuration information table may be shown in Table 3.

Table 2 shows an example of a first configuration information table of a DMRS according to an embodiment of this application.

**Table 2: DMRS configuration information table 1 for a type 1 DMRS**

| (Parameters for PUSCH DM-RS configuration type 1) | | | | | | |
|---|---|---|---|---|---|---|
| $\tilde{p}$ | CDM group $\lambda$ | $\Delta$ | $w_f(k' + 2t)$ | | $w_t(l')$ | |
| | | | $k' = 0$ | $k' = 1$ | $l' = 0$ | $l' = 1$ |
| 0 | 0 | 0 | +1 | +1 | +1 | +1 |
| 1 | 0 | 0 | +1 | -1 | +1 | +1 |
| 2 | 1 | 1 | +1 | +1 | +1 | +1 |
| 3 | 1 | 1 | +1 | -1 | +1 | +1 |
| 4 | 0 | 0 | +1 | +1 | +1 | -1 |
| 5 | 0 | 0 | +1 | -1 | +1 | -1 |
| 6 | 1 | 1 | +1 | +1 | +1 | -1 |
| 7 | 1 | 1 | +1 | -1 | +1 | -1 |

Parameter descriptions in Table 2 are basically the same as those in Table 1, and are not repeated herein.

Table 3 shows an example of a second configuration information table of a DMRS according to an embodiment of this application.

**Table 3: DMRS configuration information table 2 for a type 1 DMRS**

| (Parameters for PUSCH DM-RS configuration type 1) | | | | | | | | |
|---|---|---|---|---|---|---|---|---|
| $\tilde{p}$ | CDM group $\lambda$ | $\Delta$ | $w_f(k' + 2t)$ | | | | $w_t(l')$ | |
| | | | $k' = 0$ t=0 | $k' = 1$ t=0 | $k' = 0$ t=1 | $k' = 1$ t=1 | $l' = 0$ | $l' = 1$ |
| 8 | 0 | 0 | +1 | +1 | -1 | -1 | +1 | +1 |
| 9 | 0 | 0 | +1 | -1 | -1 | +1 | +1 | +1 |
| 10 | 1 | 1 | +1 | +1 | -+1 | -1 | +1 | +1 |
| 11 | 1 | 1 | +1 | -1 | -1 | +1 | +1 | +1 |
| $\tilde{p}$ | CDM group $\lambda$ | $\Delta$ | $w_f(k' + 2t)$ | | | | $w_t(l')$ | |
| | | | $k' = 0$ t=0 | $k' = 1$ t=0 | $k' = 0$ t=1 | $k' = 1$ t= 1 | $l' = 0$ | $l' = 1$ |
| 12 | 0 | 0 | +1 | +1 | -1 | -1 | +1 | -1 |

(continued)

| $\tilde{p}$ | CDM group $\lambda$ | $\Delta$ | $w_f(k'+2t)$ | | | | $w_t(l')$ | |
|---|---|---|---|---|---|---|---|---|
| | | | $k'=0$ $t=0$ | $k'=1$ $t=0$ | $k'=0$ $t=1$ | $k'=1$ $t=1$ | $l'=0$ | $l'=1$ |
| 13 | 0 | 0 | +1 | -1 | -1 | +1 | +1 | -1 |
| 14 | 1 | 1 | +1 | +1 | -1 | -1 | +1 | -1 |
| 15 | 1 | 1 | +1 | -1 | -1 | +1 | +1 | -1 |

Parameter descriptions in Table 3 are basically the same as those in Table 1, and are not repeated herein.

If an index of a DMRS port configured by the sending device for the receiving device is less than 8, a corresponding OCC is obtained based on Table 2, and the DMRS sequence is mapped to a corresponding time-frequency resource based on a conventional DMRS mapping formula and based on the OCC obtained through query.

The conventional DMRS mapping formula is:

$$\tilde{\alpha}_{k,l}^{(\tilde{p}_j,\mu)} = W_f(k')W_t(l')r(2n+k')\dots\dots\dots\dots\dots\dots\dots\dots\dots\dots\dots\dots\dots\dots(5)$$

$$k = 4n + 2k' + \Delta$$

$$k' = 0,1$$

$$l = \bar{l} + l'$$

$$n = 0,1,\cdots$$

$$j = 0,1,\cdots,v-1$$

Meanings of parameters in the foregoing formula are basically the same as those of parameters in Formula 4, and are not repeated herein.

If an index of a DMRS port configured by the sending device for the receiving device is greater than or equal to 8, a corresponding OCC is obtained based on Table 3, and the DMRS sequence is mapped to a corresponding time-frequency resource based on Formula 4 and based on the OCC obtained through query. For a specific implementation, refer to related content in the foregoing embodiment.

In some embodiments of this application, the sending device may further indicate, to the receiving device, a port index of a demodulation reference signal configured for the receiving device. Downlink DMRS transmission is used as an example. Specifically, the sending device may send indication information of a DMRS port index to the terminal device by using downlink control information (downlink control information, DCI).

In this embodiment of this application, a table of a correspondence between demodulation reference signal port index indication information and a demodulation reference signal port may be extended, and corresponding reference signal port index indication information is set for a newly added demodulation reference signal port in this embodiment of this application.

Further, to reduce signaling overheads, in this embodiment of this application, joint coding may be performed on a plurality of demodulation reference signal port indexes, so that indication information of a small quantity of bits indicates the plurality of demodulation reference signal port indexes.

The following uses a DMRS as an example, and uses the first configuration type (Type 1 DMRS) to describe the extended table of a correspondence between DMRS port index indication information and a DMRS port index in this embodiment of this application.

Table 4 shows an example of a table of a correspondence between DMRS port index indication information and a DMRS port index when rank=1 according to an embodiment of this application, where rank=1 indicates that a quantity of transmission layers is 1, and the sending device configures one DMRS port for the receiving device. maxLength indicates a maximum quantity of front-loaded symbols of the DMRS.

**Table 4: Table of a correspondence between DMRS port index indication information and a DMRS port index (Antenna port(s), transform precoder is disabled, dmrs-Type=1, maxLength=2, rank=1)**

| Indication information (Value) | Number of DMRS CDM group(s) without data (Number of DMRS CDM group(s) without data) | DMRS port index (DMRS port(s)) | Number of front-loaded symbols (Number of front-loaded symbols) |
|---|---|---|---|
| 0 | 1 | 0 | 1 |
| 1 | 1 | 1 | 1 |
| 2 | 2 | 0 | 1 |
| 3 | 2 | 1 | 1 |
| 4 | 2 | 2 | 1 |
| 5 | 2 | 3 | 1 |
| 6 | 2 | 0 | 2 |
| 7 | 2 | 1 | 2 |
| 8 | 2 | 2 | 2 |
| 9 | 2 | 3 | 2 |
| 10 | 2 | 4 | 2 |
| 11 | 2 | 5 | 2 |
| 12 | 2 | 6 | 2 |
| 13 | 2 | 7 | 2 |
| 14 | 2 | 8 | 2 |
| 15 | 2 | 9 | 2 |
| 16 | 2 | 10 | 2 |
| 17 | 2 | 11 | 2 |
| 18 | 2 | 12 | 2 |
| 19 | 2 | 13 | 2 |
| 20 | 2 | 14 | 2 |
| 21 | 2 | 15 | 2 |
| 22 to 31 | Reserved (Reserved) | Reserved (Reserved) | Reserved (Reserved) |

Table 4 shows values (value) of port index indication information corresponding to DMRS port indexes 0 to 15, where 14 to 21 are indication information newly added based on original indication information in this embodiment of this application, and respectively indicate DMRS port indexes 8 to 15, and indication information 22 to indication information 31 are reserved. A length of the DMRS port index indication information may be 5 bits.

In this application, another manner of indicating the DMRS port index is not excluded. For example, in some embodiments, an original table of a correspondence between indication information for DMRS port indexes 0 to 7 and the DMRS port indexes may be retained, and a new correspondence table is added based on this table, to provide corresponding DMRS port index indication information for DMRS port indexes 8 to 15. Details may be shown in Table 5. maxLength indicates a maximum quantity of front-loaded symbols of the DMRS.

**Table 5: Table of a correspondence between DMRS port index indication information and a DMRS port index (Antenna port(s), transform precoder is disabled, dmrs-Type=1, maxLength=2, rank=1)**

| Indication information (Value) | Number of DMRS CDM group(s) without data (Number of DMRS CDM group(s) without data) | DMRS port index (DMRS port(s)) | Number of front-loaded symbols (Number of front-loaded symbols) |
|---|---|---|---|
| 0 | 2 | 8 | 2 |

(continued)

| Indication information (Value) | Number of DMRS CDM group(s) without data (Number of DMRS CDM group(s) without data) | DMRS port index (DMRS port(s)) | Number of front-loaded symbols (Number of front-loaded symbols) |
|---|---|---|---|
| 1 | 2 | 9 | 2 |
| 2 | 2 | 10 | 2 |
| 3 | 2 | 11 | 2 |
| 4 | 2 | 12 | 2 |
| 5 | 2 | 13 | 2 |
| 6 | 2 | 14 | 2 |
| 7 | 2 | 15 | 2 |

Table 5 shows values (value) of port index indication information corresponding to DMRS port indexes 8 to 15. A length of the DMRS port index indication information may be 3 bits. Downlink DMRS transmission is used as an example. When an index of a DMRS port configured by the network device for the terminal device is greater than 8, corresponding DMRS port index indication information may be obtained based on Table 5, and the indication information is added to DCI and sent to the terminal device.

Table 6 shows an example of a table of a correspondence between DMRS port index indication information and a DMRS port index when rank=2 according to an embodiment of this application, where rank=2 indicates that a quantity of transmission layers is 2, and the sending device configures two DMRS ports for the receiving device. max-Length indicates a maximum quantity of front-loaded symbols of the DMRS.

**Table 6: Table of a correspondence between DMRS port index indication information and a DMRS port index (Antenna port(s), transform precoder is disabled, dmrs-Type=1, maxLength=2, rank=2)**

| Indication information (Value) | Number of DMRS CDM group(s) without data (Number of DMRS CDM group(s) without data) | DMRS port index (DMRS port(s)) | Number of front-loaded symbols (Number of front-loaded symbols) |
|---|---|---|---|
| 0 | 1 | 0.1 | 1 |
| 1 | 2 | 0.1 | 1 |
| 2 | 2 | 2.3 | 1 |
| 3 | 2 | 0.2 | 1 |
| 4 | 2 | 0.1 | 2 |
| 5 | 2 | 2.3 | 2 |
| 6 | 2 | 4.5 | 2 |
| 7 | 2 | 6.7 | 2 |
| 8 | 2 | 0.4 | 2 |
| 9 | 2 | 2.6 | 2 |
| 10 | 2 | 8.9 | 2 |
| 11 | 2 | 10.11 | 2 |
| 12 | 2 | 12.13 | 2 |
| 13 | 2 | 14.15 | 2 |
| 14 | 2 | 8.12 | 2 |
| 15 | 2 | 10.14 | 2 |

In Table 6, indication information whose values are 10 to 15 is indication information newly added based on original indication information in this embodiment of this application, and indicates a combination of ports whose port indexes are greater than or equal to 8. A length of the DMRS port index indication information may be 4 bits.

The DMRS port combination shown in Table 6 is merely an example, and another possible port combination is not excluded, for example, a combination of DMRS port indexes 8 and 13, or a combination of DMRS port indexes 10 and 15.

In this application, another manner of indicating the DMRS port index is not excluded. For example, in some embodiments, an original table of a correspondence between DMRS port index indication information for DMRS port indexes 0 to 7 and the DMRS port indexes may be retained, and a new correspondence table is added based on this table, to provide corresponding DMRS port index indication information for DMRS port indexes 8 to 15. Details may be shown in Table 7. maxLength indicates a maximum quantity of front-loaded symbols of the DMRS.

**Table 7: Table of a correspondence between DMRS port index indication information and a DMRS port index (Antenna port(s), transform precoder is disabled, dmrs-Type=1, maxLength=2, rank=2)**

| Indication information (Value) | Number of DMRS CDM group(s) without data (Number of DMRS CDM group(s) without data) | DMRS port index (DMRS port(s)) | Number of front-loaded symbols (Number of front-loaded symbols) |
|---|---|---|---|
| 0 | 2 | 8.9 | 2 |
| 1 | 2 | 10.11 | 2 |
| 2 | 2 | 12.13 | 2 |
| 3 | 2 | 14.15 | 2 |
| 4 | 2 | 8.12 | 2 |
| 5 | 2 | 10.14 | 2 |
| 6 and 7 | Reserved (Reserved) | Reserved (Reserved) | Reserved (Reserved) |

Table 7 provides values of corresponding DMRS port index indication information for various port combinations of port indexes 8 to 15. Downlink DMRS transmission is used as an example. The network device may indicate various combination forms of DMRS port indexes 0 to 15 in the DCI by using three bits. In some cases, the network device may indicate only some DMRS port indexes in the DCI. For example, when DMRS port indexes currently configured by the network device for the terminal are 0 to 3, 2-bit indication information may indicate DMRS port indexes configured for the terminal device.

Table 8 shows an example of a table of a correspondence between DMRS port index indication information and a DMRS port index when rank=3 according to an embodiment of this application, where rank=3 indicates that a quantity of transmission layers is 3, and the sending device configures three DMRS ports for the receiving device. maxLength indicates a maximum quantity of front-loaded symbols of the DMRS.

**Table 8: Table of a correspondence between DMRS port index indication information and a DMRS port index (Antenna port(s), transform precoder is disabled, dmrs-Type=1, maxLength=2, rank=3)**

| Indication information (Value) | Number of DMRS CDM group(s) without data (Number of DMRS CDM group(s) without data) | DMRS port index (DMRS port(s)) | Number of front-loaded symbols (Number of front-loaded symbols) |
|---|---|---|---|
| 0 | 2 | 0 to 2 | 1 |
| 1 | 2 | 0, 1, 4 | 2 |
| 2 | 2 | 2, 3, 6 | 2 |
| 3 | 2 | 8, 9, 12 | 2 |
| 4 | 2 | 10, 11, 14 | 2 |
| 5 | 2 | 8, 9, 10 | 1 |
| 6 and 15 | Reserved (Reserved) | Reserved (Reserved) | Reserved (Reserved) |

In Table 8, indication information whose values are 3 to 4 is indication information newly added based on original indication information in this embodiment of this application, and indicates a combination of ports whose port indexes are greater than or equal to 8. A length of the DMRS port index indication information may be 4 bits.

In some other embodiments, when rank=3, another port combination manner may also be used, for example, as shown in Table 9. maxLength indicates a maximum quantity of front-loaded symbols of the DMRS.

**Table 9: Table of a correspondence between DMRS port index indication information and a DMRS port index (Antenna port(s), transform precoder is disabled, dmrs-Type=1, maxLength=2, rank=3)**

| Indication information (Value) | Number of DMRS CDM group(s) without data (Number of DMRS CDM group(s) without data) | DMRS port index (DMRS port(s)) | Number of front-loaded symbols (Number of front-loaded symbols) |
|---|---|---|---|
| 0 | 2 | 0 to 2 | 1 |
| 1 | 2 | 0, 1, 4 | 2 |
| 2 | 2 | 2, 3, 6 | 2 |
| 3 | 2 | 8, 9, 12 | 2 |
| 4 | 2 | 10, 11, 14 | 2 |
| 5 | 2 | 8, 9, 14 | 2 |
| 6 | 2 | 10, 11, 13 | 2 |
| 7 | 2 | 8, 9, 13 | 2 |
| 8 and 15 | Reserved (Reserved) | Reserved (Reserved) | Reserved (Reserved) |

In this application, another manner of indicating the DMRS port index is not excluded. For example, in some embodiments, an original table of a correspondence between DMRS port index indication information for DMRS port indexes 0 to 7 and the DMRS port indexes may be retained, and a new correspondence table is added based on this table, to provide corresponding DMRS port index indication information for DMRS port indexes 8 to 15. Details may be shown in Table 10. maxLength indicates a maximum quantity of front-loaded symbols of the DMRS.

**Table 10: Table of a correspondence between DMRS port index indication information and a DMRS port index (Antenna port(s), transform precoder is disabled, dmrs-Type=1, maxLength=2, rank=3)**

| Indication information (Value) | Number of DMRS CDM group(s) without data (Number of DMRS CDM group(s) without data) | DMRS port index (DMRS port(s)) | Number of front-loaded symbols (Number of front-loaded symbols) |
|---|---|---|---|
| 0 | 2 | 8, 9, 12 | 2 |
| 1 | 2 | 10, 11, 14 | 2 |

Table 11 shows an example of a table of a correspondence between DMRS port index indication information and a DMRS port index when rank=4 according to an embodiment of this application, where rank=4 indicates that a quantity of transmission layers is 4, and the sending device configures four DMRS ports for the receiving device. maxLength indicates a maximum quantity of front-loaded symbols of the DMRS.

**Table 11: Table of a correspondence between DMRS port index indication information and a DMRS port index (Antenna port(s), transform precoder is disabled, dmrs-Type=1, maxLength=2, rank=4)**

| Indication information (Value) | Number of DMRS CDM group(s) without data (Number of DMRS CDM group(s) without data) | DMRS port index (DMRS port(s)) | Number of front-loaded symbols (Number of front-loaded symbols) |
|---|---|---|---|
| 0 | 2 | 0 to 3 | 1 |
| 1 | 2 | 0, 1, 4.5 | 2 |
| 2 | 2 | 2, 3, 6.7 | 2 |
| 3 | 2 | 0, 2, 4.6 | 2 |
| 4 | 2 | 8, 9, 12.13 | 2 |

(continued)

| Indication information (Value) | Number of DMRS CDM group(s) without data (Number of DMRS CDM group(s) without data) | DMRS port index (DMRS port(s)) | Number of front-loaded symbols (Number of front-loaded symbols) |
|---|---|---|---|
| 5 | 2 | 10, 11, 14.15 | 2 |
| 6 and 15 | Reserved (Reserved) | Reserved (Reserved) | Reserved (Reserved) |

The DMRS port index combination manner shown in Table 11 is merely an example. In some other embodiments, when rank=4, another DMRS port index combination manner may also be used.

In some embodiments, an original table of a correspondence between DMRS port index indication information for DMRS port indexes 0 to 7 and the DMRS port indexes may be retained, and a new correspondence table is added based on this table, to provide corresponding DMRS port index indication information for DMRS port indexes 8 to 15. Details may be shown in Table 12. maxLength indicates a maximum quantity of front-loaded symbols of the DMRS.

**Table 12: Table of a correspondence between DMRS port index indication information and a DMRS port index (Antenna port(s), transform precoder is disabled, dmrs-Type=1, maxLength=2, rank=4)**

| Indication information (Value) | Number of DMRS CDM group(s) without data (Number of DMRS CDM group(s) without data) | DMRS port index (DMRS port(s)) | Number of front-loaded symbols (Number of front-loaded symbols) |
|---|---|---|---|
| 0 | 2 | 8, 9, 12.13 | 2 |
| 1 | 2 | 10, 11, 14.15 | 2 |

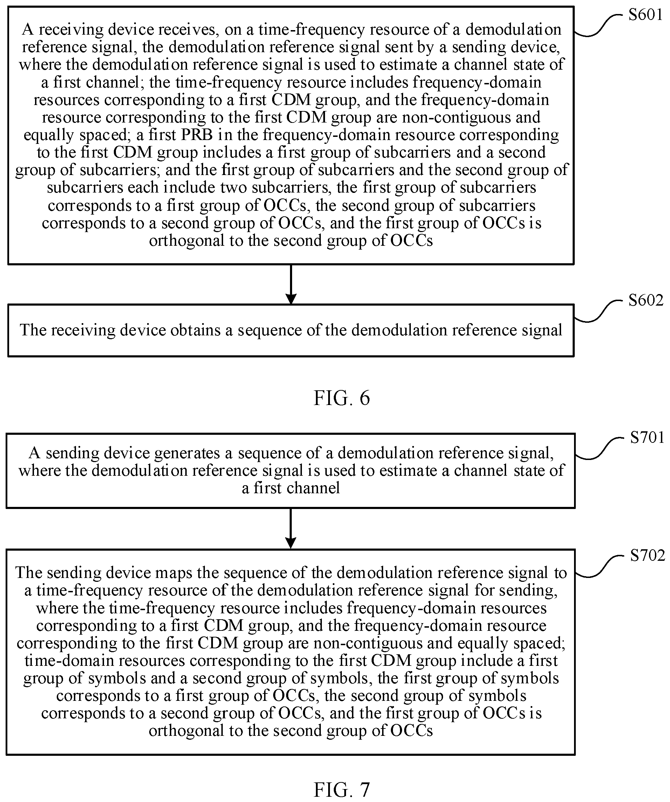

FIG. 6 is a flowchart of a signal transmission method implemented on a receiving device side according to an embodiment of this application. The method may be applied to the network architecture shown in FIG. 1, or certainly may be applied to another network architecture. This is not limited in this application. When the method is applied to the network architecture shown in FIG. 1, for downlink demodulation reference signal transmission, a sending device in the method may be the network device 101 in FIG. 1, and a terminal device in the method may be the terminal device (102a to 102d) in FIG. 1. For uplink demodulation reference signal transmission, a sending device in the method may be the terminal device (102a to 102d) in FIG. 1, and a receiving device in the method may be the network device 101 in FIG. 1.

Refer to FIG. 6. The method may include the following processing procedure.

S601: A receiving device receives, on a time-frequency resource of a demodulation reference signal, the demodulation reference signal sent by a sending device.

For related descriptions of the demodulation reference signal and sending of the demodulation reference signal by the sending device, refer to related content in FIG. 3.

S602: The receiving device obtains a sequence of the demodulation reference signal.

In some embodiments, a configuration information table of the demodulation reference signal is configured in the receiving device. For related descriptions of the configuration information table, refer to related descriptions in the procedure in FIG. 3. The receiving device may process the received demodulation reference signal based on the configuration information table of the demodulation reference signal, to obtain a sequence of the demodulation reference signal. Specifically, the following steps may be included:

Step 1: The receiving device obtains, based on the configuration information table of the demodulation reference signal, a CDM group frequency-domain offset, a frequency-domain OCC, and a time-domain OCC that correspond to a first RE $(k, l)$, where the first RE $(k, l)$ has a subcarrier index of $k$ and a symbol index of $l$ in the time-frequency resource.

Step 2: The receiving device obtains, based on the CDM group frequency-domain offset, the frequency-domain OCC, and the time-domain OCC, data $\widetilde{\alpha}_{k,l}^{(\widetilde{p}_j,\mu)}$ of the demodulation reference signal on the first RE $(k, l)$, where the data $\widetilde{\alpha}_{k,l}^{(\widetilde{p}_j,\mu)}$ mapped to the first RE $(k, l)$ satisfies Formula (4).

In some embodiments, the receiving device receives indication information that is of a demodulation reference signal port index in a first CDM group and that is sent by the sending device, obtains, based on the indication information of the demodulation reference signal port index, the demodulation reference signal port index allocated by the sending device, queries the configuration information table of the demodulation reference signal based on the demodulation reference signal port index and the CDM group to which the demodulation reference signal port index belongs, to obtain an OCC code, and further calculates the sequence of the demodulation reference signal based on a mapping formula of the demodulation reference signal.

According to the foregoing embodiment of this application, a quantity of orthogonal DMRS ports may be increased without additionally increasing DMRS overheads. In addition, the new receiving device provided in this application may be compatible with an existing receiving device, that is, multi-user pairing may be performed between the new receiving device provided in this application and a receiving device that supports only an existing standard capability, and the existing receiving device does not need to be updated in terms of hardware and software. The expansion of DMRS orthogonal ports enables multi-user orthogonal pairing at more layers in the uplink or downlink, improving a system capacity.

Embodiments of this application further provide a signal transmission method and an apparatus, to increase a quantity of orthogonal demodulation reference signal ports that can be supported by a system without additionally increasing demodulation reference signal overheads. The method and an apparatus are based on a same inventive concept. Because the method and the apparatus have a similar problem-resolving principle, for implementations of the apparatus and the method, refer to each other, and no repeated description is provided.

FIG. 7 is a flowchart of a signal transmission method implemented on a sending device side according to an embodiment of this application. The method may be applied to the network architecture shown in FIG. 1, or certainly may be applied to another network architecture. This is not limited in this application. When the method is applied to the network architecture shown in FIG. 1, for downlink demodulation reference signal transmission, a sending device in the method may be the network device 101 in FIG. 1, and a receiving device in the method may be the terminal device (102a to 102d) in FIG. 1. For uplink demodulation reference signal transmission, a sending device in the method may be the terminal device (102a to 102d) in FIG. 1, and a receiving device in the method may be the network device 101 in FIG. 1.

Refer to FIG. 7. The method may include the following processing procedure.

S701: A sending device generates a sequence of a demodulation reference signal.

The demodulation reference signal is used to estimate a channel state of a first channel. That the demodulation reference signal is used to estimate a channel state of a first channel may be understood as that the demodulation reference signal is a demodulation reference signal of the first channel. For downlink demodulation reference signal transmission, the first channel carries uplink data; and for uplink demodulation reference signal transmission, the first channel carries downlink data.

Specifically, the demodulation reference signal may be a DMRS of downlink transmission, and is used to perform channel estimation on a PUSCH. Alternatively, the demodulation reference signal may be a DMRS of uplink transmission, and is used to perform channel estimation on a PDSCH.

More specifically, the DMRS may be a DMRS based on a CP-OFDM waveform, a DMRS configuration type is a first configuration type (Type 1 DMRS), and a time-domain position of the DMRS is the first one or two symbols in one slot (namely, a front-loaded DMRS).

A specific implementation method for generating the sequence of the demodulation reference signal by the sending device is basically the same as related content in S301 in FIG. 3, and details are not described herein again.

S702: The sending device maps the sequence of the demodulation reference signal to a time-frequency resource of the demodulation reference signal for sending.

The time-frequency resource to which the sequence of the demodulation reference signal is mapped include frequency-domain resources corresponding to a first CDM group.

The frequency-domain resources corresponding to the first CDM group are non-contiguous and equally spaced. For an arrangement manner of a frequency-domain resource corresponding to one CDM group, refer to related content in S302 in FIG. 3.

Time-domain resources corresponding to the first CDM group include a first group of symbols and a second group of symbols, the first group of symbols corresponds to a first group of OCCs, the second group of symbols corresponds to a second group of OCCs, and the first group of OCCs is orthogonal to the second group of OCCs.

In some embodiments, the first group of OCCs and the second group of OCCs are time-domain OCCs, and in some other embodiments, the first group of OCCs and the second group of OCCs are frequency-domain OCCs.

The demodulation reference signal type is associated with a time domain in which the demodulation reference signal is located. Based on different time-domain positions of the demodulation reference signal, the demodulation reference signal may include two types: a front-loaded (front-loaded) demodulation reference signal and an additional (additional) demodulation reference signal. The time-domain position of the front-loaded demodulation reference signal is first several symbols in a slot, for example, first two symbols in a first slot in a subframe. The time-domain position of the additional demodulation reference signal is several symbols after the time-domain position of the front-loaded demodulation reference signal, for example, two symbols in a second slot in a subframe. The first group of symbols may include symbols occupied by the front-loaded demodulation reference signal, and the second group of symbols may include symbols occupied by the additional demodulation reference signal. For ease of description, in this embodiment of this application, the front-loaded demodulation reference signal type is referred to as a first demodulation reference signal type, the additional demodulation reference signal type is referred to as a second demodulation reference signal type, the first demodulation reference signal type corresponds to the first group of symbols, and the second demodulation reference signal type corresponds to the second group of symbols.

In some embodiments, the first group of symbols and the second group of symbols include a same quantity of symbols. For example, the first group of symbols and the second group of symbols each include two consecutive symbols.

In some embodiments of this application, a maximum quantity of demodulation reference signal ports included in the first CDM group is at least 4N, and N is a quantity of symbols included in the first group of symbols or the second group of symbols. For example, if two front-loaded symbols are configured for the demodulation reference signal, each CDM group may include a maximum of eight demodulation reference signal ports. In this way, two CDM groups may support a maximum of 16 demodulation reference signal ports.

According to the foregoing embodiment, a DMRS whose configuration type is the first configuration type (Type 1 DMRS) is used as an example, front-loaded symbols of the DMRS are two symbols in a first slot, and additional symbols are two symbols in a second slot. In this case, in some embodiments of this application, a time-frequency resource position of the DMRS may be shown in FIG. 7.

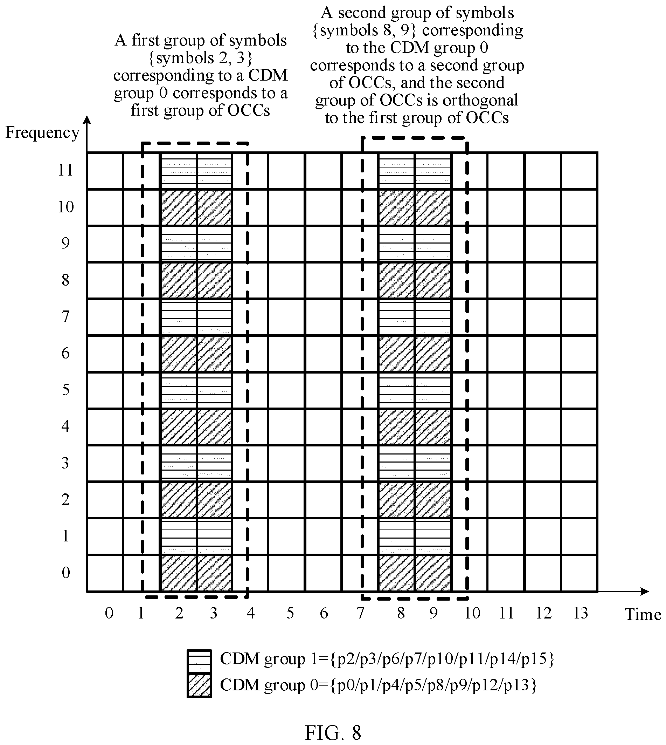

As shown in FIG. 8, when two front-loaded symbols and two additional symbols are configured, a first group of symbols corresponding to a CDM group 0 include symbols {2, 3, 8, 9}. The symbols {2, 3} form the first group of symbols, and the symbols {8, 9} form the second group of symbols. The first group of symbols corresponds to a first group of OCCs, the second group of symbols corresponds to a second group of OCCs, and the first group of OCCs is orthogonal to the second group of OCCs.

A first group of symbols corresponding to a CDM group 1 include symbols {2, 3, 8, 9}. The symbols {2, 3} form the first group of symbols, and the symbols {8, 9} form the second group of symbols. The first group of symbols corresponds to a first group of OCCs, the second group of symbols corresponds to a second group of OCCs, and the first group of OCCs is orthogonal to the second group of OCCs.

It should be noted that, in FIG. 8, when two front-loaded symbols and two additional symbols are configured for DMRS transmission, only an example in which the CDM group 0 includes DMRS ports {p0, p1, p4, p5, p8, p9, p12, p13} and the CDM group 1 includes DMRS ports {p2, p3, p6, p7, p10, p11, p14, p15} is used for description. In some other embodiments, a combination of ports included in the CDM group 0 and the CDM group 1 may also be another case. For example, the CDM group 0 includes DMRS ports {p0, p1, p4, p5, p10, p11, p14, p15}, and the CDM group 1 includes DMRS ports {p2, p3, p6, p7, p8, p9, p12, p13}. Details are not listed one by one herein.

It should be further noted that a symbol position used to transmit the DMRS is configurable, and is not limited to the symbol position shown in FIG. 7. For example, the front-loaded symbol may be configured on the first OFDM symbol and the second OFDM symbol.

It can be learned from the foregoing embodiment that, in this embodiment of this application, time-frequency resource overheads of the demodulation reference signal are not additionally increased. Instead, symbols in a time-domain resource corresponding to one CDM group are divided into a first group of symbols and a second group of symbols. In addition, the first group of symbols corresponds to a first group of OCCs, the second group of symbols corresponds to a second group of OCCs, and the first group of OCCs and the second group of OCCs are orthogonal, so that a quantity of demodulation reference signal ports that are orthogonal to each other in one CDM group can be increased. In this way, a quantity of orthogonal demodulation reference signal ports that can be supported by the system is increased.

When the foregoing embodiment of this application is applied to the DMRS whose configuration type is the type 1 DMRS, orthogonality between 16 DMRS ports may be supported without increasing DMRS overheads, thereby implementing 16-layer orthogonal multi-user pairing, helping reduce inter-layer interference between DMRSs, and obtaining a more accurate channel estimation result. The foregoing embodiment is applicable to a scenario in which channel time-variation is relatively slow.

In this embodiment of this application, after generating the sequence of the demodulation reference signal, the sending device may obtain OCCs by querying a configuration information table of the demodulation reference signal, and map the sequence of the demodulation reference signal to the time-frequency resource based on the OCCs, that is, map the sequence of the demodulation reference signal to the time-frequency resource of the demodulation reference signal.

In some embodiments, the first group of OCCs and the second group of OCCs are time-domain OCCs. a configuration information table of the demodulation reference signal includes a correspondence between a demodulation reference signal type, a demodulation reference signal port index, a CDM group frequency-domain offset, and an OCC, the OCC includes a frequency-domain OCC and a time-domain OCC, the time-domain OCC includes a first group of OCCs and a second group of OCCs, and the first group of OCCs and the second group of OCCs correspond to different DMRS types. Specifically, the first group of OCCs corresponds to a first demodulation reference signal type, the second group of OCCs corresponds to a second demodulation reference signal type, the first demodulation reference signal type corresponds to the first group of symbols, and the second demodulation reference signal type corresponds to the second group of symbols. The demodulation reference signal type includes a front-loaded demodulation reference signal and an additional demodulation reference signal. The sending device may obtain, based on the configuration information table and the demodulation reference signal type, the first group of OCCs corresponding to the first group of symbols and the second group of OCCs corresponding to the second group of symbols, to map the sequence of the demodulation reference signal to the time-frequency resource of the demodulation reference signal based on the obtained OCCs.

In some other embodiments, the first group of OCCs and the second group of OCCs are time-domain OCCs. The configuration information table of the demodulation reference signal includes a first configuration information table and a second configuration information table. The first configuration information table and the second configuration information table correspond to different demodulation reference signal types. Specifically, the first configuration information table corresponds to the first demodulation reference signal type, and the second configuration information table corresponds to the second demodulation reference signal type. The demodulation reference signal type includes a front-loaded demodulation reference signal type and an additional demodulation reference signal type. The first configuration information table includes a correspondence between a demodulation reference signal port index, a CDM group frequency-domain offset, and an OCC, the OCC includes a frequency-domain OCC and a time-domain OCC, and the time-domain OCC is the first group of OCCs. The second configuration information table includes a correspondence between a demodulation reference signal port index, a CDM group frequency-domain offset, and an OCC, where the OCC includes a frequency-domain OCC and a time-domain OCC, and the time-domain OCC is the second group of OCCs.

In some embodiments of this application, when the first group of OCCs and the second group of OCCs are time-domain OCCs, the sending device may map the sequence of the demodulation reference signal to the time-frequency resource of the demodulation reference signal based on the following formula:

$$\widetilde{\alpha}_{k,l}^{(\widetilde{p}_j,\mu)} = W_f(k')W_t(l',s)r(2n + k') \dots\dots\dots\dots\dots\dots\dots\dots\dots\dots\dots\dots (6)$$

k = 4n + 2k' + Δ

k' = 0,1

s = 0,1

$l = \overline{l} + l'$

n = 0,1,⋯

j = 0,1,⋯,v - 1

$\widetilde{\alpha}_{k,l}^{(\widetilde{p}_j,\mu)}$ represents data of the sequence of the demodulation reference signal mapped to an RE *(k, l)*, where *k* is a subcarrier index, and *l* is a symbol index; $W_f(k')$ is a frequency-domain OCC, $W_t(l',s)$ is a time-domain OCC, and r(2n + k') is an initial sequence of the demodulation reference signal; and Δ is a CDM group frequency-domain offset, $\overline{l}$ is an index of a start symbol of the demodulation reference signal, *l'* is a symbol offset of the demodulation reference signal, v is a quantity of transmission layers, and s is used to identify a DMRS type, where when s=0, it indicates a front-loaded DMRS, and a time-domain OCC is a first group of OCCs; and when s=1, it indicates an additional DMRS, and a time-domain OCC is a second group of OCCs.

In some embodiments, the first group of OCCs and the second group of OCCs are frequency-domain OCCs. A configuration information table of the demodulation reference signal includes a correspondence between a demodulation reference signal type, a demodulation reference signal port index, a CDM group frequency-domain offset, and an OCC, the OCC includes a frequency-domain OCC and a time-domain OCC, the frequency-domain OCC includes a first group of OCCs and a second group of OCCs, and the first group of OCCs and the second group of OCCs correspond to different demodulation reference signal types. Specifically, the first group of OCCs corresponds to a first demodulation reference signal type, the second group of OCCs corresponds to a second demodulation reference signal type, the first demodulation reference signal type corresponds to the first group of symbols, and the second demodulation reference signal type corresponds to the second group of symbols. The demodulation reference signal type includes a front-loaded demodulation reference signal and an additional demodulation reference signal. The sending device may obtain, based on the configuration information table and the demodulation reference signal type, the first group of OCCs corresponding to the first group of symbols and the second group of OCCs corresponding to the second group of symbols, to map the sequence of the demodulation reference signal to the time-frequency resource of the demodulation reference signal based on the obtained OCCs.

In some other embodiments, the first group of OCCs and the second group of OCCs are time-domain OCCs. The configuration information table of the demodulation reference signal includes a first configuration information table and a second configuration information table. The first configuration information table and the second configuration information table correspond to different demodulation reference signal types. The first configuration information table corresponds to the first demodulation reference signal type, and the second configuration information table corresponds to the second demodulation reference signal type. The demodulation reference signal type includes a front-loaded demodulation reference signal and an additional demodulation reference signal. The first configuration information table includes a correspondence between a demodulation reference signal port index, a CDM group frequency-domain offset, and an OCC, the OCC includes a frequency-domain OCC and a time-domain OCC, and the frequency-domain OCC is the first group of OCCs. The second configuration information table includes a correspondence between a demodulation reference signal port index, a CDM group frequency-domain offset, and an OCC, where the OCC includes a frequency-domain OCC and a time-domain OCC, and the frequency-domain OCC is the second group of OCCs.

In some embodiments of this application, when the first group of OCCs and the second group of OCCs are frequency-domain OCCs, the sending device may map the sequence of the demodulation reference signal to the time-frequency resource of the demodulation reference signal based on the following formula:

$$\widetilde{\alpha}_{k,l}^{(\widetilde{p}_j,\mu)} = W_f(k',s)W_t(l')r(2n+k')\dots\dots\dots\dots\dots\dots\dots\dots\dots\dots\dots\dots\dots(7)$$

$k = 4n + 2k' + \Delta$

$k' = 0,1$

$s = 0,1$

$l = \overline{l} + l'$

$n = 0,1,\cdots$

$j = 0,1,\cdots, v-1$

$\widetilde{\alpha}_{k,l}^{(\widetilde{p}_j,\mu)}$ represents data of the sequence of the demodulation reference signal mapped to an RE *(k, l)*, where *k* is a subcarrier index, and *l* is a symbol index; $W_f(k')$ is a frequency-domain OCC, $W_t(l',s)$ is a time-domain OCC, and $r(2n + k')$ is an initial sequence of the demodulation reference signal; and $\Delta$ is a CDM group frequency-domain offset, $\overline{l}$ is an index of a start symbol of the demodulation reference signal, *l'* is a symbol offset of the demodulation reference signal, v is a quantity of transmission layers, and s is used to identify a DMRS type, where when s=0, it indicates a front-loaded DMRS, and a frequency-domain OCC is a first group of OCCs; and when s=1, it indicates an additional DMRS, and a frequency-domain OCC is a second group of OCCs.

In some embodiments, based on Formula (6) or Formula (7), a process in which the sending device maps the sequence of the demodulation reference signal to the time-frequency resource of the demodulation reference signal may include the following steps:

Step 1: The sending device obtains, based on the configuration information table of the demodulation reference signal, a CDM group frequency-domain offset, a frequency-domain OCC, and a time-domain OCC that correspond to an RE *(k, l)*.

Step 2: The sending device obtains, based on the obtained CDM group frequency-domain offset, frequency-domain OCC, and time-domain OCC, data $\widetilde{\alpha}_{k,l}^{(\widetilde{p}_j,\mu)}$ of the sequence of the demodulation reference signal mapped to the RE *(k, l)*, where the data $\widetilde{\alpha}_{k,l}^{(\widetilde{p}_j,\mu)}$ mapped to the RE *(k, l)* satisfies Formula (6) or Formula (7), that is, the sending device may perform processing based on Formula (6) or Formula (7) and the obtained CDM group frequency-domain offset, frequency-domain OCC, and time-domain OCC, thereby obtaining the data $\tilde{\alpha}_{k,l}^{(\tilde{p}_j,\mu)}$ of the sequence of the demodulation reference signal mapped to the RE *(k, l)*.

The following describes an implementation process of this embodiment of this application with reference to Formula (6) that needs to be satisfied in the foregoing mapping process and with reference to the foregoing two different setting manners of the configuration information table of the demodulation reference signal by using a DMRS whose configuration type is the first configuration type (Type 1 DMRS) as an example.

In some embodiments of this application, a configuration information table may be set for a DMRS, where the configuration information table includes 16 DMRS port indexes, and a CDM group frequency-domain offset and an OCC that correspond to each DMRS port index. The time-domain OCC includes a first group of OCCs and a second group of OCCs, the first group of OCCs corresponds to the first group of symbols and is used for a front-loaded DMRS, and the second group of OCCs corresponds to the second group of symbols and is used for an additional DMRS. Details may be shown in Table 13.

Table 13 shows an example of a DMRS configuration information table according to an embodiment of this application.

**Table 13: DMRS configuration information for a type 1 DMRS**

| (Parameters for PUSCH DM-RS configuration type 1 for DMRS) | | | | | | | | |
|---|---|---|---|---|---|---|---|---|
| $\tilde{p}$ | CDM group $\lambda$ | $\Delta$ | $w_f(k')$ | | $w_t(l',s)$ | | | |
| | | | $k'=0$ | $k'=1$ | $l'=0$ $s=0$ | $l'=1$ $s=0$ | $l'=0$ $s=1$ | $l'=1$ $s=1$ |
| 0 | 0 | 0 | +1 | +1 | +1 | +1 | +1 | +1 |
| 1 | 0 | 0 | +1 | -1 | +1 | +1 | +1 | +1 |
| 2 | 1 | 1 | +1 | +1 | +1 | +1 | +1 | +1 |
| 3 | 1 | 1 | +1 | -1 | +1 | +1 | +1 | +1 |
| 4 | 0 | 0 | +1 | +1 | +1 | -1 | +1 | -1 |
| 5 | 0 | 0 | +1 | -1 | +1 | -1 | +1 | -1 |
| 6 | 1 | 1 | +1 | +1 | +1 | -1 | +1 | -1 |
| 7 | 1 | 1 | +1 | -1 | +1 | -1 | +1 | -1 |
| 8 | 0 | 0 | +1 | +1 | +1 | +1 | -1 | -1 |
| 9 | 0 | 0 | +1 | -1 | +1 | +1 | -1 | -1 |
| 10 | 1 | 1 | +1 | +1 | +1 | +1 | -1 | -1 |
| 11 | 1 | 1 | +1 | -1 | +1 | +1 | -1 | -1 |
| 12 | 0 | 0 | +1 | +1 | +1 | -1 | -1 | +1 |
| 13 | 0 | 0 | +1 | -1 | +1 | -1 | -1 | +1 |
| 14 | 1 | 1 | +1 | +1 | +1 | -1 | -1 | +1 |
| 15 | 1 | 1 | +1 | -1 | +1 | -1 | -1 | +1 |

In Table 13, $\tilde{p}$ represents a DMRS port index, $\lambda$ represents a CDM group index, $\Delta$ represents a CDM group frequency-domain offset (values of the CDM group frequency-domain offset are 0 and 1), $W_f(k')$ is a frequency-domain OCC, and $W_t(l',s)$ is a time-domain OCC. The time-domain OCC includes two groups, where a group of OCCs corresponding to s=0 is a first group of OCCs, and a group of OCCs corresponding to s=1 is a second group of OCCs.

In Table 13, DMRS ports whose port indexes are 8 to 15 are ports newly added based on existing ports in this embodiment of this application. Although OCCs corresponding to DMRS ports whose port indexes are 0 to 7 are also extended, extended time-domain OCCs (two columns of time-domain OCCs corresponding to s=1) are the same as original time-domain OCCs (two columns of time-domain OCCs corresponding to s=0), so that the OCCs corresponding to the DMRS ports whose port indexes are 0 to 7 in Table 13 are the same as OCCs corresponding to DMRS ports in the original DMRS configuration information table.

For example, two symbols are configured. If the sending device configures DMRS ports {p0, p1, p4, p5, p10, p11, p14, p15} in the CDM group 0 for the receiving device, after generating the DMRS sequence, the sending device may query Table 13 based on a DMRS port index to obtain a corresponding OCC, and map the DMRS sequence to a corresponding time-frequency resource based on Formula (6) and the OCC obtained through query.

The time-frequency resource shown in FIG. 7 is used as an example. A sequence of each DMRS port in the CDM group 0 may be mapped to an RE filled with slashes in FIG. 7.

For example, a sequence of a DMRS port p8 is mapped, and an initial symbol index $\overline{l}$ of the DMRS is 2, where $l' = 0, 1$, a front-loaded DMRS is transmitted on symbols 2 and 3, and an additional DMRS is transmitted on symbols 8 and 9.

When s=0, a mapping status of a front-loaded DMRS on the DMRS port p8 is:

when k' = 0 and $l'$ = 0, k = 4n + 2k' + $\Delta$= 0 and $l = \overline{l} + l'$ = 2; it may be obtained by querying Table 13 that $W_f(k')$ = 1 and $W_t(l',s)$ = 1, that is, a frequency-domain OCC and a time-domain OCC of the sequence of the DMRS port p8 on the RE (0, 2) are respectively (1, 1);

when k' = 0 and $l'$ = 1, k = 4n + 2k' + $\Delta$= 0 and $l = \overline{l} + l'$ = 3; it may be obtained by querying Table 13 that $W_f(k')$ = 1 and $W_t(l',s)$ = 1, that is, a frequency-domain OCC and a time-domain OCC of the sequence of the DMRS port p8 on the RE (0, 3) are respectively (1, 1);

when k' = 1 and $l'$ = 0, k = 4n + 2k' + $\Delta$= 2 and $l = \overline{l} + l'$ = 2; it may be obtained by querying Table 13 that $W_f(k')$ = 1 and $W_t(l',s)$ = 1, that is, a frequency-domain OCC and a time-domain OCC of the sequence of the DMRS port p8 on the RE (2, 2) are respectively (1, 1);

when k' = 1 and $l'$ = 1, k = 4n + 2k' + $\Delta$= 2 and $l = \overline{l} + l'$ = 3; it may be obtained by querying Table 13 that $W_f(k')$ = 1 and $W_t(l',s)$ = 1, that is, a frequency-domain OCC and a time-domain OCC of the sequence of the DMRS port p8 on the RE (2, 3) are respectively (1, 1);

a group of time-domain OCCs {1, 1, 1, 1} may be obtained based on OCCs used on the first group of symbols (symbols 2 and 3) in the CDM group 0 and the four REs corresponding to the subcarrier 0 and the subcarrier 2 for the DMRS port p8.

When s=1, a mapping status of an additional DMRS on the DMRS port p8 is:

when k' = 0 and $l'$ = 0, k = 4n + 2k' + $\Delta$= 0 and $l = \overline{l} + l'$ = 2; it may be obtained by querying Table 13 that $W_f(k')$ = 1 and $W_t(l',s)$ = -1, that is, a frequency-domain OCC and a time-domain OCC of the sequence of the DMRS port p8 on the RE (0, 2) are respectively (1, 1);

when k' = 0 and $l'$ = 1, k = 4n + 2k' + $\Delta$= 0 and $l = \overline{l} + l'$ = 3; it may be obtained by querying Table 13 that $W_f(k')$ = 1 and $W_t(l',s)$ = -1, that is, a frequency-domain OCC and a time-domain OCC of the sequence of the DMRS port p8 on the RE (0, 3) are respectively (1, 1);

when k' = 1 and $l'$ = 0, k = 4n + 2k' + $\Delta$= 2 and $l = \overline{l} + l'$ = 2; it may be obtained by querying Table 13 that $W_f(k')$ = 1 and $W_t(l',s)$ = -1, that is, a frequency-domain OCC and a time-domain OCC of the sequence of the DMRS port p8 on the RE (2, 2) are respectively (1, 1);

when k' = 1 and $l'$ = 1, k = 4n + 2k' + $\Delta$= 2 and $l = \overline{l} + l'$ = 3; it may be obtained by querying Table 13 that $W_f(k')$ = 1 and $W_t(l',s)$ = -1, that is, a frequency-domain OCC and a time-domain OCC of the sequence of the DMRS port p8 on the RE (2, 3) are respectively (1, 1);

a group of time-domain OCCs {-1, -1, -1, -1} may be obtained based on OCCs used on the second group of symbols (symbols 8 and 9) in the CDM group 0 and the four REs corresponding to the subcarrier 0 and the subcarrier 2 for the DMRS port p8.

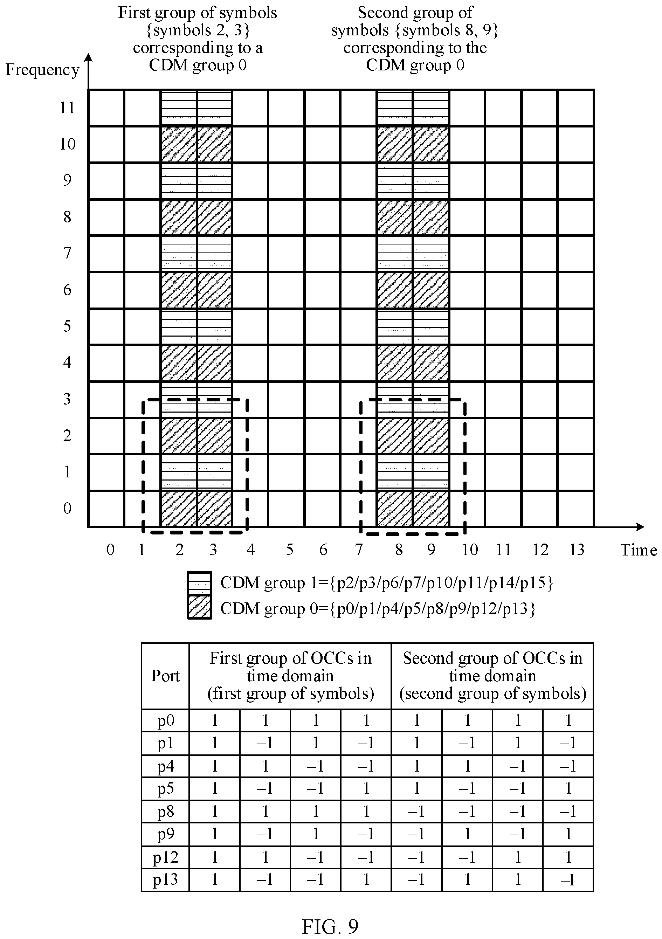

According to the same method, for sequences of other DMRS ports in the CDM group 0, a first group of OCCs used on the first group of symbols (symbols 2 and 3) and the four REs corresponding to the subcarrier 0 and the subcarrier 2, and a second group of OCCs used on the second group of symbols (symbols 8 and 9) and the four REs corresponding to the subcarrier 0 and the subcarrier 2 may be obtained. Only a first group of OCCs and a second group of OCCs used on the foregoing eight REs for the DMRS port p8, the DMRS port p9, the DMRS port p12, and the DMRS port p13 in the CDM group 0 are listed herein. For details, refer to FIG. 9.

As shown in FIG. 9, on the first group of symbols (symbols 2 and 3) corresponding to the CDM group 0, time-domain OCCs of a first group of REs (two REs in frequency domain and two symbols in time domain) corresponding to the port p8 are { 1, 1, 1, 1}, and on the second group of symbols (symbols 8 and 9) corresponding to the CDM group 0, time-domain OCCs of the second group of REs corresponding to the port p8 are {-1, -1, -1, -1}. The two groups of OCCs are orthogonal.

On the first group of symbols (symbols 2 and 3) corresponding to the CDM group 0, time-domain OCCs of a first group of REs corresponding to the port p9 are { 1, -1, 1, -1}. On the second group of symbols (symbols 8 and 9) corresponding to the CDM group 0, time-domain OCCs of a second group of REs corresponding to the port p9 are {-1, 1, -1, 1}. The two groups of OCCs are orthogonal.

On the first group of symbols (symbols 2 and 3) corresponding to the CDM group 0, time-domain OCCs of a first group of REs corresponding to the port p12 are {1, 1, -1, -1}. On the second group of symbols (symbols 8 and 9) corresponding to the CDM group 0, time-domain OCCs of a second group of REs corresponding to the port p12 are {-1, -1, 1, 1}. The two groups of OCCs are orthogonal.

On the first group of symbols (symbols 2 and 3) corresponding to the CDM group 0, time-domain OCCs of a first group of REs corresponding to the port p13 are {1, -1, -1, 1}. On the second group of symbols (symbols 8 and 9) corresponding to the CDM group 0, time-domain OCCs of a second group of REs corresponding to the port p13 are {-1, 1, 1, -1}. The two groups of OCCs are orthogonal.

In this embodiment of this application, the eight REs corresponding to the first group of symbols, the second group of symbols, and the two subcarriers are jointly orthogonalized, and the time-domain OCC may be equivalent to an OCC whose length is 8.

OCCs of sequences of DMRS ports {p0, p1, p4, p5} in the CDM group 0 on the foregoing two groups of symbols and the eight REs corresponding to the two subcarriers are consistent with those defined in the current standard. In this way, if the DMRS ports in the CDM group 0 configured by the sending device for the receiving device do not include the ports {p8, p9, p12, p13}, the current DMRS sequence mapping method does not need to be changed. If the DMRS ports in the CDM group 0 configured by the sending device for the receiving device include at least one of the ports {p8, p9, p12, p13}, DMRS mapping is performed in the foregoing manner provided in this embodiment of this application, to ensure that signals of the four newly added DMRS ports are orthogonal to signals of the original four DMRS ports.

In some other embodiments of this application, a first configuration information table and a second configuration information table may be set for a DMRS. A DMRS type corresponding to the first configuration table is a front-loaded DMRS, and a DMRS type corresponding to the second configuration information table is an additional DMRS. For the front-loaded DMRS, DMRS sequence mapping is performed by using the first configuration information table, and for the additional DMRS, DMRS sequence mapping is performed by using the second configuration information table. The first configuration information table includes 16 DMRS port indexes, and a CDM group frequency-domain offset, a frequency-domain OCC, and a time-domain OCC that correspond to each DMRS port index, where the time-domain OCC is a first group of OCCs. The second configuration information table includes 16 DMRS port indexes, and a CDM group frequency-domain offset, a time-domain OCC, and a frequency-domain OCC that correspond to each DMRS port index, where the time-domain OCC is a second group of OCCs. The first configuration information table may be shown in Table 14, and the second configuration information table may be shown in Table 15.

Table 14 shows an example of a first configuration information table of a DMRS according to an embodiment of this application.

**Table 14: Front-loaded DMRS configuration information for a type 1 DMRS**

| (Parameters for PUSCH DM-RS configuration type 1 for front-loaded DMRS) | | | | | | |
|---|---|---|---|---|---|---|
| $\tilde{p}$ | CDM group $\lambda$ | $\Delta$ | $w_f(k' + 2t)$ | | $w_t(1')$ | |
| | | | $k' = Q$ | $k' = 1$ | $l' = 0$ | $l' = 1$ |
| 0 | 0 | 0 | +1 | +1 | +1 | +1 |
| 1 | 0 | 0 | +1 | -1 | +1 | +1 |
| 2 | 1 | 1 | +1 | +1 | +1 | +1 |
| 3 | 1 | 1 | +1 | -1 | +1 | +1 |
| 4 | 0 | 0 | +1 | +1 | +1 | -1 |
| 5 | 0 | 0 | +1 | -1 | +1 | -1 |
| 6 | 1 | 1 | +1 | +1 | +1 | -1 |
| 7 | 1 | 1 | +1 | -1 | +1 | -1 |
| 8 | 0 | 0 | +1 | +1 | +1 | +1 |
| 9 | 0 | 0 | +1 | -1 | +1 | +1 |
| 10 | 1 | 1 | +1 | +1 | +1 | +1 |
| 11 | 1 | 1 | +1 | -1 | +1 | +1 |

(continued)

| (Parameters for PUSCH DM-RS configuration type 1 for front-loaded DMRS) | | | | | | |
|---|---|---|---|---|---|---|
| $\tilde{p}$ | CDM group $\lambda$ | $\Delta$ | $w_f(k' + 2t)$ | | $w_t(1')$ | |
| | | | $k' = Q$ | $k' = 1$ | $l' = 0$ | $l' = 1$ |
| 12 | 0 | 0 | +1 | +1 | +1 | -1 |
| 13 | 0 | 0 | +1 | -1 | +1 | -1 |
| 14 | 1 | 1 | +1 | +1 | +1 | -1 |
| 15 | 1 | 1 | +1 | -1 | +1 | -1 |

Parameter descriptions in Table 14 are basically the same as those in Table 13, and are not repeated herein.

Table 15 shows an example of a second configuration information table of an additional DMRS according to an embodiment of this application.

**Table 15: Additional DMRS configuration information for a type 1 DMRS**

| (Parameters for PUSCH DM-RS configuration type 1 for additional DMRS) | | | | | | |
|---|---|---|---|---|---|---|
| $\tilde{p}$ | CDM group $\lambda$ | $\Delta$ | $w_f(k' + 2t)$ | | $w_t(l')$ | |
| | | | $k' = 0$ | $k' = 1$ | $l' = 0$ | $l' = 1$ |
| 0 | 0 | 0 | +1 | +1 | +1 | +1 |
| 1 | 0 | 0 | +1 | -1 | +1 | +1 |
| 2 | 1 | 1 | +1 | +1 | +1 | +1 |
| 3 | 1 | 1 | +1 | -1 | +1 | +1 |
| 4 | 0 | 0 | +1 | +1 | +1 | -1 |
| 5 | 0 | 0 | +1 | -1 | +1 | -1 |
| 6 | 1 | 1 | +1 | +1 | +1 | -1 |
| 7 | 1 | 1 | +1 | -1 | +1 | -1 |
| 8 | 0 | 0 | +1 | +1 | -1 | -1 |
| 9 | 0 | 0 | +1 | -1 | -1 | -1 |
| 10 | 1 | 1 | +1 | +1 | -1 | -1 |
| 11 | 1 | 1 | +1 | -1 | -1 | -1 |
| 12 | 0 | 0 | +1 | +1 | -1 | +1 |
| 13 | 0 | 0 | +1 | -1 | -1 | +1 |
| 14 | 1 | 1 | +1 | +1 | -1 | +1 |
| 15 | 1 | 1 | +1 | -1 | -1 | +1 |

Parameter descriptions in Table 15 are basically the same as those in Table 13, and are not repeated herein.

If the sending device configures a front-loaded DMRS and an additional DMRS for the receiving device, when mapping the DMRS sequence to the first group of symbols corresponding to the front-loaded DMRS, the sending device obtains a corresponding OCC according to Table 14, and maps the DMRS sequence to a corresponding time-frequency resource based on a conventional DMRS mapping formula (for example, Formula 5) and based on the OCC obtained through query; and when mapping the DMRS sequence to the second group of symbols corresponding to the additional DMRS, obtains a corresponding OCC according to Table 15, and maps the DMRS sequence to a corresponding time-frequency resource based on the conventional DMRS mapping formula and based on the OCC obtained through query. For a specific implementation, refer to related content in the foregoing embodiment.

In some embodiments of this application, a configuration information table may be set for a DMRS, where the configuration information table includes 16 DMRS port indexes, and a CDM group frequency-domain offset and an OCC that correspond to each DMRS port index. The frequency-domain OCC includes a first group of OCCs and a second group of OCCs, the first group of OCCs corresponds to the first group of symbols and is used for a front-loaded DMRS, and the second group of OCCs corresponds to the second group of symbols and is used for an additional DMRS. Details may be shown in Table 16.

Table 16 shows an example of a DMRS configuration information table according to an embodiment of this application.

**Table 16: DMRS configuration information for a type 1 DMRS**

| (Parameters for PUSCH DM-RS configuration type 1 for DMRS) | | | | | | | | |
|---|---|---|---|---|---|---|---|---|
| $\tilde{p}$ | CDM group $\lambda$ | $\Delta$ | $w_f(k',s)$ | | | | $w_t(l')$ | |
| | | | $k'=0$ $s=0$ | $k'=1$ $s=0$ | $k'=0$ $s=1$ | $k'=1$ $s=1$ | $l'=0$ | $l'=1$ |
| 0 | 0 | 0 | +1 | +1 | +1 | +1 | +1 | +1 |
| 1 | 0 | 0 | +1 | -1 | +1 | -1 | +1 | +1 |
| 2 | 1 | 1 | +1 | +1 | +1 | +1 | +1 | +1 |
| 3 | 1 | 1 | +1 | -1 | +1 | -1 | +1 | +1 |
| 4 | 0 | 0 | +1 | +1 | +1 | +1 | +1 | -1 |
| 5 | 0 | 0 | +1 | -1 | +1 | -1 | +1 | -1 |
| 6 | 1 | 1 | +1 | +1 | +1 | +1 | +1 | -1 |
| 7 | 1 | 1 | +1 | -1 | +1 | -1 | +1 | -1 |
| 8 | 0 | 0 | +1 | +1 | -1 | -1 | +1 | +1 |
| $\tilde{p}$ | CDM group $\lambda$ | $\Delta$ | $w_f(k',s)$ | | | | $w_t(l')$ | |
| | | | $k'=0$ $s=0$ | $k'=1$ $s=0$ | $k'=0$ $s=1$ | $k'=1$ $s=1$ | $l'=0$ | $l'=1$ |
| 9 | 0 | 0 | +1 | -1 | -1 | +1 | +1 | +1 |
| 10 | 1 | 1 | +1 | +1 | -1 | -1 | +1 | +1 |
| 11 | 1 | 1 | +1 | -1 | -1 | +1 | +1 | +1 |
| 12 | 0 | 0 | +1 | +1 | -1 | -1 | +1 | -1 |
| 13 | 0 | 0 | +1 | -1 | -1 | +1 | +1 | -1 |
| 14 | 1 | 1 | +1 | +1 | -1 | -1 | +1 | -1 |
| 15 | 1 | 1 | +1 | -1 | -1 | +1 | +1 | -1 |

In Table 16, $\tilde{p}$ represents a DMRS port index, $\lambda$ represents a CDM group index, $\Delta$ represents a CDM group frequency-domain offset (values of the CDM group frequency-domain offset are 0 and 1), $W_f(k',s)$ is a frequency-domain OCC, and $W_t(l')$ is a time-domain OCC. The frequency-domain OCC includes two groups, where a group of OCCs corresponding to s=0 is a first group of OCCs, and a group of OCCs corresponding to s=1 is a second group of OCCs.

In Table 16, DMRS ports whose port indexes are 8 to 15 are ports newly added based on existing ports in this embodiment of this application. Although OCCs corresponding to DMRS ports whose port indexes are 0 to 7 are also extended, extended frequency-domain OCCs (two columns of frequency-domain OCCs corresponding to s=1) are the same as original frequency-domain OCCs (two columns of frequency-domain OCCs corresponding to s=0), so that the OCCs corresponding to the DMRS ports whose port indexes are 0 to 7 in Table 16 are the same as OCCs corresponding to DMRS ports in the original DMRS configuration information table.

For example, two symbols are configured. If the sending device configures DMRS ports {p0, p1, p4, p5, p10, p11, p14, p15} in the CDM group 0 for the receiving device, after generating the DMRS sequence, the sending device may query Table 16 based on a DMRS port index to obtain a corresponding OCC, and map the DMRS sequence to a corresponding time-frequency resource based on Formula (7) and the OCC obtained through query.

For example, two symbols are configured. If the sending device configures DMRS ports {p0, p1, p4, p5, p10, p11, p14, p15} in the CDM group 0 for the receiving device, after generating the DMRS sequence, the sending device may query Table 16 based on a DMRS port index to obtain a corresponding OCC, and map the DMRS sequence to a corresponding time-frequency resource based on Formula (7) and the OCC obtained through query.

The time-frequency resource shown in FIG. 7 is used as an example. A sequence of each DMRS port in the CDM group 0 may be mapped to an RE filled with slashes in FIG. 7. For the sequences of the DMRS ports in the CDM group 0, a first group of OCCs used on the first group of symbols (symbols 2 and 3) and the four REs corresponding to the subcarrier 0 and the subcarrier 2, and a second group of OCCs used on the second group of symbols (symbols 8 and 9) and the four REs corresponding to the subcarrier 0 and the subcarrier 2 may be obtained. Only a first group of OCCs and a second group of OCCs used on the foregoing eight REs for the DMRS port p8, the DMRS port p9, the DMRS port p12, and the DMRS port p13 in the CDM group 0 are listed herein. For details, refer to FIG. 8.

In this embodiment of this application, the eight REs corresponding to the first group of symbols, the second group of symbols, and the two subcarriers are jointly orthogonalized, and the time-domain OCC may be equivalent to an OCC whose length is 8.

OCCs of sequences of DMRS ports {p0, p1, p4, p5} in the CDM group 0 on the foregoing two groups of symbols and the eight REs corresponding to the two subcarriers are consistent with those defined in the current standard. In this way, if the DMRS ports in the CDM group 0 configured by the sending device for the receiving device do not include the ports {p8, p9, p12, p13 }, the current DMRS sequence mapping method does not need to be changed. If the DMRS ports in the CDM group 0 configured by the sending device for the receiving device include at least one of the ports {p8, p9, p12, p13}, DMRS mapping is performed in the foregoing manner provided in this embodiment of this application, to ensure that signals of the four newly added DMRS ports are orthogonal to signals of the original four DMRS ports.

In some other embodiments of this application, a first configuration information table and a second configuration information table may be set for a DMRS. A DMRS type corresponding to the first configuration table is a front-loaded DMRS, and a DMRS type corresponding to the second configuration information table is an additional DMRS. For the front-loaded DMRS, DMRS sequence mapping is performed by using the first configuration information table, and for the additional DMRS, DMRS sequence mapping is performed by using the second configuration information table. The first configuration information table includes 16 DMRS port indexes, and a CDM group frequency-domain offset, a frequency-domain OCC, and a time-domain OCC that correspond to each DMRS port index, where the frequency-domain OCC is a first group of OCCs. The second configuration information table includes 16 DMRS port indexes, and a CDM group frequency-domain offset, a frequency-domain OCC, and a time-domain OCC that correspond to each DMRS port index, where the frequency-domain OCC is a second group of OCCs. The first configuration information table may be shown in Table 17, and the second configuration information table may be shown in Table 18.

Table 17 shows an example of a first configuration information table of a DMRS according to an embodiment of this application.

**Table 17: Front-loaded DMRS configuration information for a type 1 DMRS**

| (Parameters for PUSCH DM-RS configuration type 1 for front-loaded DMRS) | | | | | | |
|---|---|---|---|---|---|---|
| $\tilde{p}$ | CDM group $\lambda$ | $\Delta$ | $w_f(k' + 2t)$ | | $w_t(l')$ | |
| | | | $k' = 0$ | $k' = 1$ | $l' = 0$ | $l' = 1$ |
| 0 | 0 | 0 | +1 | +1 | +1 | +1 |
| 1 | 0 | 0 | +1 | -1 | +1 | +1 |
| 2 | 1 | 1 | +1 | +1 | +1 | +1 |
| 3 | 1 | 1 | +1 | -1 | +1 | +1 |
| 4 | 0 | 0 | +1 | +1 | +1 | -1 |
| 5 | 0 | 0 | +1 | -1 | +1 | -1 |
| 6 | 1 | 1 | +1 | +1 | +1 | -1 |
| 7 | 1 | 1 | +1 | -1 | +1 | -1 |
| 8 | 0 | 0 | +1 | +1 | +1 | +1 |
| 9 | 0 | 0 | +1 | -1 | +1 | +1 |
| 10 | 1 | 1 | +1 | +1 | +1 | +1 |
| 11 | 1 | 1 | +1 | -1 | +1 | +1 |
| 12 | 0 | 0 | +1 | +1 | +1 | -1 |
| 13 | 0 | 0 | +1 | -1 | +1 | -1 |

(continued)

| (Parameters for PUSCH DM-RS configuration type 1 for front-loaded DMRS) | | | | | | |
|---|---|---|---|---|---|---|
| $\tilde{p}$ | CDM group $\lambda$ | $\Delta$ | $w_f(k'+2t)$ | | $w_t(l')$ | |
| | | | $k'=0$ | $k'=1$ | $l'=0$ | $l'=1$ |
| 14 | 1 | 1 | +1 | +1 | +1 | -1 |
| 15 | 1 | 1 | +1 | -1 | +1 | -1 |

Parameter descriptions in Table 17 are basically the same as those in Table 16, and are not repeated herein.

Table 18 shows an example of a second configuration information table of an additional DMRS according to an embodiment of this application.

**Table 18: Additional DMRS configuration information for a type 1 DMRS**

| (Parameters for PUSCH DM-RS configuration type 1 for additional DMRS) | | | | | | |
|---|---|---|---|---|---|---|
| $\tilde{p}$ | CDM group $\lambda$ | $\Delta$ | $w_f(k'+2t)$ | | $w_t(l')$ | |
| | | | $k'=Q$ | $k'=1$ | $l'=0$ | $l'=1$ |
| 0 | 0 | 0 | +1 | +1 | +1 | +1 |
| 1 | 0 | 0 | +1 | -1 | +1 | +1 |
| 2 | 1 | 1 | +1 | +1 | +1 | +1 |
| 3 | 1 | 1 | +1 | -1 | +1 | +1 |
| 4 | 0 | 0 | +1 | +1 | +1 | -1 |
| 5 | 0 | 0 | +1 | -1 | +1 | -1 |
| 6 | 1 | 1 | +1 | +1 | +1 | -1 |
| 7 | 1 | 1 | +1 | -1 | +1 | -1 |
| 8 | 0 | 0 | -1 | -1 | +1 | +1 |
| 9 | 0 | 0 | -1 | +1 | +1 | +1 |
| 10 | 1 | 1 | -1 | -1 | +1 | +1 |
| 11 | 1 | 1 | -1 | +1 | +1 | +1 |
| 12 | 0 | 0 | -1 | -1 | +1 | -1 |
| 13 | 0 | 0 | -1 | +1 | +1 | -1 |
| 14 | 1 | 1 | -1 | -1 | +1 | -1 |
| 15 | 1 | 1 | -1 | +1 | +1 | -1 |

Parameter descriptions in Table 18 are basically the same as those in Table 16, and are not repeated herein.

If the sending device configures a front-loaded DMRS and an additional DMRS for the receiving device, when mapping the DMRS sequence to the first group of symbols corresponding to the front-loaded DMRS, the sending device obtains a corresponding OCC according to Table 17, and maps the DMRS sequence to a corresponding time-frequency resource based on a conventional DMRS mapping formula (for example, Formula 5) and based on the OCC obtained through query; and when mapping the DMRS sequence to the second group of symbols corresponding to the additional DMRS, obtains a corresponding OCC according to Table 18, and maps the DMRS sequence to a corresponding time-frequency resource based on the conventional DMRS mapping formula and based on the OCC obtained through query. For a specific implementation, refer to related content in the foregoing embodiment.

In some embodiments of this application, the sending device may further indicate, to the receiving device, a port index of a demodulation reference signal configured for the receiving device. Specifically, downlink DMRS transmission is used as an example. The network device may send the indication information of the demodulation reference signal port index to the terminal device by using DCI. For a specific implementation, refer to the foregoing embodiment.

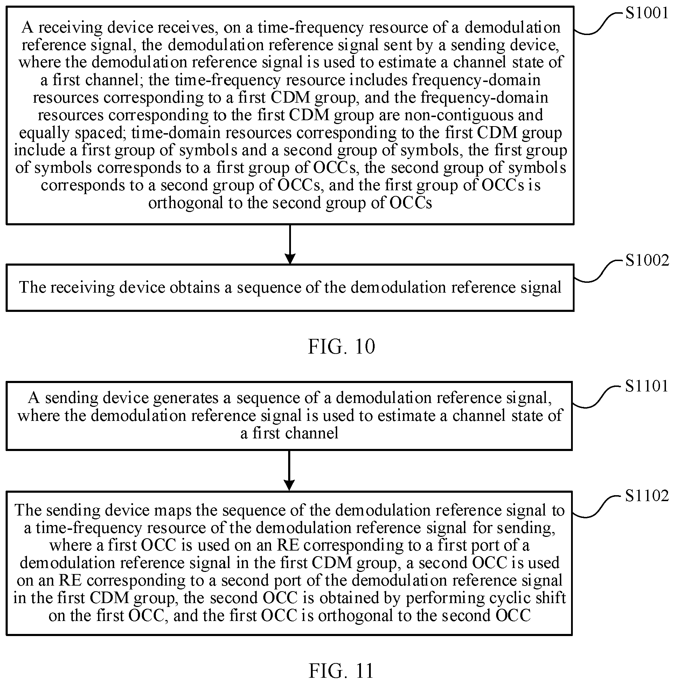

FIG. 10 is a flowchart of a signal transmission method implemented on a receiving device side according to an embodiment of this application. The method may be applied to the network architecture shown in FIG. 1, or certainly may be applied to another network architecture. This is not limited in this application. When the method is applied to the network architecture shown in FIG. 1, for downlink demodulation reference signal transmission, a sending device in the method may be the network device 101 in FIG. 1, and a receiving device in the method may be the terminal device (102a to 102d) in FIG. 1. For uplink demodulation reference signal transmission, a sending device in the method may be the terminal device (102a to 102d) in FIG. 1, and a receiving device in the method may be the network device 101 in FIG. 1.

Refer to FIG. 10. The method may include the following processing procedure.

S1001: A receiving device receives, on a time-frequency resource of a demodulation reference signal, the demodulation reference signal sent by a sending device.

For related descriptions of the demodulation reference signal and sending of the demodulation reference signal by the sending device, refer to related content in FIG. 7.

S1002: The receiving device obtains a sequence of the demodulation reference signal.

In some embodiments, a configuration information table of the demodulation reference signal is configured in the receiving device. For related descriptions of the configuration information table, refer to related descriptions in the procedure in FIG. 7. The receiving device may process the received demodulation reference signal based on the configuration information table of the demodulation reference signal, to obtain the sequence of the demodulation reference signal. Specifically, the following steps may be included:

Step 1: The receiving device obtains, based on the configuration information table of the demodulation reference signal, a CDM group frequency-domain offset, a frequency-domain OCC, and a time-domain OCC that correspond to a first RE *(k, l)*, where the first RE *(k, l)* has a subcarrier index of *k* and a symbol index of *l* in the time-frequency resource.

Step 2: The receiving device obtains, based on the CDM group frequency-domain offset, the frequency-domain OCC, and the time-domain OCC, data $\widetilde{\alpha}_{k,l}^{(\widetilde{p}_j,\mu)}$ of the demodulation reference signal on the first RE *(k, l)*, where the data $\widetilde{\alpha}_{k,l}^{(\widetilde{p}_j,\mu)}$ mapped to the first RE *(k, l)* satisfies Formula (6) or Formula (7).

In some embodiments, the receiving device receives indication information that is of a demodulation reference signal port index in a first CDM group and that is sent by the sending device, obtains, based on the indication information of the demodulation reference signal port index, the demodulation reference signal port index allocated by the sending device, queries the configuration information table of the demodulation reference signal based on the demodulation reference signal port index and the CDM group to which the demodulation reference signal port index belongs, to obtain an OCC code, and further calculates the sequence of the demodulation reference signal based on a mapping formula of the demodulation reference signal.

According to the foregoing embodiment of this application, a quantity of orthogonal DMRS ports may be increased without additionally increasing DMRS overheads. In addition, the new receiving device provided in this application may be compatible with an existing receiving device, that is, multi-user pairing may be performed between the new receiving device provided in this application and a receiving device that supports only an existing standard capability, and the existing receiving device does not need to be updated in terms of hardware and software. The expansion of DMRS orthogonal ports enables multi-user orthogonal pairing at more layers in the uplink or downlink, improving a system capacity.

Embodiments of this application further provide a signal transmission method and an apparatus, to increase a quantity of orthogonal demodulation reference signal ports that can be supported by a system without additionally increasing demodulation reference signal overheads. The method and an apparatus are based on a same inventive concept. Because the method and the apparatus have a similar problem-resolving principle, for implementations of the apparatus and the method, refer to each other, and no repeated description is provided.

FIG. 11 is a flowchart of a signal transmission method implemented on a sending device side according to an embodiment of this application. The method may be applied to the network architecture shown in FIG. 1, or certainly may be applied to another network architecture. This is not limited in this application. When the method is applied to the network architecture shown in FIG. 1, for downlink demodulation reference signal transmission, a sending device in the method may be the network device 101 in FIG. 1, and a receiving device in the method may be the terminal device (102a to 102d) in FIG. 1. For uplink demodulation reference signal transmission, a sending device in the method may be the terminal device (102a to 102d) in FIG. 1, and a receiving device in the method may be the network device 101 in FIG. 1.

Refer to FIG. 11. The method may include the following processing procedure.

S1101: A sending device generates a sequence of a demodulation reference signal.

The demodulation reference signal is used to estimate a channel state of a first channel. That the demodulation reference signal is used to estimate a channel state of a first channel may be understood as that the demodulation reference signal is a demodulation reference signal of the first channel. For downlink demodulation reference signal transmission, the first channel carries uplink data; and for uplink demodulation reference signal transmission, the first channel carries downlink data.

Specifically, the demodulation reference signal may be a DMRS of downlink transmission, and is used to perform channel estimation on a PUSCH. Alternatively, the demodulation reference signal may be a DMRS of uplink transmission, and is used to perform channel estimation on a PDSCH.

More specifically, the DMRS may be a DMRS based on a DFT-S-OFDM waveform and a CP-OFDM waveform. If the DFT-S-OFDM waveform is used, the DMRS is generated based on a ZC (Zadoff-Chu) sequence. If the CP-OFDM waveform is used, the DMRS is generated based on the gold sequence. For a method for generating the DMRS sequence based on the gold sequence, refer to the foregoing embodiment. A manner of generating the DMRS sequence based on the gold sequence is not limited in this embodiment of this application.

Using the DMRS based on the DFT-S-OFDM waveform as an example, a DMRS sequence may be generated by performing cyclic shift based on a ZC sequence. Specifically, the DMRS sequence may be generated by using the following formula:

$$\text{r(n)} = r_{u,v}^{(\alpha,\delta)}(n), \text{n=0, 1, ..., M}_{ZC}-1 \dots\dots\dots\dots\dots\dots\dots\dots\dots\dots\dots\dots\dots(8)$$

n is an index of each element in the sequence, $M_{zc} = mN_{SC}^{RB}/2^{\delta}$ is a total length of the sequence, u={0, 1, ..., 29} is a sequence group index, v is a quantity of basic sequences in a sequence group, m is a quantity of RBs allocated by the sending device to the receiving device, and $N_{SC}^{RB}$ is a quantity of subcarriers included in an RB. For PUSCH transmission, $\delta$ = 1 and $\alpha$ = 0. In addition, $r_{u,v}^{(\alpha,\delta)}(n)$ is defined as:

$$r_{u,v}^{(\alpha,\delta)}(n) = e^{jan}\bar{r}_{u,v}(n), 0 \leq n < M_{ZC} \dots\dots\dots\dots\dots\dots\dots\dots\dots\dots\dots\dots\dots(9)$$

$$\bar{r}_{u,v}(n) = x_q(n \bmod N_{ZC})$$

$$x_q(m) = e^{-j\frac{\pi qm(m+1)}{N_{ZC}}}$$

where

$$\begin{aligned}\text{q} &= \lfloor\bar{q} + 1/2\rfloor + \text{v} \cdot (-1)^{\lfloor 2\bar{q}\rfloor} \\ \bar{q} &= N_{ZC} \cdot (u + 1)/31\end{aligned} \dots\dots\dots\dots\dots\dots\dots\dots\dots\dots\dots\dots(10)$$

A value of $N_{ZC}$ is a maximum prime number less than $M_{ZC}$. A value of the sequence group index u is:

$$\text{u} = (f_{gh} + n_{ID}^{RS})\bmod 30 \dots\dots\dots\dots\dots\dots\dots\dots\dots\dots\dots\dots\dots\dots\dots(11)$$

$f_{gh}$ indicates whether to perform sequence frequency hopping, and a value of $n_{ID}^{RS}$ is limited in the following two cases:

Case 1: When an nPUSCH-Identity parameter is configured at a higher layer, and uplink grant information is neither a random access response (Random access response, RAR) grant nor a DCI format 0_0 scrambled for a TC-RNTI, $n_{ID}^{RS} = n_{ID}^{PUSCH}$. $n_{ID}^{PUSCH}$ is configured by the nPUSCH-Identity parameter at the higher layer.

Case 2: $n_{ID}^{RS} = N_{ID}^{cell}$, that is, is equal to a cell ID.

Because different $n_{ID}^{PUSCH}$ may be configured for different cells and different receiving devices, sequences generated by different cells have some randomness.

S1102: The sending device maps the sequence of the demodulation reference signal to a time-frequency resource of the demodulation reference signal for sending.

The time-frequency resource to which the sequence of the demodulation reference signal is mapped may include time-frequency resources corresponding to two CDM groups. A time-frequency resource corresponding to a first CDM group include frequency-domain resources corresponding to a first port of a demodulation reference signal and a second port of the demodulation reference signal in the first CDM group, and frequency-domain resources corresponding to the first port are the same as frequency-domain resources corresponding to the second port. The frequency-domain resource corresponding to the first port and the frequency-domain resource corresponding to the second port are non-contiguous and equally spaced.

In some embodiments, a frequency-domain resource corresponding to one CDM group may be divided into subcarrier groups, and each subcarrier group may include two subcarriers. For example, a frequency-domain resource corresponding to a CDM group includes, in ascending or descending order of subcarrier indexes, a first subcarrier, a second subcarrier, a third subcarrier, a fourth subcarrier, ..., and so on. In this case, the first subcarrier and the second subcarrier are grouped into one subcarrier group, and the third subcarrier and the fourth subcarrier are grouped into one subcarrier group. A PRB (for example, a first PRB) in the frequency-domain resource corresponding to the first port and the frequency-domain resource corresponding to the second port includes a first subcarrier group and a second subcarrier group, or includes a first subcarrier group, a second subcarrier group, and a third subcarrier group.

For example, a DMRS whose configuration type is the first configuration type (Type 1 DMRS) is used as an example, and a time-domain position of the DMRS is the first one or two symbols in one slot (namely, a front-loaded DMRS). In this case, in some embodiments of this application, in a PRB, a time-frequency resource position of a DMRS and a subcarrier group division status may be shown in FIG. 4.

As shown in FIG. 4, when one symbol or two symbols are configured, the frequency-domain resource corresponding to the CDM group 0 includes subcarriers {0, 2, 4, 6, 8, 10}, where the subcarriers {0, 2} form the first subcarrier group, the subcarriers {4, 6} form the second subcarrier group, and the subcarriers {8, 10} form the third subcarrier group. The frequency-domain resource corresponding to the CDM group 1 includes subcarriers {1, 3, 5, 7, 9, 11}, where the subcarriers {1, 3} form the first subcarrier group, the subcarriers {5, 7} form the second subcarrier group, and the subcarriers {9, 11} form the third subcarrier group. When one symbol is configured, the CDM group 0 includes ports {p0, p1, p4, p5}, and the CDM group 1 includes ports {p2, p3, p6, p7}. When two symbols are configured, the CDM group 0 includes ports {p0, p1, p4, p5, p8, p9, p12, p13}, and the CDM group 1 includes ports {p2, p3, p6, p7, p10, p11, p14, p15}.

OCC codes used on REs corresponding to a plurality of subcarriers for a frequency-domain resource corresponding to one port may form one OCC code sequence. In this embodiment of this application, a sequence formed by OCC codes used on REs corresponding to all subcarriers in the at least two subcarrier groups for the frequency-domain resource corresponding to the second port is obtained by performing cyclic shift on a sequence formed by OCC codes used on REs corresponding to all subcarriers in the at least two subcarrier groups for the frequency-domain resource corresponding to the first port, and sequences formed by OCC codes used on REs corresponding to the different subcarrier groups for the frequency-domain resource corresponding to the same port (for example, the first port or the second port) are different from each other.

Specifically, in some embodiments, OCC codes used on REs corresponding to all subcarriers in the first subcarrier group and the second subcarrier group for the frequency-domain resource corresponding to the first port form a first OCC code sequence, and OCC codes used on REs corresponding to all subcarriers in the first subcarrier group and the second subcarrier group for the frequency-domain resource corresponding to the second port form a second OCC code sequence. For the frequency-domain resource corresponding to the first port or the second port, OCC codes used on REs corresponding to two subcarriers in the first subcarrier group form a third OCC code sequence, and OCC codes used on REs corresponding to two subcarriers in the second subcarrier group form a fourth OCC code sequence. The second OCC code sequence is obtained by performing cyclic shift based on the first OCC code sequence, and the third OCC code sequence is different from the fourth OCC code sequence.

For example, using the subcarrier group division shown in FIG. 4 as an example, OCC codes used on corresponding REs for a frequency-domain resource corresponding to the first port (p0) and the second port (p8) in the CDM group 0 are shown as follows:

For the frequency-domain resource corresponding to the first port (p0), an OCC1 is used on an RE corresponding to a first subcarrier 0 in the first subcarrier group;

for the frequency-domain resource corresponding to the first port (p0), an OCC2 is used on an RE corresponding to a second subcarrier 2 in the first subcarrier group;

for the frequency-domain resource corresponding to the first port (p0), an OCC3 is used on an RE corresponding to a first subcarrier 4 in the second subcarrier group;
for the frequency-domain resource corresponding to the first port (p0), an OCC4 is used on an RE corresponding to a second subcarrier 6 in the second subcarrier group;
for the frequency-domain resource corresponding to the second port (p8), an OCC5 is used on the RE corresponding to the first subcarrier 0 in the first subcarrier group;
for the frequency-domain resource corresponding to the second port (p8), an OCC6 is used on the RE corresponding to the second subcarrier 2 in the first subcarrier group;
for the frequency-domain resource corresponding to the second port (p8), an OCC7 is used on the RE corresponding to the first subcarrier 4 in the second subcarrier group; and
for the frequency-domain resource corresponding to the second port (p8), an OCC8 is used on the RE corresponding to the second subcarrier 6 in the second subcarrier group.

The OCC1 to the OCC4 form a first OCC sequence whose length is 4, the OCC5 to the OCC8 form a second OCC code sequence whose length is 4, and the second OCC code sequence is obtained by performing cyclic shift based on the first OCC code sequence. The OCC1 and the OCC2 form a third OCC code sequence, the OCC3 and the OCC4 form a fourth OCC code sequence, and the third OCC code sequence is different from the fourth OCC code sequence. Alternatively, a sequence formed by the OCC5 and the OCC6 may be referred to as a third OCC code sequence, and a sequence formed by the OCC7 and the OCC8 may be referred to as a fourth OCC code sequence. In this case, the third OCC code sequence is different from the fourth OCC code sequence.

In some other embodiments, OCC codes used on REs corresponding to all subcarriers in the first subcarrier group, the second subcarrier group, and the third subcarrier group for the frequency-domain resource corresponding to the first port form a first OCC code sequence, and OCC codes used on REs corresponding to all subcarriers in the first subcarrier group, the second subcarrier group, and the third subcarrier group for the frequency-domain resource corresponding to the second port form a second OCC code sequence. For the frequency-domain resource corresponding to the first port or the second port, OCC codes used on REs corresponding to two subcarriers in the first subcarrier group form a third OCC code sequence, OCC codes used on REs corresponding to two subcarriers in the second subcarrier group form a fourth OCC code sequence, and OCC codes used on REs corresponding to two carriers in the third subcarrier group form a fifth OCC code sequence. The second OCC code sequence is obtained by performing cyclic shift based on the first OCC code sequence, and any two sequences in the third OCC code sequence, the fourth OCC code sequence, and the fifth OCC code sequence are different.

For example, using the subcarrier group division shown in FIG. 4 as an example, OCC codes used on corresponding REs for a frequency-domain resource corresponding to the first port (p0) and the second port (p8) in the CDM group 0 are shown as follows:

For the frequency-domain resource corresponding to the first port (p0), an OCC1 is used on an RE corresponding to a first subcarrier 0 in the first subcarrier group;

for the frequency-domain resource corresponding to the first port (p0), an OCC2 is used on an RE corresponding to a second subcarrier 2 in the first subcarrier group;
for the frequency-domain resource corresponding to the first port (p0), an OCC3 is used on an RE corresponding to a first subcarrier 4 in the second subcarrier group;
for the frequency-domain resource corresponding to the first port (p0), an OCC4 is used on an RE corresponding to a second subcarrier 6 in the second subcarrier group;
for the frequency-domain resource corresponding to the first port (p0), an OCC5 is used on an RE corresponding to a first subcarrier 8 in the third subcarrier group;
for the frequency-domain resource corresponding to the first port (p0), an OCC6 is used on an RE corresponding to a second subcarrier 10 in the third subcarrier group;
for the frequency-domain resource corresponding to the second port (p8), an OCC7 is used on the RE corresponding to the first subcarrier 0 in the first subcarrier group;
for the frequency-domain resource corresponding to the second port (p8), an OCC8 is used on the RE corresponding to the second subcarrier 2 in the first subcarrier group;
for the frequency-domain resource corresponding to the second port (p8), an OCC9 is used on the RE corresponding to the first subcarrier 4 in the second subcarrier group;
for the frequency-domain resource corresponding to the second port (p8), an OCC10 is used on the RE corresponding to the second subcarrier 6 in the second subcarrier group;
for the frequency-domain resource corresponding to the second port (p8), an OCC11 is used on the RE corresponding to the first subcarrier 8 in the third subcarrier group; and
for the frequency-domain resource corresponding to the second port (p8), an OCC12 is used on the RE corresponding to the second subcarrier 10 in the third subcarrier group.

The OCC7 to the OCC12 form a second OCC code sequence whose length is 6, the OCC1 to the OCC6 form a first OCC sequence whose length is 4, and the second OCC code sequence is obtained by performing cyclic shift based on the first OCC code sequence. The OCC1 and the OCC2 form a third OCC code sequence, the OCC3 and the OCC4 form a fourth OCC code sequence, the OCC5 and the OCC6 form a fifth OCC code sequence, the third OCC code sequence is different from the fourth OCC code sequence, the fourth OCC code sequence is different from the fifth OCC code sequence, and the third OCC code sequence is different from the fifth OCC code sequence. Alternatively, a sequence formed by the OCC7 and the OCC8 may be referred to as a third OCC code sequence, a sequence formed by the OCC9 and the OCC10 may be referred to as a fourth OCC code sequence, and a sequence formed by the OCC11 and the OCC12 may be referred to as a fifth OCC code sequence. In this case, the third OCC code sequence is different from the fourth OCC code sequence, and the fourth OCC code sequence is different from the fifth OCC code sequence, the third OCC code sequence is different from the fifth OCC code sequence.

In some embodiments, one demodulation reference signal port may correspond to 6M REs, and M is an integer greater than or equal to 1. For example, a value of M may be a quantity of scheduled PRBs.

That the DMRS configuration type is the first configuration type (Type 1 DMRS) and the time-domain position of the DMRS is one symbol is used as an example. As shown in FIG. 4, in each PRB, a DMRS port 0 occupies six REs in frequency domain, and OCC codes on the six REs are {+1, +1, +1, +1, +1, +1}. The DMRS port 1 occupies six same REs in frequency domain, and OCC codes on the six REs are {+1, -1, +1, -1, +1, -1}. The sequence form may be further converted into an expression form of cyclic shift, for example,

$$[1\ 1\ 1\ 1\ 1\ 1] \cdot diag(s0) = [1\ -1\ 1\ -1\ 1\ -1]$$

$$s0 = \left[ e^{j\frac{2\pi\phi\cdot 0}{6}}, e^{j\frac{2\pi\phi\cdot 1}{6}}, \cdots, e^{j\frac{2\pi\phi\cdot 5}{6}} \right]$$ ($\phi = 3$), where diag() indicates that elements in a matrix are diagonalized to form a diagonal matrix.

The following sequences can be generated based on values of $\varphi$:

$$\left[ 1, e^{j\frac{\pi}{3}}, e^{j\frac{2\pi}{3}}, e^{j\pi}, e^{j\frac{4\pi}{3}}, e^{j\frac{5\pi}{3}} \right] = [1\ 1\ 1\ 1\ 1\ 1] \cdot diag(s0)\ (\phi = 1)$$

$$\left[ 1, e^{j\frac{5\pi}{3}}, e^{j\frac{4\pi}{3}}, e^{j\pi}, e^{j\frac{2\pi}{3}}, e^{j\frac{\pi}{3}} \right] = [1\ 1\ 1\ 1\ 1\ 1] \cdot diag(s0)\ (\phi = 5)$$

Through a complex inner product operation, it can be verified that the generated sequence and the original sequences {+1, +1, +1, +1, +1, +1} and {+1, -1, +1, -1, +1, -1} are orthogonal to each other.

When the quantity of PRBs is extended to M, there is:

$$s0 = \left[ e^{j\frac{2\pi\phi\cdot 0}{6}}, e^{j\frac{2\pi\phi\cdot 1}{6}}, \cdots, e^{j\frac{2\pi\phi\cdot m}{6}} \cdots, e^{j\frac{2\pi\phi\cdot(6M-1)}{6}} \right]$$

m is an RE index, that is, m=0, 1, 2, 3, 4, 5, ..., 6M-1; and $\phi$ is a cyclic shift factor.

Similarly, it may be learned that a sequence obtained when $\phi = 2$ or $\phi = 4$ is also orthogonal to the foregoing sequence. Therefore, in this embodiment of this application, six orthogonal sequences may be constructed on one DMRS symbol.

In actual implementation, in the CDM group 0, if values of $\phi$ are any two of {1, 2, 4, 5}, the values and an original OCC sequence are combined (that is, $\phi = 0$ or $\phi = 3$) to form four orthogonal sequences. Further, considering a time-domain OCC, eight orthogonal sequences may be constructed for two DMRS symbols, and two CDM groups may support 16 orthogonal DMRS ports. If the values of $\phi$ are all values in {1, 2, 4, 5}, a maximum of 24 orthogonal DMRS ports can be constructed. Optionally, the sending device may map the sequence of the demodulation reference signal to the time-frequency resource of the demodulation reference signal based on the following formula:

$$\widetilde{\alpha}_{k,l}^{(\widetilde{p}_j, \mu)} = e^{\frac{j2\phi\pi m}{6M}} W_f(k') W_t(l') r(2n + k') \dots\dots\dots\dots\dots\dots\dots\dots\dots(12)$$

$$k = 4n + 2k' + \Delta$$

$$k' = 0,1$$

$$m = \mathrm{mod}(\lfloor k/2 \rfloor, 6M)$$

$$l = \bar{l} + l'$$

$$n = 0,1,\cdots$$

$$0,1,\cdots,v\text{-}1$$

$W_f(k')$ is a frequency-domain OCC, $W_t(l')$ is a time-domain OCC, and $r(2n + k')$ is an initial sequence of the demodulation reference signal; and $\Delta$ is a CDM group frequency-domain offset, $\bar{l}$ is an index of a start symbol of the demodulation reference signal, $l'$ is a symbol offset of the demodulation reference signal, v is a quantity of transmission layers, M is an integer greater than or equal to 1, for example, may be a quantity of PRBs, and $\phi$ is a cyclic shift factor.

In some other embodiments, that the DMRS configuration type is the first configuration type (Type 1 DMRS) and the time-domain position of the DMRS is one symbol is still used as an example. As shown in FIG. 4, in each PRB, a DMRS port 0 occupies six REs in frequency domain, and OCC codes on the six REs are {+1, +1, +1, +1, +1, +1}. The DMRS port 1 occupies six same REs in frequency domain, and OCC codes on the six REs are {+1, -1, +1, -1, +1, -1}. The sequence form may be further converted into an expression form of cyclic shift. When the quantity of scheduled RBs is N, and 6N is a multiple of 4, REs corresponding to a same DMRS port may be grouped according to every four REs, to construct OCC codes on different ports. That is,

$$[1\,1\,1\,1] \cdot diag(s0) = [1\,-1\,1\,-1]$$

$$s0 = \left[ e^{j\frac{2\pi\phi\cdot0}{4}}, e^{j\frac{2\pi\phi\cdot1}{4}}, e^{j\frac{2\pi\phi\cdot2}{4}}, e^{j\frac{2\pi\phi\cdot3}{4}} \right]$$ ($\phi$ = 2), where diag() indicates that elements in a matrix are diagonalized to form a diagonal matrix.

When $\phi = 0$ and $\phi = 2$, OCC codes of the DMRS port 0 and the DMRS port 1 in the CDM group 0 are the same as OCC codes of the DMRS port 2 and the DMRS port 3 in the CDM group 1. When $\phi = 1$ and $\phi = 3$, a generated OCC code is an OCC code corresponding to a newly added port, for example,

the OCC code of the newly added DMRS port 8 is: $[1\,1\,1\,1] \cdot diag(s0) = [1\,j\,\text{-}1\,\text{-}j](\phi = 1)$;
the OCC code of the newly added DMRS port 9 is: $[1\,1\,1\,1] \cdot diag(s0) = [1\,\text{-}j\,\text{-}1\,j](\phi = 3)$; and
the rest can be deduced by analogy.

Optionally, the sending device may map the sequence of the demodulation reference signal to the time-domain resource of the demodulation reference signal based on the following formula:

$$\tilde{\alpha}_{k,l}^{(\tilde{p}_j,\mu)} = e^{j\frac{2\phi\pi m}{4}} W_f(k')W_t(l')r(2n + k') \dots\dots\dots\dots\dots\dots\dots\dots\dots\dots\dots(13)$$

$$k = 4n + 2k' + \Delta$$

$$k' = 0,1$$

$$m = \mathrm{mod}(\lfloor k/2 \rfloor, 4)$$

$$l = \bar{l} + l'$$

$$n = 0,1,\cdots$$

$W_f(k')$ is a frequency-domain OCC, $W_t(l')$ is a time-domain OCC, and $r(2n + k')$ is an initial sequence of the demodulation reference signal; and $\Delta$ is a CDM group frequency-domain offset, $\bar{l}$ is an index of a start symbol of the demodulation reference signal, $l'$ is a symbol offset of the demodulation reference signal, v is a quantity of transmission layers, $\phi$ is a cyclic shift factor, and M is a positive integer greater than or equal to 1.

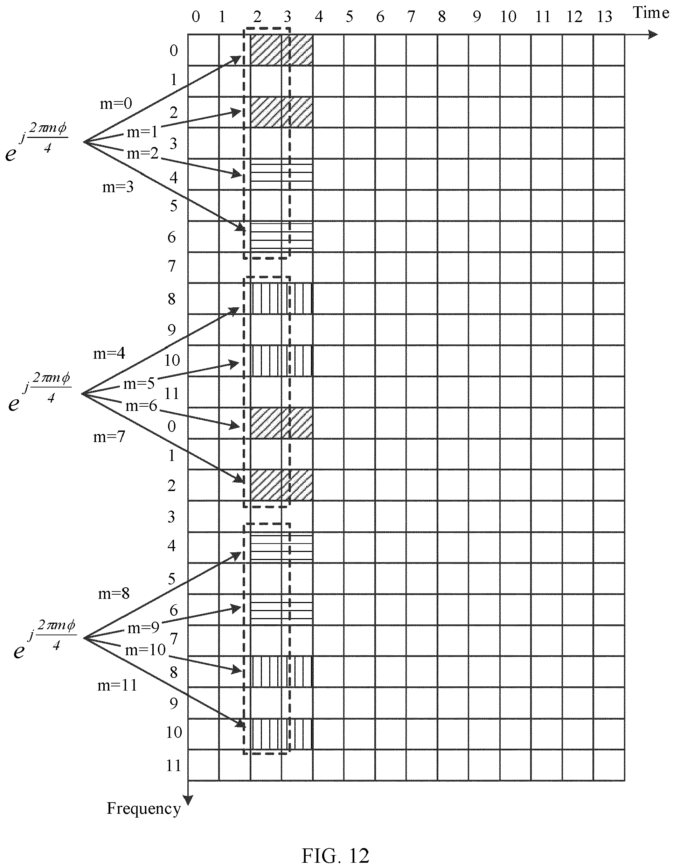

FIG. 12 is a schematic diagram of an OCC code used when a DMRS is mapped to an RE. As shown in the figure, in REs corresponding to a same DMRS port, every four REs are grouped to construct OCC codes on different ports. Although the port 0 and the port 1 correspond to a same RE, because the port 0 and the port 1 correspond to different $\phi$ (that is, different OCC codes are used), orthogonality can be implemented.

In some embodiments, based on Formula (12) or Formula (13), a process in which the sending device maps the sequence of the demodulation reference signal to the time-frequency resource of the demodulation reference signal may include the following steps:

Step 1: The sending device obtains, based on the configuration information table, a CDM group frequency-domain offset, a frequency-domain OCC, a time-domain OCC, and a cyclic shift factor that correspond to a first RE $(k, l)$, where the first RE $(k, l)$ has a subcarrier index of $k$ and a symbol index of $l$ in the time-frequency resource.

Step 2: The sending device obtains, based on the CDM group frequency-domain offset, the frequency-domain OCC, the time-domain OCC, and the cyclic shift factor, data $\widetilde{\alpha}_{k,l}^{(\widetilde{p}_j,\mu)}$ of the sequence of the demodulation reference signal mapped to the first RE $(k, l)$, where the data $\widetilde{\alpha}_{k,l}^{(\widetilde{p}_j,\mu)}$ mapped to the first RE $(k, l)$ satisfies Formula (12) or Formula (13).

According to the foregoing cyclic shift principle, in this embodiment of this application, the cyclic shift factor may be set in the configuration information table of the demodulation reference signal. Specifically, the configuration information table of the demodulation reference signal includes a correspondence between a demodulation reference signal port index, a CDM group frequency-domain offset, an OCC, and a cyclic shift factor, where the OCC includes a frequency-domain OCC and a time-domain OCC. The sending device obtains, based on the configuration information table, a frequency-domain OCC, a time-domain OCC, and a cyclic shift factor that correspond to a demodulation reference signal port index, and performs cyclic shift on the obtained frequency-domain OCC and the obtained time-domain OCC based on the obtained cyclic shift factor.

The following describes an implementation process of this embodiment of this application with reference to Formula (12) or Formula (13) that need to be satisfied in the foregoing mapping process and with reference to the foregoing setting manners of the configuration information table of the demodulation reference signal by using a DMRS whose configuration type is the first configuration type (Type 1 DMRS) as an example.

In some embodiments of this application, a configuration information table may be set for a DMRS, where the configuration information table includes 16 DMRS port indexes, and a CDM group frequency-domain offset, an OCC, and a cyclic shift factor that correspond to each DMRS port index. Details may be shown in Table 19.

**Table 19: DMRS configuration information for a type 1 DMRS**

| (Parameters for PUSCH DM-RS configuration type 1) | | | | | | | |
|---|---|---|---|---|---|---|---|
| $\widetilde{p}$ | CDM group $\lambda$ | $\Delta$ | $w_f(k'+2t)$ | | $w_t(l')$ | | $\phi$ |
| | | | $k'=0$ | $k'=1$ | $l'=0$ | $l'=1$ | |
| 0 | 0 | 0 | +1 | +1 | +1 | +1 | N/A |
| 1 | 0 | 0 | +1 | -1 | +1 | +1 | N/A |
| 2 | 1 | 1 | +1 | +1 | +1 | +1 | N/A |
| 3 | 1 | 1 | +1 | -1 | +1 | +1 | N/A |
| 4 | 0 | 0 | +1 | +1 | +1 | -1 | N/A |
| 5 | 0 | 0 | +1 | -1 | +1 | -1 | N/A |
| 6 | 1 | 1 | +1 | +1 | +1 | -1 | N/A |
| 7 | 1 | 1 | +1 | -1 | +1 | -1 | N/A |
| 8 | 0 | 0 | +1 | +1 | +1 | +1 | 1 |
| 9 | 0 | 0 | +1 | +1 | +1 | +1 | 5 |

(continued)

| $\tilde{p}$ | CDM group $\lambda$ | $\Delta$ | $w_f(k'+2t)$ | | $w_t(l')$ | | $\phi$ |
|---|---|---|---|---|---|---|---|
| | | | $k'=0$ | $k'=1$ | $l'=0$ | $l'=1$ | |
| 10 | 1 | 1 | +1 | +1 | +1 | +1 | 1 |
| 11 | 1 | 1 | +1 | +1 | +1 | +1 | 5 |
| 12 | 0 | 0 | +1 | +1 | +1 | -1 | 1 |
| 13 | 0 | 0 | +1 | +1 | +1 | -1 | 5 |
| 14 | 1 | 1 | +1 | +1 | +1 | -1 | 1 |
| 15 | 1 | 1 | +1 | -1 | +1 | -1 | 5 |

According to Table 19, the OCC of the port 8 in the CDM group 0 is obtained by performing cyclic shift based on the cyclic shift factor $\phi=1$ and based on the OCC of the port 0 in the CDM group; the OCC of the port 9 in the CDM group 0 is obtained by performing cyclic shift based on the cyclic shift factor $\phi=5$ and based on the OCC of the port 0 in the CDM group; the OCC of the port 12 in the CDM group 0 is obtained by performing cyclic shift based on the cyclic shift factor $\phi=1$ and based on the OCC of the port 4 in the CDM group; the OCC of the port 13 in the CDM group 0 is obtained by performing cyclic shift based on the cyclic shift factor $\phi=5$ and based on the OCC of the port 4 in the CDM group; the OCC of the port 10 in the CDM group 1 is obtained by performing cyclic shift based on the cyclic shift factor $\phi=1$ and based on the OCC of the port 2 in the CDM group; the OCC of the port 11 in the CDM group 1 is obtained by performing cyclic shift based on the cyclic shift factor $\phi=5$ and based on the OCC of the port 2 in the CDM group; the OCC of the port 14 in the CDM group 1 is obtained by performing cyclic shift based on the cyclic shift factor $\phi=1$ and based on the OCC of the port 6 in the CDM group; the OCC of the port 15 in the CDM group 1 is obtained by performing cyclic shift based on the cyclic shift factor $\phi=1$ and based on the OCC of the port 7 in the CDM group.

In some embodiments of this application, a configuration information table may be set for a DMRS, where the configuration information table includes 16 DMRS port indexes, and a CDM group frequency-domain offset, an OCC, and a cyclic shift factor that correspond to each DMRS port index. Details may be shown in Table 20.

**Table 20: DMRS configuration information for a type 1 DMRS**

| (Parameters for PUSCH DM-RS configuration type 1) | | | | | | | |
|---|---|---|---|---|---|---|---|
| $\tilde{p}$ | CDM group $\lambda$ | $\Delta$ | $w_f(k')$ | | $w_t(l')$ | | $\phi$ |
| | | | $k'=0$ | $k'=1$ | $l'=0$ | $l'=1$ | |
| 0 | 0 | 0 | +1 | +1 | +1 | +1 | N/A |
| 1 | 0 | 0 | +1 | -1 | +1 | +1 | N/A |
| 2 | 1 | 1 | +1 | +1 | +1 | +1 | N/A |
| 3 | 1 | 1 | +1 | -1 | +1 | +1 | N/A |
| 4 | 0 | 0 | +1 | +1 | +1 | -1 | N/A |
| 5 | 0 | 0 | +1 | -1 | +1 | -1 | N/A |
| 6 | 1 | 1 | +1 | +1 | +1 | -1 | N/A |
| 7 | 1 | 1 | +1 | -1 | +1 | -1 | N/A |
| 8 | 0 | 0 | +1 | +1 | +1 | +1 | 1 |
| 9 | 0 | 0 | +1 | +1 | +1 | +1 | 3 |
| 10 | 1 | 1 | +1 | +1 | +1 | +1 | 1 |
| 11 | 1 | 1 | +1 | +1 | +1 | +1 | 3 |
| 12 | 0 | 0 | +1 | +1 | +1 | -1 | 1 |
| 13 | 0 | 0 | +1 | +1 | +1 | -1 | 3 |
| 14 | 1 | 1 | +1 | +1 | +1 | -1 | 1 |

EP 4 191 928 A1

(continued)

| **(Parameters for PUSCH DM-RS configuration type 1)** | | | | | | | |
|---|---|---|---|---|---|---|---|
| $\tilde{p}$ | CDM group $\lambda$ | $\Delta$ | $w_f(k')$ | | $w_t(l')$ | | $\phi$ |
| | | | $k'=0$ | $k'=1$ | $l'=0$ | $l'=1$ | |
| 15 | 1 | 1 | +1 | +1 | +1 | -1 | 3 |

In some embodiments of this application, Optionally, the sending device may map the sequence of the demodulation reference signal to the time-domain resource of the demodulation reference signal based on the following formula:

$$\tilde{\alpha}_{k,l}^{(\tilde{p}_j,\mu)} = W_f(k' + 2t)W_t(l')r(2n + k')\ldots\ldots\ldots\ldots\ldots\ldots\ldots\ldots\ldots\ldots\ldots\ldots(14)$$

$$k = 4n + 2k' + \Delta$$

$k' = 0,1$

$m = \mathrm{mod}(\lfloor k/4 \rfloor, 2)$ or $t = \mathrm{mod}(n, 2)$

$l = \bar{l} + l'$

$n = 0,1,\cdots$

$j = 0,1,\cdots,v-1$

Based on the foregoing formula, an OCC code corresponding to each port is shown in Table 21.

**Table 21: DMRS configuration information table for a type 1 DMRS**

| **(Parameters for PUSCH DM-RS configuration type 1)** | | | | | | | |
|---|---|---|---|---|---|---|---|
| $\tilde{p}$ | CDM group $\lambda$ | $\Delta$ | $w_f(k + 2t)$ | | | | $w_t(l')$ | |
| | | | $k'=0$ $t=0$ | $k'=1$ $t=0$ | $k'=0$ $t=1$ | $k'=1$ $t=1$ | $l'=0$ | $l'=1$ |
| 8 | 0 | 0 | +1 | +j | -1 | -j | +1 | +1 |
| 9 | 0 | 0 | +1 | -j | -1 | +j | +1 | +1 |
| 10 | 1 | 1 | +1 | +j | -1 | -j | +1 | +1 |
| 11 | 1 | 1 | +1 | -j | -1 | +j | +1 | +1 |
| 12 | 0 | 0 | +1 | +j | -1 | -j | +1 | -1 |
| 13 | 0 | 0 | +1 | -j | -1 | +j | +1 | -1 |
| 14 | 1 | 1 | +1 | +j | -1 | -j | +1 | -1 |
| 15 | 1 | 1 | +1 | -j | -1 | +j | +1 | -1 |

It should be noted that Table 19 to Table 21 show only several types of DMRS configuration information as examples. Based on the foregoing cyclic shift principle, the DMRS configuration information tables may be in other forms, and details are not listed one by one herein.

It should be further noted that Table 19 and Table 20 are described merely by using an example in which 16 ports are indicated. According to the foregoing cyclic shift principle, a quantity of ports in the DMRS configuration information table may be extended to a maximum of 24.

In some embodiments of this application, the sending device may further indicate, to the terminal device, a port index of a demodulation reference signal configured for the terminal device. Specifically, downlink DMRS transmission is used as an example. The network device may send the indication information of the demodulation reference signal port index to the terminal device by using DCI.

In this embodiment of this application, a table of a correspondence between demodulation reference signal port index indication information and a demodulation reference signal port may be extended, and corresponding reference signal port index indication information is set for a newly added demodulation reference signal port in this embodiment of this application.

Further, to reduce signaling overheads, in this embodiment of this application, joint coding may be performed on a plurality of demodulation reference signal port indexes, so that indication information of a small quantity of bits indicates the plurality of demodulation reference signal port indexes.

The following uses a DMRS as an example, and uses the first configuration type (Type 1 DMRS) to describe the extended table of a correspondence between DMRS port index indication information and a DMRS port index in this embodiment of this application.

Table 22 shows an example of a table of a correspondence between DMRS port index indication information and a DMRS port index when rank=1 according to an embodiment of this application, where rank=1 indicates that a quantity of transmission layers is 1, and the sending device configures one DMRS port for the receiving device. maxLength indicates a maximum quantity of front-loaded symbols of the DMRS.

**Table 22: Table of a correspondence between DMRS port index indication information and a DMRS port index (Antenna port(s), transform precoder is disabled, dmrs-Type=1, maxLength=2, rank=1)**

| Indication information (Value) | Number of DMRS CDM group(s) without data (Number of DMRS CDM group(s) without data) | DMRS port index (DMRS port(s)) | Number of front-loaded symbols (Number of front-loaded symbols) |
| --- | --- | --- | --- |
| 0 | 1 | 0 | 1 |
| 1 | 1 | 1 | 1 |
| 2 | 2 | 0 | 1 |
| 3 | 2 | 1 | 1 |
| 4 | 2 | 2 | 1 |
| 5 | 2 | 3 | 1 |
| 6 | 2 | 0 | 2 |
| 7 | 2 | 1 | 2 |
| 8 | 2 | 2 | 2 |
| 9 | 2 | 3 | 2 |
| 10 | 2 | 4 | 2 |
| 11 | 2 | 5 | 2 |
| 12 | 2 | 6 | 2 |
| 13 | 2 | 7 | 2 |
| 14 | 2 | 8 | 2 |
| 15 | 2 | 9 | 2 |
| 16 | 2 | 10 | 2 |
| 17 | 2 | 11 | 2 |
| 18 | 2 | 12 | 2 |
| 19 | 2 | 13 | 2 |
| 20 | 2 | 14 | 2 |
| 21 | 2 | 15 | 2 |

Table 22 shows values (value) of port index indication information corresponding to DMRS port indexes 0 to 15, where 14 to 21 are indication information newly added based on original indication information in this embodiment of this application, and respectively indicate DMRS port indexes 8 to 15. In this application, another manner of indicating the DMRS port index is not excluded.

Table 23 shows an example of a table of a correspondence between DMRS port index indication information and a DMRS port index when rank=2 according to an embodiment of this application, where rank=2 indicates that a quantity of transmission layers is 2, and the sending device configures two DMRS ports for the receiving device. max-

Length indicates a maximum quantity of front-loaded symbols of the DMRS.

**Table 23: Table of a correspondence between DMRS port index indication information and a DMRS port index**
**(Antenna port(s), transform precoder is disabled, dmrs-Type=1, maxLength=2, rank=2)**

| Indication information (Value) | Number of DMRS CDM group(s) without data (Number of DMRS CDM group(s) without data) | DMRS port index (DMRS port(s)) | Number of front-loaded symbols (Number of front-loaded symbols) |
|---|---|---|---|
| 0 | 1 | 0.1 | 1 |
| 1 | 2 | 0.1 | 1 |
| 2 | 2 | 2.3 | 1 |
| 3 | 2 | 0.2 | 1 |
| 4 | 2 | 0.1 | 2 |
| 5 | 2 | 2.3 | 2 |
| 6 | 2 | 4.5 | 2 |
| 7 | 2 | 6.7 | 2 |
| 8 | 2 | 0.4 | 2 |
| 9 | 2 | 2.6 | 2 |
| 10 | 2 | 8.9 | 2 |
| 11 | 2 | 10.11 | 2 |
| 12 | 2 | 12.13 | 2 |
| 13 | 2 | 14.15 | 2 |
| 14 | 2 | 8.12 | 2 |
| 15 | 2 | 10.14 | 2 |
| 16 | 2 | 9.13 | 2 |
| 17 | 2 | 11.15 | 2 |
| 18 to 31 | Reserved (Reserved) | Reserved (Reserved) | Reserved (Reserved) |

Table 23 shows values (value) of port index indication information corresponding to DMRS port indexes 0 to 15, where 10 to 17 are indication information newly added based on original indication information in this embodiment of this application, and respectively indicate port combinations whose DMRS port indexes are greater than or equal to 8. In this application, another manner of indicating the DMRS port index is not excluded.

Table 24 shows an example of a table of a correspondence between DMRS port index indication information and a DMRS port index when rank=3 according to an embodiment of this application, where rank=3 indicates that a quantity of transmission layers is 3, and the sending device configures three DMRS ports for the receiving device. maxLength indicates a maximum quantity of front-loaded symbols of the DMRS.

**Table 24: Table of a correspondence between DMRS port index indication information and a DMRS port index**
**(Antenna port(s), transform precoder is disabled, dmrs-Type=1, maxLength=2, rank=3)**

| Indication information (Value) | Number of DMRS CDM group(s) without data (Number of DMRS CDM group(s) without data) | DMRS port index (DMRS port(s)) | Number of front-loaded symbols (Number of front-loaded symbols) |
|---|---|---|---|
| 0 | 2 | 0 to 2 | 1 |
| 1 | 2 | 0, 1, 4 | 2 |
| 2 | 2 | 2, 3, 6 | 2 |
| 3 | 2 | 8, 9, 10 | 2 |
| 4 | 2 | 8, 9, 12 | 2 |

(continued)

| Indication information (Value) | Number of DMRS CDM group(s) without data (Number of DMRS CDM group(s) without data) | DMRS port index (DMRS port(s)) | Number of front-loaded symbols (Number of front-loaded symbols) |
|---|---|---|---|
| 5 | 2 | 10, 11, 14 | 2 |
| 6 | 2 | 10, 11, 15 | 2 |
| 7 | 2 | 12, 13, 15 | 2 |
| 8 to 15 | Reserved (Reserved) | Reserved (Reserved) | Reserved (Reserved) |

Table 24 shows values (value) of port index indication information corresponding to DMRS port indexes 0 to 15, where 3 to 7 are indication information newly added based on original indication information in this embodiment of this application, and respectively indicate port combinations whose DMRS port indexes are greater than or equal to 8. In this application, another manner of indicating the DMRS port index is not excluded.

Table 25 shows an example of a table of a correspondence between DMRS port index indication information and a DMRS port index when rank=4 according to an embodiment of this application, where rank=4 indicates that a quantity of transmission layers is 4, and the sending device configures four DMRS ports for the receiving device. max-Length indicates a maximum quantity of front-loaded symbols of the DMRS.

**Table 25: Table of a correspondence between DMRS port index indication information and a DMRS port index (Antenna port(s), transform precoder is disabled, dmrs-Type=1, maxLength=2, rank=4)**

| Indication information (Value) | Number of DMRS CDM group(s) without data (Number of DMRS CDM group(s) without data) | DMRS port index (DMRS port(s)) | Number of front-loaded symbols (Number of front-loaded symbols) |
|---|---|---|---|
| 0 | 2 | 0 to 3 | 1 |
| 1 | 2 | 0, 1, 4.5 | 2 |
| 2 | 2 | 2, 3, 6.7 | 2 |
| 3 | 2 | 0, 2, 4.6 | 2 |
| 4 | 2 | 8, 9, 12.13 | 2 |
| 5 | 2 | 10, 11, 14.15 | 2 |
| 6 | 2 | 8, 10, 12.14 | 2 |
| 7 to 15 | Reserved (Reserved) | Reserved (Reserved) | Reserved (Reserved) |

Table 25 shows values (value) of port index indication information corresponding to DMRS port indexes 0 to 15, where 4 to 6 are indication information newly added based on original indication information in this embodiment of this application, and respectively indicate port combinations whose DMRS port indexes are greater than or equal to 8. In this application, another manner of indicating the DMRS port index is not excluded.

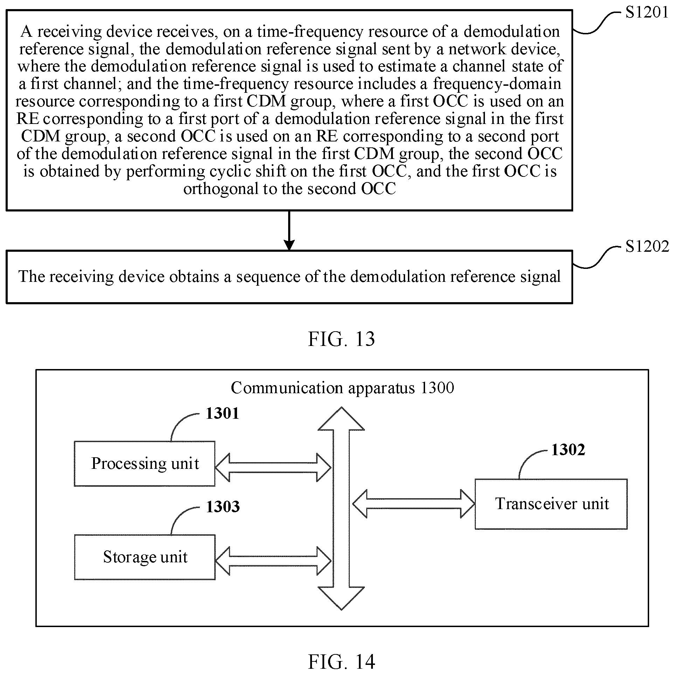

FIG. 13 is a flowchart of a signal transmission method implemented on a receiving device side according to an embodiment of this application. The method may be applied to the network architecture shown in FIG. 1, or certainly may be applied to another network architecture. This is not limited in this application. When the method is applied to the network architecture shown in FIG. 1, for downlink demodulation reference signal transmission, a sending device in the method may be the network device 101 in FIG. 1, and a receiving device in the method may be the terminal device (102a to 102d) in FIG. 1. For uplink demodulation reference signal transmission, a sending device in the method may be the terminal device (102a to 102d) in FIG. 1, and a receiving device in the method may be the network device 101 in FIG. 1.

Refer to FIG. 13. The method may include the following processing procedure.

S1201: A receiving device receives, on a time-frequency resource of a demodulation reference signal, the demodulation reference signal sent by a sending device.

For related descriptions of the demodulation reference signal and sending of the demodulation reference signal by the sending device, refer to related content in FIG. 11.

S1202: The receiving device obtains a sequence of the demodulation reference signal.

In some embodiments, a configuration information table of the demodulation reference signal is configured in the receiving device. For related descriptions of the configuration information table, refer to related descriptions in the procedure in FIG. 11. The receiving device may process the received demodulation reference signal based on the configuration information table of the demodulation reference signal, to obtain a sequence of the demodulation reference signal. Specifically, the following steps may be included:

Step 1: The receiving device obtains, based on the configuration information table of the demodulation reference signal, a CDM group frequency-domain offset, a frequency-domain OCC, a time-domain OCC, and a cyclic shift factor that correspond to a first RE *(k, l)*, where the first RE *(k, l)* has a subcarrier index of *k* and a symbol index of *l* in the time-frequency resource.

Step 2: The receiving device obtains, based on the CDM group frequency-domain offset, the frequency-domain OCC, the time-domain OCC, and the cyclic shift factor, data $\widetilde{\alpha}_{k,l}^{(\widetilde{p}_j,\mu)}$ of the demodulation reference signal on the first RE *(k, l)*, where the data $\widetilde{\alpha}_{k,l}^{(\widetilde{p}_j,\mu)}$ mapped to the first RE *(k, l)* satisfies Formula (12), Formula (13), or Formula (14).

In some embodiments, the receiving device receives indication information that is of a demodulation reference signal port index in a first CDM group and that is sent by the sending device, obtains, based on the indication information of the demodulation reference signal port index, the demodulation reference signal port index allocated by the sending device, queries the configuration information table of the demodulation reference signal based on the demodulation reference signal port index and the CDM group to which the demodulation reference signal port index belongs, to obtain an OCC code, and further calculates the sequence of the demodulation reference signal based on a mapping formula of the demodulation reference signal.

According to the foregoing embodiment of this application, a quantity of orthogonal DMRS ports may be increased without additionally increasing DMRS overheads. In addition, the new receiving device provided in this application may be compatible with an existing receiving device, that is, multi-user pairing may be performed between the new receiving device provided in this application and a receiving device that supports only an existing standard capability, and the existing receiving device does not need to be updated in terms of hardware and software. The expansion of DMRS orthogonal ports enables multi-user orthogonal pairing at more layers in the uplink or downlink, improving a system capacity.

Based on a same inventive concept, an embodiment of this application further provides a communication apparatus. The communication apparatus may have a structure shown in FIG. 14. The communication apparatus may be the sending device in the foregoing embodiment, or may be a chip or a chip system that can support the sending device in implementing the foregoing method. When the communication apparatus is the sending device in the foregoing embodiment, the communication apparatus has behavior functions of the sending device in the foregoing method embodiment. For downlink demodulation reference signal transmission, the communication apparatus may be a network device. For uplink demodulation reference signal transmission, the communication apparatus may be a terminal device.

As shown in FIG. 14, the communication apparatus 1300 may include a processing unit 1301 and a transceiver unit 1302. The communication apparatus 1300 may further have a storage unit 1303, and the storage unit 1303 may be coupled to the processing unit 1301, and is configured to store a program or an instruction that are required by the processing unit 1301 to perform a function.

Based on the communication apparatus shown in FIG. 14, the communication apparatus may implement the method shown in FIG. 3.

Specifically, in some embodiments, the processing unit 1301 may be configured to generate a sequence of a demodulation reference signal, where the demodulation reference signal is used to estimate a channel state of a first channel; and the transceiver unit 1302 may be configured to map the sequence of the demodulation reference signal to a time-frequency resource of the demodulation reference signal for sending. The time-frequency resource includes frequency-domain resources corresponding to a first CDM group. The frequency-domain resources corresponding to the first CDM group are non-contiguous and equally spaced; a first PRB in the frequency-domain resources corresponding to the first CDM group includes a first group of subcarriers and a second group of subcarriers; and the first group of subcarriers and the second group of subcarriers each include two subcarriers, the first group of subcarriers corresponds to a first group of OCCs, the second group of subcarriers corresponds to a second group of OCCs, and the first group of OCCs is orthogonal to the second group of OCCs.

Further, in some embodiments, the first PRB further includes a third group of subcarriers, the third group of subcarriers includes two subcarriers, and the third group of subcarriers corresponds to the first group of OCCs.

Further, in some embodiments, a configuration information table of the demodulation reference signal includes a correspondence between a demodulation reference signal port index, a CDM group frequency-domain offset, and an OCC, the OCC includes a frequency-domain OCC and a time-domain OCC, and the frequency-domain OCC includes a first group of OCCs and a second group of OCCs.

Further, in some embodiments, a configuration information table of the demodulation reference signal includes a first configuration information table and a second configuration information table; the first configuration information table includes a correspondence between a demodulation reference signal port index, a CDM group frequency-domain offset, and an OCC, and the OCC includes a frequency-domain OCC and a time-domain OCC; and the second configuration information table includes a correspondence between a demodulation reference signal port index, a CDM group frequency-domain offset, and an OCC, the OCC includes a frequency-domain OCC and a time-domain OCC, the frequency-domain OCC includes a first group of OCCs and a second group of OCCs, and the demodulation reference signal port indexes included in the second configuration information table and the first configuration information table are different.

Further, in some embodiments, the processing unit 1301 is further configured to obtain, based on the configuration information table, a first group of OCCs corresponding to the first group of subcarriers and a second group of OCCs corresponding to the second group of subcarriers.

Further, in some embodiments, the processing unit 1301 is configured to obtain, based on the configuration information table, a CDM group frequency-domain offset, a frequency-domain OCC, and a time-domain OCC that correspond to a first RE *(k, l),* where the first RE *(k, l)* has a subcarrier index of *k* and a symbol index of *l* in the time-frequency resource; and obtain, based on the CDM group frequency-domain offset, the frequency-domain OCC, and the time-domain OCC, data $\tilde{\alpha}_{k,l}^{(\tilde{p}_j,\mu)}$ of the sequence of the demodulation reference signal mapped to the first RE *(k, l),* where the data $\tilde{\alpha}_{k,l}^{(\tilde{p}_j,\mu)}$ mapped to the first RE *(k, l)* satisfies Formula (4).

Further, in some embodiments, the processing unit 1301 is configured to send indication information of the demodulation reference signal port index in the first CDM group to a receiving device.

Further, in some embodiments, a maximum quantity of demodulation reference signal ports included in the first CDM group is at least 4N, and N is a quantity of symbols occupied by the demodulation reference signal.

Based on the communication apparatus shown in FIG. 14, the communication apparatus may implement the method shown in FIG. 7.

Specifically, in some embodiments, the processing unit 1301 may be configured to generate a sequence of a demodulation reference signal, where the demodulation reference signal is used to estimate a channel state of a first channel; and the transceiver unit 1302 may be configured to map the sequence of the demodulation reference signal to a time-frequency resource of the demodulation reference signal for sending. The time-frequency resource includes frequency-domain resources corresponding to a first CDM group, and the frequency-domain resources corresponding to the first CDM group are non-contiguous and equally spaced. Time-domain resources corresponding to the first CDM group include a first group of symbols and a second group of symbols, the first group of symbols corresponds to a first group of OCCs, the second group of symbols corresponds to a second group of OCCs, and the first group of OCCs is orthogonal to the second group of OCCs.

Further, in some embodiments, a configuration information table of the demodulation reference signal includes a correspondence between a demodulation reference signal type, a demodulation reference signal port index, a CDM group frequency-domain offset, and an OCC, the OCC includes a frequency-domain OCC and a time-domain OCC, the time-domain OCC includes a first group of OCCs and a second group of OCCs, the first group of OCCs corresponds to a first demodulation reference signal type, the second group of OCCs corresponds to a second demodulation reference signal type, the first demodulation reference signal type corresponds to the first group of symbols, and the second demodulation reference signal type corresponds to the second group of symbols.

Further, in some embodiments, the configuration information table of the demodulation reference signal includes a first configuration information table and a second configuration information table, the first configuration information table corresponds to a first demodulation reference signal type, the second configuration information table corresponds to a second demodulation reference signal type, the first demodulation reference signal type corresponds to the first group of symbols, and the second demodulation reference signal type corresponds to the second group of symbols; the first configuration information table includes a correspondence between a demodulation reference signal port index, a CDM group frequency-domain offset, and an OCC, the OCC includes a frequency-domain OCC and a time-domain OCC, and the time-domain OCC is the first group of OCCs; and the second configuration information table includes a correspondence between a demodulation reference signal port index, a CDM group frequency-domain offset, and an OCC, where the OCC includes a frequency-domain OCC and a time-domain OCC, and the time-domain OCC is the second group of OCCs.

Further, in some embodiments, a configuration information table of the demodulation reference signal includes a correspondence between a demodulation reference signal type, a demodulation reference signal port index, a CDM group frequency-domain offset, and an OCC, the OCC includes a frequency-domain OCC and a time-domain OCC, the frequency-domain OCC includes a first group of OCCs and a second group of OCCs, the first group of OCCs corresponds to a first demodulation reference signal type, the second group of OCCs corresponds to a second demodulation reference signal type, the first demodulation reference signal type corresponds to the first group of symbols, and the second demodulation reference signal type corresponds to the second group of symbols.

Further, in some embodiments, the configuration information table of the demodulation reference signal includes a first configuration information table and a second configuration information table, the first configuration information table corresponds to a first demodulation reference signal type, the second configuration information table corresponds to a second demodulation reference signal type, the first demodulation reference signal type corresponds to the first group of symbols, and the second demodulation reference signal type corresponds to the second group of symbols; the first configuration information table includes a correspondence between a demodulation reference signal port index, a CDM group frequency-domain offset, and an OCC, the OCC includes a frequency-domain OCC and a time-domain OCC, and the frequency-domain OCC is the first group of OCCs; and the second configuration information table includes a correspondence between a demodulation reference signal port index, a CDM group frequency-domain offset, and an OCC, where the OCC includes a frequency-domain OCC and a time-domain OCC, and the frequency-domain OCC is the second group of OCCs.

Further, in some embodiments, the processing unit 1301 is configured to obtain, based on the configuration information table and a demodulation reference signal type, a first group of OCCs corresponding to the first group of symbols and a second group of OCCs corresponding to the second group of symbols.

Further, in some embodiments, the mapping, by the processing unit 1301, the sequence of the demodulation reference signal to a time-frequency resource of the demodulation reference signal includes: obtaining, based on the configuration information table, a CDM group frequency-domain offset, a frequency-domain OCC, and a time-domain OCC that correspond to a first RE *(k, l)*, where the first RE *(k, l)* has a subcarrier index of *k* and a symbol index of *l* in the time-frequency resource; and obtaining, based on the CDM group frequency-domain offset, the frequency-domain OCC, and the time-domain OCC, data $\widetilde{\alpha}_{k,l}^{(\widetilde{p}_j,\mu)}$ of the sequence of the demodulation reference signal mapped to the first RE *(k, l)*, where the data $\widetilde{\alpha}_{k,l}^{(\widetilde{p}_j,\mu)}$ mapped to the first RE *(k, l)* satisfies Formula (6) or Formula (7).

Further, in some embodiments, the processing unit 1301 is configured to send indication information of the demodulation reference signal port index in the first CDM group to a receiving device.

Further, in some embodiments, a maximum quantity of demodulation reference signal ports included in the first CDM group is at least 4N, N is a quantity of symbols included in the first group of symbols or the second group of symbols, and the first group of symbols and the second group of symbols include a same quantity of symbols.

Based on the communication apparatus shown in FIG. 14, the communication apparatus may implement the method shown in FIG. 10.

Specifically, in some embodiments, the processing unit 1301 may be configured to generate a sequence of a demodulation reference signal, where the demodulation reference signal is used to estimate a channel state of a first channel; and the transceiver unit 1302 may be configured to map the sequence of the demodulation reference signal to a time-frequency resource of the demodulation reference signal for sending. A first OCC is used on an RE corresponding to a first port of a demodulation reference signal in the first CDM group, a second OCC is used on an RE corresponding to a second port of the demodulation reference signal in the first CDM group, the second OCC is obtained by performing cyclic shift on the first OCC, and the first OCC is orthogonal to the second OCC.

Further, in some embodiments, a configuration information table of the demodulation reference signal includes a correspondence between a demodulation reference signal port index, a CDM group frequency-domain offset, an OCC, and a cyclic shift factor, where the OCC includes a frequency-domain OCC and a time-domain OCC.

Further, in some embodiments, the processing unit 1301 is configured to: obtain, based on the configuration information table, a frequency-domain OCC, a time-domain OCC, and a cyclic shift factor that correspond to a demodulation reference signal port index, and perform cyclic shift on the obtained frequency-domain OCC and the obtained time-domain OCC based on the obtained cyclic shift factor.

Further, in some embodiments, the processing unit 1301 is configured to: obtain, based on the configuration information table, a CDM group frequency-domain offset, a frequency-domain OCC, a time-domain OCC, and a cyclic shift factor that correspond to a first RE *(k, l)*, where the first RE *(k, l)* has a subcarrier index of *k* and a symbol index of *l* in the time-frequency resource; and obtain, based on the CDM group frequency-domain offset, the frequency-domain OCC, the time-domain OCC, and the cyclic shift factor, data $\widetilde{\alpha}_{k,l}^{(\widetilde{p}_j,\mu)}$ of the sequence of the demodulation reference signal mapped to the first RE *(k, l)*, where the data $\widetilde{\alpha}_{k,l}^{(\tilde{p}_j,\mu)}$ mapped to the first RE *(k, l)* satisfies Formula (12), Formula (13), or Formula (14).

Further, in some embodiments, the processing unit 1301 is configured to send indication information of the demodulation reference signal port index in the first CDM group to a receiving device.

Further, in some embodiments, a maximum quantity of demodulation reference signal ports included in the first CDM group is at least 4N, and N is a quantity of symbols occupied by the demodulation reference signal.

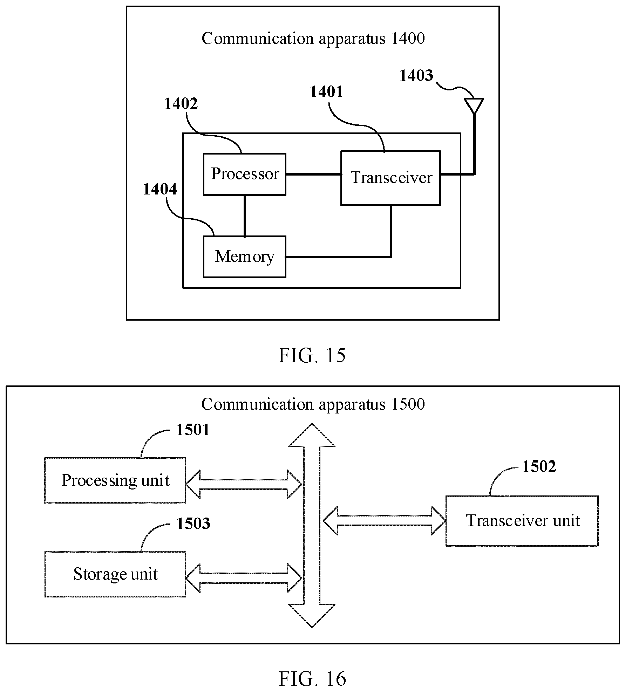

In addition, an embodiment of this application further provides a communication apparatus. The communication apparatus may have a structure shown in FIG. 15. The communication apparatus may be a sending device, or may be a chip or a chip system that can support a sending device in implementing the foregoing method. For downlink demodulation reference signal transmission, the communication apparatus may be a network device. For uplink demodulation reference signal transmission, the communication apparatus may be a terminal device.

A communication apparatus 1400 shown in FIG. 15 includes at least one processor 1402, where the at least one processor 1402 is coupled to a memory, and configured to read and execute instructions in the memory to implement steps performed by the sending device in the method provided in embodiments of this application. Optionally, the communication apparatus 1400 may further include a transceiver 1401, configured to support the communication apparatus 1400 in receiving or sending signaling or data. The transceiver 1401 in the communication apparatus 1400 may be configured to implement a function of the foregoing transceiver unit 1302. For example, the transceiver 1401 may be configured for the communication apparatus 1400 to perform the step of generating a sequence of a demodulation reference signal in the method shown in FIG. 3, FIG. 7, or FIG. 10. The processor 1402 may be configured to implement a function of the foregoing processing unit 1301, for example, the processor 1402 may be configured for the communication apparatus 1400 to perform the step of mapping a sequence of a demodulation reference signal to a time-frequency resource in the method shown in FIG. 3, FIG. 7, or FIG. 10. In addition, the transceiver 1401 may be coupled to an antenna 1403, and is configured to support the communication apparatus 1400 in performing communication. Optionally, the communication apparatus 1400 may further include a memory 1404, storing a computer program or an instruction. The memory 1404 may be coupled to the processor 1402 and/or the transceiver 1401, and configured to support the processor 1402 in invoking the computer program or instruction in the memory 1404 to implement steps performed by the sending device in the method provided in embodiments of this application. In addition, the memory 1404 may be further configured to store data in the method embodiment of this application, for example, configured to store data or an instruction necessary for supporting transceiver 1401 in implementing interaction, and/or configured to store configuration information necessary for the communication apparatus 1400 to perform the method in embodiments of this application.

Based on a same inventive concept, an embodiment of this application further provides a communication apparatus. The communication apparatus may have a structure shown in FIG. 16. The communication apparatus may be the receiving device in the foregoing embodiment, or may be a chip or a chip system that can support the receiving device in implementing the foregoing method. When the communication apparatus is the receiving device in the foregoing embodiment, the communication apparatus has behavior functions of the receiving device in the foregoing method embodiment. For downlink demodulation reference signal transmission, the communication apparatus may be a terminal device. For uplink demodulation reference signal transmission, the communication apparatus may be a network device.

As shown in FIG. 16, the communication apparatus 1500 may include a processing unit 1501 and a transceiver unit 1502. The communication apparatus 1500 may further have a storage unit 1503, and the storage unit 1503 may be coupled to the processing unit 1501, and is configured to store a program or an instruction that are required by the processing unit 1501 to perform a function.

Based on the communication apparatus shown in FIG. 16, the communication apparatus may implement the method shown in FIG. 6.

Specifically, in some embodiments, the transceiver unit 1502 may be configured to receive, on a time-frequency resource of a demodulation reference signal, the demodulation reference signal sent by a sending device, where the demodulation reference signal is used to estimate a channel state of a first channel; and the processing unit 1501 may be configured to obtain a sequence of the demodulation reference signal. The time-frequency resource includes frequency-domain resources corresponding to a first CDM group, and the frequency-domain resources corresponding to the first CDM group are non-contiguous and equally spaced; a first PRB in the frequency-domain resources corresponding to the first CDM group includes a first group of subcarriers and a second group of subcarriers; and the first group of subcarriers and the second group of subcarriers each include two subcarriers, the first group of subcarriers corresponds to a first group of orthogonal cover codes OCCs, the second group of subcarriers corresponds to a second group of OCCs, and the first group of OCCs is orthogonal to the second group of OCCs.

Further, in some embodiments, the first PRB further includes a third group of subcarriers, the third group of subcarriers includes two subcarriers, and the third group of subcarriers corresponds to the first group of OCCs.

Further, in some embodiments, a configuration information table of the demodulation reference signal includes a correspondence between a demodulation reference signal port index, a CDM group frequency-domain offset, and an OCC, the OCC includes a frequency-domain OCC and a time-domain OCC, and the frequency-domain OCC includes a first group of OCCs and a second group of OCCs.

Further, in some embodiments, a configuration information table of the demodulation reference signal includes a first configuration information table and a second configuration information table; the first configuration information table includes a correspondence between a demodulation reference signal port index, a CDM group frequency-domain offset, and an OCC, and the OCC includes a frequency-domain OCC and a time-domain OCC; and the second configuration information table includes a correspondence between a demodulation reference signal port index, a CDM group frequency-domain offset, and an OCC, the OCC includes a frequency-domain OCC and a time-domain OCC, the frequency-domain OCC includes a first group of OCCs and a second group of OCCs, and the demodulation reference signal port indexes included in the second configuration information table and the first configuration information table are different.

Further, in some embodiments, the processing unit 1501 is further configured to obtain, based on the configuration information table, a first group of OCCs corresponding to the first group of subcarriers and a second group of OCCs corresponding to the second group of subcarriers.

Further, in some embodiments, the processing unit 1501 is configured to obtain, based on the configuration information table, a CDM group frequency-domain offset, a frequency-domain OCC, and a time-domain OCC that correspond to a first RE *(k, l),* where the first RE *(k, l)* has a subcarrier index of *k* and a symbol index of *l* in the time-frequency resource; and obtain, based on the CDM group frequency-domain offset, the frequency-domain OCC, and the time-domain OCC, data $\widetilde{\alpha}_{k,l}^{(\widetilde{p}_j,\mu)}$ of the sequence of the demodulation reference signal mapped to the first RE *(k, l),* where the data $\widetilde{\alpha}_{k,l}^{(\widetilde{p}_j,\mu)}$ mapped to the first RE *(k, l)* satisfies Formula (4).

Further, in some embodiments, the processing unit 1501 is configured to receive indication information that is of the demodulation reference signal port index in the first CDM group and that is sent by the sending device.

Further, in some embodiments, a maximum quantity of demodulation reference signal ports included in the first CDM group is at least 4N, and N is a quantity of symbols occupied by the demodulation reference signal.

Based on the communication apparatus shown in FIG. 16, the communication apparatus may implement the method shown in FIG. 11.

Specifically, in some embodiments, the transceiver unit 1502 may be configured to receive, on a time-frequency resource of a demodulation reference signal, the demodulation reference signal sent by a sending device, where the demodulation reference signal is used to estimate a channel state of a first channel; and the processing unit 1501 may be configured to obtain a sequence of the demodulation reference signal. The time-frequency resource includes frequency-domain resources corresponding to a first CDM group, and the frequency-domain resources corresponding to the first CDM group are non-contiguous and equally spaced. Time-domain resources corresponding to the first CDM group include a first group of symbols and a second group of symbols, the first group of symbols corresponds to a first group of OCCs, the second group of symbols corresponds to a second group of OCCs, and the first group of OCCs is orthogonal to the second group of OCCs.

Further, in some embodiments, a configuration information table of the demodulation reference signal includes a correspondence between a demodulation reference signal type, a demodulation reference signal port index, a CDM group frequency-domain offset, and an OCC, the OCC includes a frequency-domain OCC and a time-domain OCC, the time-domain OCC includes a first group of OCCs and a second group of OCCs, the first group of OCCs corresponds to a first demodulation reference signal type, the second group of OCCs corresponds to a second demodulation reference signal type, the first demodulation reference signal type corresponds to the first group of symbols, and the second demodulation reference signal type corresponds to the second group of symbols.

Further, in some embodiments, the configuration information table of the demodulation reference signal includes a first configuration information table and a second configuration information table, the first configuration information table corresponds to a first demodulation reference signal type, the second configuration information table corresponds to a second demodulation reference signal type, the first demodulation reference signal type corresponds to the first group of symbols, and the second demodulation reference signal type corresponds to the second group of symbols; the first configuration information table includes a correspondence between a demodulation reference signal port index, a CDM group frequency-domain offset, and an OCC, the OCC includes a frequency-domain OCC and a time-domain OCC, and the time-domain OCC is the first group of OCCs; and the second configuration information table includes a correspondence between a demodulation reference signal port index, a CDM group frequency-domain offset, and an OCC, where the OCC includes a frequency-domain OCC and a time-domain OCC, and the time-domain OCC is the second group of OCCs.

Further, in some embodiments, a configuration information table of the demodulation reference signal includes a correspondence between a demodulation reference signal type, a demodulation reference signal port index, a CDM group frequency-domain offset, and an OCC, the OCC includes a frequency-domain OCC and a time-domain OCC, the frequency-domain OCC includes a first group of OCCs and a second group of OCCs, the first group of OCCs corresponds to a first demodulation reference signal type, the second group of OCCs corresponds to a second demodulation reference signal type, the first demodulation reference signal type corresponds to the first group of symbols, and the second demodulation reference signal type corresponds to the second group of symbols.

Further, in some embodiments, the configuration information table of the demodulation reference signal includes a first configuration information table and a second configuration information table, the first configuration information table corresponds to a first demodulation reference signal type, the second configuration information table corresponds to a second demodulation reference signal type, the first demodulation reference signal type corresponds to the first group of symbols, and the second demodulation reference signal type corresponds to the second group of symbols; the first configuration information table includes a correspondence between a demodulation reference signal port index, a CDM group frequency-domain offset, and an OCC, the OCC includes a frequency-domain OCC and a time-domain OCC, and the frequency-domain OCC is the first group of OCCs; and the second configuration information table includes a correspondence between a demodulation reference signal port index, a CDM group frequency-domain offset, and an OCC, where the OCC includes a frequency-domain OCC and a time-domain OCC, and the frequency-domain OCC is the second group of OCCs.

Further, in some embodiments, the processing unit 1501 is configured to obtain, based on the configuration information table and a demodulation reference signal type, a first group of OCCs corresponding to the first group of symbols and a second group of OCCs corresponding to the second group of symbols.

Further, in some embodiments, the mapping, by the processing unit 1501, the sequence of the demodulation reference signal to a time-frequency resource of the demodulation reference signal includes: obtaining, based on the configuration information table, a CDM group frequency-domain offset, a frequency-domain OCC, and a time-domain OCC that correspond to a first RE *(k, l)*, where the first RE *(k, l)* has a subcarrier index of $k$ and a symbol index of $l$ in the time-frequency resource; and obtaining, based on the CDM group frequency-domain offset, the frequency-domain OCC, and the time-domain OCC, data $\widetilde{\alpha}_{k,l}^{(\widetilde{p}_j,\mu)}$ of the sequence of the demodulation reference signal mapped to the first RE *(k, l)*, where the data $\widetilde{\alpha}_{k,l}^{(\widetilde{p}_j,\mu)}$ mapped to the first RE *(k, l)* satisfies Formula (6) or Formula (7).

Further, in some embodiments, the processing unit 1501 is configured to receive port index indication information that is of the demodulation reference signal and that is sent by the sending device.

Further, in some embodiments, a maximum quantity of demodulation reference signal ports included in the first CDM group is at least 4N, N is a quantity of symbols included in the first group of symbols or the second group of symbols, and the first group of symbols and the second group of symbols include a same quantity of symbols.

Based on the communication apparatus shown in FIG. 16, the communication apparatus may implement the method shown in FIG. 13.

Specifically, in some embodiments, the transceiver unit 1502 may be configured to receive, on a time-frequency resource of a demodulation reference signal, the demodulation reference signal sent by a sending device, where the demodulation reference signal is used to estimate a channel state of a first channel; and the processing unit 1501 may be configured to obtain a sequence of the demodulation reference signal. A first OCC is used on an RE corresponding to a first port of a demodulation reference signal in the first CDM group, a second OCC is used on an RE corresponding to a second port of the demodulation reference signal in the first CDM group, the second OCC is obtained by performing cyclic shift on the first OCC, and the first OCC is orthogonal to the second OCC.

Further, in some embodiments, a configuration information table of the demodulation reference signal includes a correspondence between a demodulation reference signal port index, a CDM group frequency-domain offset, an OCC, and a cyclic shift factor, where the OCC includes a frequency-domain OCC and a time-domain OCC.

Further, in some embodiments, the processing unit 1501 is configured to: obtain, based on the configuration information table, a frequency-domain OCC, a time-domain OCC, and a cyclic shift factor that correspond to a demodulation reference signal port index, and perform cyclic shift on the obtained frequency-domain OCC and the obtained time-domain OCC based on the obtained cyclic shift factor.

Further, in some embodiments, the processing unit 1501 is configured to: obtain, based on the configuration information table, a CDM group frequency-domain offset, a frequency-domain OCC, a time-domain OCC, and a cyclic shift factor that correspond to a first RE *(k, l)*, where the first RE *(k, l)* has a subcarrier index of $k$ and a symbol index of $l$ in the time-frequency resource; and obtain, based on the CDM group frequency-domain offset, the frequency-domain OCC, the time-domain OCC, and the cyclic shift factor, data $\widetilde{\alpha}_{k,l}^{(\widetilde{p}_j,\mu)}$ of the sequence of the demodulation reference signal mapped to the first RE *(k, l)*, where the data $\widetilde{\alpha}_{k,l}^{(\widetilde{p}_j,\mu)}$ mapped to the first RE *(k, l)* satisfies Formula (12), Formula (13), or Formula (14).

Further, in some embodiments, the processing unit 1501 is configured to send indication information of the demodulation reference signal port index in the first CDM group to a receiving device.

Further, in some embodiments, a maximum quantity of demodulation reference signal ports included in the first CDM group is at least 4N, and N is a quantity of symbols occupied by the demodulation reference signal.

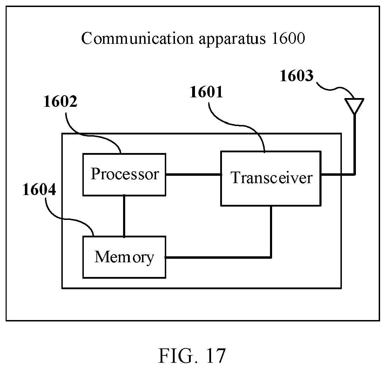

In addition, an embodiment of this application further provides a communication apparatus. The communication apparatus may have a structure shown in FIG. 17. The communication apparatus may be a receiving device, or may be a chip or a chip system that can support a receiving device in implementing the foregoing method. For downlink demodulation reference signal transmission, the communication apparatus may be a terminal device. For uplink demodulation reference signal transmission, the communication apparatus may be a network device.

A communication apparatus 1600 shown in FIG. 17 includes at least one processor 1602, where the at least one processor 1602 is coupled to a memory, and configured to read and execute instructions in the memory to implement steps performed by the receiving device in the method provided in embodiments of this application. Optionally, the communication apparatus 1600 may further include a transceiver 1601, configured to support the communication apparatus 1600 in receiving or sending signaling or data. The transceiver 1601 in the communication apparatus 1600 may be configured to implement a function of the foregoing transceiver unit 1502. For example, the transceiver 1601 may be configured for the communication apparatus 1600 to perform the step of receiving a demodulation reference signal in the method shown in FIG. 6, FIG. 10, or FIG. 13. The processor 1602 may be configured to implement a function of the foregoing processing unit 1501, for example, the processor 1602 may be configured for the communication apparatus 1600 to perform the step of obtaining a sequence of a demodulation reference signal in the method shown in FIG. 6, FIG. 10, or FIG. 13. In addition, the transceiver 1601 may be coupled to an antenna 1603, and is configured to support the communication apparatus 1600 in performing communication. Optionally, the communication apparatus 1600 may further include a memory 1604, storing a computer program or an instruction. The memory 1604 may be coupled to the processor 1602 and/or the transceiver 1601, and configured to support the processor 1602 in invoking the computer program or instruction in the memory 1604 to implement steps performed by the receiving device in the method provided in embodiments of this application. In addition, the memory 1604 may be further configured to store data in the method embodiment of this application, for example, configured to store data or an instruction necessary for supporting transceiver 1601 in implementing interaction, and/or configured to store configuration information necessary for the communication apparatus 1600 to perform the method in embodiments of this application.

Based on the same concept as the foregoing method embodiments, an embodiment of this application further provides a computer-readable storage medium. The computer-readable storage medium stores some instructions. When these instructions are invoked and executed by a computer, the computer is enabled to perform the method in the foregoing method embodiments and any possible design of the foregoing method embodiments. In this embodiment of this application, the computer-readable storage medium is not limited. For example, the computer-readable storage medium may be a RAM (random-access memory, random-access memory) or a ROM (read-only memory, read-only memory).

Based on a same concept as the foregoing method embodiments, this application further provides a computer program product. When being invoked and executed by a computer, the computer program product can perform the method in the foregoing method embodiments and any possible design of the foregoing method embodiments.

Based on a same concept as the foregoing method embodiments, this application further provides a chip. The chip may include a processor and an interface circuit, to complete the method in the foregoing method embodiments and any possible implementation of the foregoing method embodiments. "Coupling" means that two components are directly or indirectly combined with each other. The combination may be fixed or movable, and the combination may allow communication of fluid, electricity, an electrical signal, or another type of signal between two components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedure or functions according to embodiments of the present invention are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

Various illustrative logic units and circuits described in embodiments of this application may implement or operate the described functions by using a general-purpose processor, a digital signal processor, an application-specific integrated circuit (ASIC), a field programmable gate array (FPGA) or another programmable logical apparatus, a discrete gate or transistor logic, a discrete hardware component, or any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, a plurality of microprocessors, one or more microprocessors in combination with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an EPROM, an EEPROM, a register, a hard disk drive, a removable magnetic disk, a CD-ROM, or a storage medium of any other form in the art. For example, the storage medium may connect to a processor, so that the processor can read information from the storage medium and write information into the storage medium. Optionally, the storage medium may alternatively be integrated into the processor. The processor and the storage medium may be disposed in an ASIC, and the ASIC may be disposed in a terminal device. Optionally, the processor and the storage medium may alternatively be disposed in different components of a terminal device.

These computer program instructions may alternatively be loaded onto the computer or the another programmable data processing device, so that a series of operation steps are performed on the computer or the another programmable device to generate computer-implemented processing, and instructions executed on the computer or the another programmable device provide steps for implementing a function specified in one or more procedures in the flowchart and/or one or more blocks in the block diagram.

Although the present invention is described with reference to specific features and the embodiments thereof, it is clear that various modifications and combinations may be made to them without departing from the scope of the present invention. Correspondingly, the specification and accompanying drawings are merely example descriptions of the present invention defined by the appended claims, and is considered as any of or all modifications, variations, combinations or equivalents that cover the scope of the present invention. It is clear that, a person skilled in the art can make various modifications and variations to the present invention without departing from the spirit and scope of the present invention. The present invention is intended to cover these modifications and variations provided that they fall within the scope of protection defined by the following claims and their equivalent technologies.

**Claims**

1. A signal transmission method, comprising:

   generating, by a sending device, a sequence of a demodulation reference signal, wherein the demodulation reference signal is used to estimate a channel state of a first channel; and
   mapping, by the sending device, the sequence of the demodulation reference signal to a time-frequency resource of the demodulation reference signal for sending, wherein the time-frequency resource comprises frequency-domain resources corresponding to a first code division multiplexing CDM group, and the frequency-domain resources corresponding to the first CDM group are non-contiguous and equally spaced; a first physical resource block PRB in the frequency-domain resources corresponding to the first CDM group comprises a first group of subcarriers and a second group of subcarriers; and the first group of subcarriers and the second group of subcarriers each comprise two subcarriers, the first group of subcarriers corresponds to a first group of orthogonal cover codes OCCs, the second group of subcarriers corresponds to a second group of OCCs, and the first group of OCCs is orthogonal to the second group of OCCs.

2. The method according to claim 1, wherein a configuration information table of the demodulation reference signal comprises a correspondence between a demodulation reference signal port index, a CDM group frequency-domain offset, and an OCC, the OCC comprises a frequency-domain OCC and a time-domain OCC, and the frequency-domain OCC comprises a first group of OCCs and a second group of OCCs.

3. The method according to claim 1, wherein a configuration information table of the demodulation reference signal comprises a first configuration information table and a second configuration information table;

the first configuration information table comprises a correspondence between a demodulation reference signal port index, a CDM group frequency-domain offset, and an OCC, and the OCC comprises a frequency-domain OCC and a time-domain OCC; and

the second configuration information table comprises a correspondence between a demodulation reference signal port index, a CDM group frequency-domain offset, and an OCC, the OCC comprises a frequency-domain OCC and a time-domain OCC, the frequency-domain OCC comprises a first group of OCCs and a second group of OCCs, and the demodulation reference signal port indexes comprised in the second configuration information table and the first configuration information table are different.

4. The method according to claim 2 or 3, wherein the mapping, by the sending device, the sequence of the demodulation reference signal to a time-frequency resource of the demodulation reference signal comprises:

obtaining, by the sending device based on the configuration information table, a CDM group frequency-domain offset, a frequency-domain OCC, and a time-domain OCC that correspond to a first RE *(k, l)*, wherein the first RE *(k, l)* has a subcarrier index of *k* and a symbol index of *l* in the time-frequency resource; and

obtaining, based on the CDM group frequency-domain offset, the frequency-domain OCC, and the time-domain OCC, data $\tilde{\alpha}_{k,l}^{(\tilde{p}_j,\mu)}$ of the sequence of the demodulation reference signal mapped to the first RE *(k, l)*, wherein the data $\tilde{\alpha}_{k,l}^{(\tilde{p}_j,\mu)}$ mapped to the first RE *(k, l)* satisfies:

$$\tilde{\alpha}_{k,l}^{(\tilde{p}_j,\mu)} = W_f(k' + 2t)W_t(l')r(2n + k')$$

$$k = 4n + 2k' + \Delta$$

k' = 0,1
t = mod(n, 2)
$l = \bar{l} + l'$
n = 0,1,⋯
j = 0,1,⋯,v - 1

wherein $W_f(k' + 2t)$ is a frequency-domain OCC, $W_t(l')$ is a time-domain OCC, and r(2n + k') is an initial sequence of the demodulation reference signal; and $\Delta$ is a CDM group frequency-domain offset, $\bar{l}$ is an index of a start symbol of the demodulation reference signal, *l'* is a symbol offset of the demodulation reference signal, and v is a quantity of transmission layers, wherein when t=0, the frequency-domain OCC is a first group of OCCs; and when t=1, the frequency-domain OCC is a second group of OCCs.

5. A signal transmission method, comprising:

generating, by a sending device, a sequence of a demodulation reference signal, wherein the demodulation reference signal is used to estimate a channel state of a first channel; and

mapping, by the sending device, the sequence of the demodulation reference signal to a time-frequency resource of the demodulation reference signal for sending, wherein the time-frequency resource comprises frequency-domain resources corresponding to a first code division multiplexing CDM group, and the frequency-domain resources corresponding to the first CDM group are non-contiguous and equally spaced; time-domain resources corresponding to the first CDM group comprise a first group of symbols and a second group of symbols, the first group of symbols corresponds to a first group of orthogonal cover codes OCCs, the second group of symbols corresponds to a second group of OCCs, and the first group of OCCs is orthogonal to the second group of OCCs.

6. The method according to claim 5, wherein a configuration information table of the demodulation reference signal comprises a correspondence between a demodulation reference signal type, a demodulation reference signal port index, a CDM group frequency-domain offset, and an OCC, the OCC comprises a frequency-domain OCC and a time-domain OCC, the time-domain OCC comprises a first group of OCCs and a second group of OCCs, the first group of OCCs corresponds to a first demodulation reference signal type, the second group of OCCs corresponds to a second demodulation reference signal type, the first demodulation reference signal type corresponds to the first group of symbols, and the second demodulation reference signal type corresponds to the second group of symbols.

**7.** The method according to claim 6, wherein the mapping, by the sending device, the sequence of the demodulation reference signal to a time-frequency resource of the demodulation reference signal comprises:

obtaining, by the sending device based on the configuration information table, a CDM group frequency-domain offset, a frequency-domain OCC, and a time-domain OCC that correspond to a first RE *(k, l)*, wherein the first RE *(k, l)* has a subcarrier index of *k* and a symbol index of *l* in the time-frequency resource; and
obtaining, based on the CDM group frequency-domain offset, the frequency-domain OCC, and the time-domain OCC, data $\widetilde{\alpha}_{k,l}^{(\widetilde{p}_j,\mu)}$ of the sequence of the demodulation reference signal mapped to the first RE *(k, l)*, wherein the data $\widetilde{\alpha}_{k,l}^{(\widetilde{p}_j,\mu)}$ mapped to the first RE *(k, l)* satisfies:

$$\widetilde{\alpha}_{k,l}^{(\widetilde{p}_j,\mu)} = W_f(k')W_t(l',s)r(2n + k')$$

$$k = 4n + 2k' + \Delta$$

k' = 0,1
s = 0,1
$l = \overline{l} + l'$
n = 0,1,⋯
j = 0,1,⋯,v - 1

wherein $W_f(k')$ is a frequency-domain OCC, $W_t(l')$ is a time-domain OCC, and r(2n + k') is an initial sequence of the demodulation reference signal; and $\Delta$ is a CDM group frequency-domain offset, $\overline{l}$ is an index of a start symbol of the demodulation reference signal, *l'* is a symbol offset of the demodulation reference signal, and v is a quantity of transmission layers, wherein when s=0, the time-domain OCC is a first group of OCCs; and when s=1, the time-domain OCC is a second group of OCCs.

**8.** The method according to claim 5, wherein a configuration information table of the demodulation reference signal comprises a correspondence between a demodulation reference signal type, a demodulation reference signal port index, a CDM group frequency-domain offset, and an OCC, the OCC comprises a frequency-domain OCC and a time-domain OCC, the frequency-domain OCC comprises a first group of OCCs and a second group of OCCs, the first group of OCCs corresponds to a first demodulation reference signal type, the second group of OCCs corresponds to a second demodulation reference signal type, the first demodulation reference signal type corresponds to the first group of symbols, and the second demodulation reference signal type corresponds to the second group of symbols.

**9.** The method according to claim 8, wherein the mapping, by the sending device, the sequence of the demodulation reference signal to a time-frequency resource of the demodulation reference signal comprises:

obtaining, by the sending device based on the configuration information table, a CDM group frequency-domain offset, a frequency-domain OCC, and a time-domain OCC that correspond to a first RE *(k, l)*, wherein the first RE *(k, l)* has a subcarrier index of *k* and a symbol index of *l* in the time-frequency resource; and
obtaining, based on the CDM group frequency-domain offset, the frequency-domain OCC, and the time-domain OCC, data $\widetilde{\alpha}_{k,l}^{(\widetilde{p}_j,\mu)}$ of the sequence of the demodulation reference signal mapped to the first RE *(k, l)*, wherein the data $\widetilde{\alpha}_{k,l}^{(\widetilde{p}_j,\mu)}$ mapped to the first RE *(k, l)* satisfies:

$$\tilde{\alpha}_{k,l}^{(\tilde{p}_j,\mu)} = W_f(k',s)W_t(l')r(2n+k')$$

$$k = 4n + 2k' + \Delta$$

k' = 0,1
s = 0,1
l = $\bar{l}$ + l'
n = 0,1,···
j = 0,1,···,v - 1
wherein $W_f(k')$ is a frequency-domain OCC, $W_t(l')$ is a time-domain OCC, and r(2n + k') is an initial sequence of the demodulation reference signal; and $\Delta$ is a CDM group frequency-domain offset, $\bar{l}$ is an index of a start symbol of the demodulation reference signal, l' is a symbol offset of the demodulation reference signal, and v is a quantity of transmission layers, wherein when s=0, the frequency-domain OCC is a first group of OCCs; and when s=1, the frequency-domain OCC is a second group of OCCs.

10. A signal transmission method, comprising:

generating, by a sending device, a sequence of a demodulation reference signal, wherein the demodulation reference signal is used to estimate a channel state of a first channel; and
mapping, by the sending device, the sequence of the demodulation reference signal to a time-frequency resource of the demodulation reference signal for sending, wherein
the time-frequency resource comprises a frequency-domain resource corresponding to a first port of a demodulation reference signal in a first code division multiplexing CDM group and a frequency-domain resource corresponding to a second port of the demodulation reference signal, the frequency-domain resource corresponding to the first port is the same as the frequency-domain resource corresponding to the second port, the frequency-domain resource corresponding to the first port and the frequency-domain resource corresponding to the second port are non-contiguous and equally spaced, a first physical resource block PRB in the frequency-domain resource corresponding to the first port and the frequency-domain resource corresponding to the second port comprises at least two subcarrier groups, each of the at least two subcarrier groups comprises two subcarriers, and the at least two subcarrier groups comprise a first subcarrier group and a second subcarrier group, or comprise a first subcarrier group, a second subcarrier group, and a third subcarrier group; and
orthogonal cover codes OCCs used on REs corresponding to all subcarriers in the at least two subcarrier groups for the frequency-domain resource corresponding to the first port form a first OCC code sequence, and OCC codes used on the REs corresponding to all the subcarriers in the at least two subcarrier groups for the frequency-domain resource corresponding to the second port form a second OCC code sequence; and for the frequency-domain resource corresponding to the first port or the second port, OCC codes used on the REs corresponding to two subcarriers in the first subcarrier group form a third OCC code sequence, and OCC codes used on REs corresponding to two subcarriers in the second subcarrier group form a fourth OCC code sequence, wherein the second OCC code sequence is obtained by performing cyclic shift based on the first OCC code sequence, and the third OCC code sequence is different from the fourth OCC code sequence.

11. The method according to claim 10, wherein a configuration information table of the demodulation reference signal comprises a correspondence between a demodulation reference signal port index, a CDM group frequency-domain offset, an OCC, and a cyclic shift factor, wherein the OCC comprises a frequency-domain OCC and a time-domain OCC; and
the method further comprises:
obtaining, by the sending device based on the configuration information table, a frequency-domain OCC, a time-domain OCC, and a cyclic shift factor that correspond to a demodulation reference signal port index, and performing cyclic shift on the obtained frequency-domain OCC and the obtained time-domain OCC based on the obtained cyclic shift factor.

12. The method according to claim 10 or 11, wherein the mapping, by the sending device, the sequence of the demodulation reference signal to a time-frequency resource of the demodulation reference signal comprises:

obtaining, by the sending device based on the configuration information table, a CDM group frequency-domain offset, a frequency-domain OCC, a time-domain OCC, and a cyclic shift factor that correspond to a first RE *(k, l)*, wherein the first RE *(k, l)* has a subcarrier index of *k* and a symbol index of *l* in the time-frequency resource; and obtaining, based on the CDM group frequency-domain offset, the frequency-domain OCC, the time-domain OCC, and the cyclic shift factor, data $\widetilde{\alpha}_{k,l}^{(\widetilde{p}_j,\mu)}$ of the sequence of the demodulation reference signal mapped to the first RE *(k, l)*, wherein the data $\widetilde{\alpha}_{k,l}^{(\widetilde{p}_j,\mu)}$ mapped to the first RE *(k, l)* satisfies:

$$\widetilde{\alpha}_{k,l}^{(\widetilde{p}_j,\mu)} = e^{\frac{j2\phi\pi m}{6M}} W_f(k') W_t(l') r(2n + k')$$

$$k = 4n + 2k' + \Delta$$

k' = 0,1

$m = \mathrm{mod}(\lfloor k/2 \rfloor, 6M)$

$l = \overline{l} + l'$

n = 0,1,···

j = 0,1,···,v - 1

or the data $\widetilde{\alpha}_{k,l}^{(\widetilde{p}_j,\mu)}$ mapped to the first RE *(k, l)* satisfies:

$$\widetilde{\alpha}_{k,l}^{(\widetilde{p}_j,\mu)} = e^{\frac{j2\phi\pi m}{4}} W_f(k') W_t(l') r(2n + k')$$

$$k = 4n + 2k' + \Delta$$

k' = 0,1

$m = \mathrm{mod}(\lfloor k/2 \rfloor, 4)$

$l = \overline{l} + l'$

n = 0,1,···

j = 0,1,···,v - 1

wherein $W_f(k')$ is a frequency-domain OCC, $W_t(l')$ is a time-domain OCC, and r(2n + k') is an initial sequence of the demodulation reference signal; and Δ is a CDM group frequency-domain offset, $\overline{l}$ is an index of a start symbol of the demodulation reference signal, l' is a symbol offset of the demodulation reference signal, v is a quantity of transmission layers, $\phi$ is a cyclic shift factor, and m is a positive integer greater than or equal to 1.

13. A signal transmission method, comprising:

receiving, by a receiving device on a time-frequency resource of a demodulation reference signal, the demodulation reference signal sent by a sending device, wherein the demodulation reference signal is used to estimate a channel state of a first channel; the time-frequency resource comprises frequency-domain resources corresponding to a first code division multiplexing CDM group, and the frequency-domain resources corresponding to the first CDM group are non-contiguous and equally spaced; a first physical resource block PRB in the frequency-domain resources corresponding to the first CDM group comprises a first group of subcarriers and a second group of subcarriers; and the first group of subcarriers and the second group of subcarriers each comprise two subcarriers, the first group of subcarriers corresponds to a first group of orthogonal cover codes OCCs, the second group of subcarriers corresponds to a second group of OCCs, and the first group of OCCs is orthogonal to the second group of OCCs; and
obtaining, by the receiving device, a sequence of the demodulation reference signal.

14. The method according to claim 13, wherein a configuration information table of the demodulation reference signal comprises a correspondence between a demodulation reference signal port index, a CDM group frequency-domain offset, and an OCC, the OCC comprises a frequency-domain OCC and a time-domain OCC, and the frequency-domain OCC comprises a first group of OCCs and a second group of OCCs.

15. The method according to claim 13, wherein a configuration information table of the demodulation reference signal comprises a first configuration information table and a second configuration information table;

the first configuration information table comprises a correspondence between a demodulation reference signal port index, a CDM group frequency-domain offset, and an OCC, and the OCC comprises a frequency-domain OCC and a time-domain OCC; and
the second configuration information table comprises a correspondence between a demodulation reference signal port index, a CDM group frequency-domain offset, and an OCC, the OCC comprises a frequency-domain OCC and a time-domain OCC, the frequency-domain OCC comprises a first group of OCCs and a second group of OCCs, and the demodulation reference signal port indexes comprised in the second configuration information table and the first configuration information table are different.

16. The method according to claim 14 or 15, wherein the obtaining, by the receiving device, a sequence of the demodulation reference signal comprises:

obtaining, by the receiving device based on the configuration information table, a CDM group frequency-domain offset, a frequency-domain OCC, and a time-domain OCC that correspond to a first RE *(k, l)*, wherein the first RE *(k, l)* has a subcarrier index of *k* and a symbol index of *l* in the time-frequency resource; and
obtaining, based on the CDM group frequency-domain offset, the frequency-domain OCC, and the time-domain OCC, data $\widetilde{\alpha}_{k,l}^{(\widetilde{p}_j,\mu)}$ of the sequence of the demodulation reference signal mapped to the first RE *(k, l)*, wherein the data $\widetilde{\alpha}_{k,l}^{(\widetilde{p}_j,\mu)}$ mapped to the first RE *(k, l)* satisfies:

$$\widetilde{\alpha}_{k,l}^{(\widetilde{p}_j,\mu)} = W_f(k' + 2t)W_t(l')r(2n + k')$$

$$k = 4n + 2k' + \Delta$$

k' = 0,1
t = mod(n, 2)
$l = \overline{l} + l'$
n = 0,1,···
j = 0,1,···,v − 1
wherein $W_f(k' + 2t)$ is a frequency-domain OCC, $W_t(l')$ is a time-domain OCC, and r(2n + k') is an initial sequence of the demodulation reference signal; and Δ is a CDM group frequency-domain offset, $\overline{l}$ is an index of a start symbol of the demodulation reference signal, *l'* is a symbol offset of the demodulation reference signal, and v is a quantity of transmission layers, wherein when t=0, the frequency-domain OCC is a first group of OCCs; and when t=1, the frequency-domain OCC is a second group of OCCs.

17. A signal transmission method, comprising:

receiving, by a receiving device on a time-frequency resource of a demodulation reference signal, the demodulation reference signal sent by a sending device, wherein the demodulation reference signal is used to estimate a channel state of a first channel; the time-frequency resource comprises frequency-domain resources corresponding to a first code division multiplexing CDM group, and the frequency-domain resources corresponding to the first CDM group are non-contiguous and equally spaced; time-domain resources corresponding to the first CDM group comprise a first group of symbols and a second group of symbols, the first group of symbols corresponds to a first group of orthogonal cover codes OCCs, the second group of symbols corresponds to a second group of OCCs, and the first group of OCCs is orthogonal to the second group of OCCs; and
obtaining, by the receiving device, a sequence of the demodulation reference signal.

18. The method according to claim 17, wherein a configuration information table of the demodulation reference signal comprises a correspondence between a demodulation reference signal type, a demodulation reference signal port index, a CDM group frequency-domain offset, and an OCC, the OCC comprises a frequency-domain OCC and a time-domain OCC, the time-domain OCC comprises a first group of OCCs and a second group of OCCs, the first group of OCCs corresponds to a first demodulation reference signal type, the second group of OCCs corresponds to a second demodulation reference signal type, the first demodulation reference signal type corresponds to the first group of symbols, and the second demodulation reference signal type corresponds to the second group of symbols.

19. The method according to claim 18, wherein the obtaining, by the receiving device, a sequence of the demodulation reference signal comprises:

   obtaining, by the receiving device based on the configuration information table, a CDM group frequency-domain offset, a frequency-domain OCC, and a time-domain OCC that correspond to a first RE *(k, l)*, wherein the first RE *(k, l)* has a subcarrier index of *k* and a symbol index of *l* in the time-frequency resource; and
   obtaining, based on the CDM group frequency-domain offset, the frequency-domain OCC, and the time-domain OCC, data $\widetilde{\alpha}_{k,l}^{(\widetilde{p}_j,\mu)}$ of the sequence of the demodulation reference signal mapped to the first RE *(k, l)*, wherein the data $\widetilde{\alpha}_{k,l}^{(\widetilde{p}_j,\mu)}$ mapped to the first RE *(k, l)* satisfies:

$$\widetilde{\alpha}_{k,l}^{(\widetilde{p}_j,\mu)} = W_f(k')W_t(l',s)r(2n + k')$$

$$k = 4n + 2k' + \Delta$$

   k' = 0,1
   s = 0,1
   $l = \overline{l} + l'$
   n = 0,1,⋯ .
   j = 0,1,⋯,v - 1
   wherein $W_f(k')$ is a frequency-domain OCC, $W_t(l')$ is a time-domain OCC, and $r(2n + k')$ is an initial sequence of the demodulation reference signal; and $\Delta$ is a CDM group frequency-domain offset, $\overline{l}$ is an index of a start symbol of the demodulation reference signal, *l'* is a symbol offset of the demodulation reference signal, and v is a quantity of transmission layers, wherein when s=0, the time-domain OCC is a first group of OCCs; and when s=1, the time-domain OCC is a second group of OCCs.

20. The method according to claim 17, wherein a configuration information table of the demodulation reference signal comprises a correspondence between a demodulation reference signal type, a demodulation reference signal port index, a CDM group frequency-domain offset, and an OCC, the OCC comprises a frequency-domain OCC and a time-domain OCC, the frequency-domain OCC comprises a first group of OCCs and a second group of OCCs, the first group of OCCs corresponds to a first demodulation reference signal type, the second group of OCCs corresponds to a second demodulation reference signal type, the first demodulation reference signal type corresponds to the first group of symbols, and the second demodulation reference signal type corresponds to the second group of symbols.

21. The method according to claim 20, wherein the obtaining, by the receiving device, a sequence of the demodulation reference signal comprises:

   obtaining, by the receiving device based on the configuration information table, a CDM group frequency-domain offset, a frequency-domain OCC, and a time-domain OCC that correspond to a first RE *(k, l)*, wherein the first RE *(k, l)* has a subcarrier index of *k* and a symbol index of *l* in the time-frequency resource; and
   obtaining, based on the CDM group frequency-domain offset, the frequency-domain OCC, and the time-domain OCC, data $\widetilde{\alpha}_{k,l}^{(\widetilde{p}_j,\mu)}$ of the sequence of the demodulation reference signal mapped to the first RE *(k, l)*, wherein the data $\widetilde{\alpha}_{k,l}^{(\widetilde{p}_j,\mu)}$ mapped to the first RE *(k, l)* satisfies:

$$\tilde{\alpha}_{k,l}^{(\tilde{p}_j,\mu)} = W_f(k',s)W_t(l')r(2n + k')$$

$$k = 4n + 2k' + \Delta$$

k' = 0,1
s = 0,1
$l = \bar{l} + l'$
n = 0,1,⋯
j = 0,1,⋯,v - 1

wherein $W_f(k')$ is a frequency-domain OCC, $W_t(l')$ is a time-domain OCC, and r(2n + k') is an initial sequence of the demodulation reference signal; and $\Delta$ is a CDM group frequency-domain offset, $\bar{l}$ is an index of a start symbol of the demodulation reference signal, l' is a symbol offset of the demodulation reference signal, and v is a quantity of transmission layers, wherein when s=0, the frequency-domain OCC is a first group of OCCs; and when s=1, the frequency-domain OCC is a second group of OCCs.

22. A signal transmission method, comprising:

receiving, by a receiving device on a time-frequency resource of a demodulation reference signal, the demodulation reference signal sent by a sending device, wherein the demodulation reference signal is used to estimate a channel state of a first channel; and

obtaining, by the receiving device, a sequence of the demodulation reference signal, wherein

the time-frequency resource comprises a frequency-domain resource corresponding to a first port of a demodulation reference signal in a first code division multiplexing CDM group and a frequency-domain resource corresponding to a second port of the demodulation reference signal, the frequency-domain resource corresponding to the first port is the same as the frequency-domain resource corresponding to the second port, the frequency-domain resource corresponding to the first port and the frequency-domain resource corresponding to the second port are non-contiguous and equally spaced, a first physical resource block PRB in the frequency-domain resource corresponding to the first port and the frequency-domain resource corresponding to the second port comprises at least two subcarrier groups, each of the at least two subcarrier groups comprises two subcarriers, and the at least two subcarrier groups comprise a first subcarrier group and a second subcarrier group, or comprise a first subcarrier group, a second subcarrier group, and a third subcarrier group; and

orthogonal cover codes OCCs used on REs corresponding to all subcarriers in the at least two subcarrier groups for the frequency-domain resource corresponding to the first port form a first OCC code sequence, and OCC codes used on the REs corresponding to all the subcarriers in the at least two subcarrier groups for the frequency-domain resource corresponding to the second port form a second OCC code sequence; and for the frequency-domain resource corresponding to the first port or the second port, OCC codes used on the REs corresponding to two subcarriers in the first subcarrier group form a third OCC code sequence, and OCC codes used on REs corresponding to two subcarriers in the second subcarrier group form a fourth OCC code sequence, wherein the second OCC code sequence is obtained by performing cyclic shift based on the first OCC code sequence, and the third OCC code sequence is different from the fourth OCC code sequence.

23. The method according to claim 22, wherein a configuration information table of the demodulation reference signal comprises a correspondence between a demodulation reference signal port index, a CDM group frequency-domain offset, an OCC, and a cyclic shift factor, wherein the OCC comprises a frequency-domain OCC and a time-domain OCC; and
the method further comprises:
obtaining, by the receiving device based on the configuration information table, a frequency-domain OCC, a time-domain OCC, and a cyclic shift factor that correspond to a demodulation reference signal port index, and performing cyclic shift on the obtained frequency-domain OCC and the obtained time-domain OCC based on the obtained cyclic shift factor.

24. The method according to claim 22 or 23, wherein the obtaining, by the receiving device, a sequence of the demodulation reference signal comprises:

obtaining, by the receiving device based on the configuration information table, a CDM group frequency-domain offset, a frequency-domain OCC, a time-domain OCC, and a cyclic shift factor that correspond to a first RE *(k, l)*, wherein the first RE *(k, l)* has a subcarrier index of *k* and a symbol index of *l* in the time-frequency resource; and obtaining, based on the CDM group frequency-domain offset, the frequency-domain OCC, the time-domain OCC, and the cyclic shift factor, data $\widetilde{\alpha}_{k,l}^{(\widetilde{p}_j,\mu)}$ of the sequence of the demodulation reference signal mapped to the first RE *(k, l)*, wherein the data $\widetilde{\alpha}_{k,l}^{(\widetilde{p}_j,\mu)}$ mapped to the first RE *(k, l)* satisfies:

$$\widetilde{\alpha}_{k,l}^{(\widetilde{p}_j,\mu)} = e^{\frac{j2\phi\pi m}{6M}}W_f(k')W_t(l')r(2n + k')$$

$$k = 4n + 2k' + \Delta$$

k' = 0,1

$$m = \mathrm{mod}(\lfloor k/2 \rfloor, 6M)$$

$l = \overline{l} + l'$

n = 0,1,···

j = 0,1,···,v - 1

or the data $\widetilde{\alpha}_{k,l}^{(\widetilde{p}_j,\mu)}$ mapped to the first RE *(k, l)* satisfies:

$$\widetilde{\alpha}_{k,l}^{(\widetilde{p}_j,\mu)} = e^{\frac{j2\phi\pi m}{4}}W_f(k')W_t(l')r(2n + k')$$

$$k = 4n + 2k' + \Delta$$

k' = 0,1

$$m = \mathrm{mod}(\lfloor k/2 \rfloor, 4)$$

$l = \overline{l} + l'$

n = 0,1,···

j = 0,1,···,v - 1

wherein $W_f(k')$ is a frequency-domain OCC, $W_t(l')$ is a time-domain OCC, and $r(2n + k')$ is an initial sequence of the demodulation reference signal; and $\Delta$ is a CDM group frequency-domain offset, $\overline{l}$ is an index of a start symbol of the demodulation reference signal, $l'$ is a symbol offset of the demodulation reference signal, v is a quantity of transmission layers, $\phi$ is a cyclic shift factor, and M is a positive integer greater than or equal to 1.

25. A communication apparatus, comprising at least one processor connected to a memory, wherein the at least one processor is configured to read and execute a program stored in the memory, to enable the apparatus to perform the following operations:

    generating a sequence of a demodulation reference signal, wherein the demodulation reference signal is used to estimate a channel state of a first channel; and
    mapping the sequence of the demodulation reference signal to a time-frequency resource of the demodulation reference signal for sending, wherein the time-frequency resource comprises frequency-domain resources corresponding to a first code division multiplexing CDM group, and the frequency-domain resources corresponding to the first CDM group are non-contiguous and equally spaced; a first physical resource block PRB in the frequency-domain resources corresponding to the first CDM group comprises a first group of subcarriers and a second group of subcarriers; and the first group of subcarriers and the second group of subcarriers each comprise two subcarriers, the first group of subcarriers corresponds to a first group of orthogonal cover codes OCCs, the second group of subcarriers corresponds to a second group of OCCs, and the first group of OCCs is orthogonal to the second group of OCCs.

26. The communication apparatus according to claim 25, wherein a configuration information table of the demodulation reference signal comprises a correspondence between a demodulation reference signal port index, a CDM group frequency-domain offset, and an OCC, the OCC comprises a frequency-domain OCC and a time-domain OCC, and the frequency-domain OCC comprises a first group of OCCs and a second group of OCCs.

27. The communication apparatus according to claim 25, wherein a configuration information table of the demodulation reference signal comprises a first configuration information table and a second configuration information table;

the first configuration information table comprises a correspondence between a demodulation reference signal port index, a CDM group frequency-domain offset, and an OCC, and the OCC comprises a frequency-domain OCC and a time-domain OCC; and

the second configuration information table comprises a correspondence between a demodulation reference signal port index, a CDM group frequency-domain offset, and an OCC, the OCC comprises a frequency-domain OCC and a time-domain OCC, the frequency-domain OCC comprises a first group of OCCs and a second group of OCCs, and the demodulation reference signal port indexes comprised in the second configuration information table and the first configuration information table are different.

28. The communication apparatus according to claim 26 or 27, wherein the mapping the sequence of the demodulation reference signal to a time-frequency resource of the demodulation reference signal comprises:

obtaining, based on the configuration information table, a CDM group frequency-domain offset, a frequency-domain OCC, and a time-domain OCC that correspond to a first RE *(k, l)*, wherein the first RE *(k, l)* has a subcarrier index of *k* and a symbol index of *l* in the time-frequency resource; and

obtaining, based on the CDM group frequency-domain offset, the frequency-domain OCC, and the time-domain OCC, data $\widetilde{\alpha}_{k,l}^{(\widetilde{p}_j,\mu)}$ of the sequence of the demodulation reference signal mapped to the first RE *(k, l)*, wherein

the data $\widetilde{\alpha}_{k,l}^{(\widetilde{p}_j,\mu)}$ mapped to the first RE *(k, l)* satisfies:

$$\widetilde{\alpha}_{k,l}^{(\widetilde{p}_j,\mu)} = W_f(k' + 2t)W_t(l')r(2n + k')$$

$$k = 4n + 2k' + \Delta$$

k' = 0,1
t = mod(n, 2)
$l = \overline{l} + l'$
n = 0,1,···
j = 0,1,···,v - 1

wherein $W_f(k' + 2t)$ is a frequency-domain OCC, $W_t(l')$ is a time-domain OCC, and r(2n + k') is an initial sequence of the demodulation reference signal; and $\Delta$ is a CDM group frequency-domain offset, $\overline{l}$ is an index of a start symbol of the demodulation reference signal, *l'* is a symbol offset of the demodulation reference signal, and v is a quantity of transmission layers, wherein when t=0, the frequency-domain OCC is a first group of OCCs; and when t=1, the frequency-domain OCC is a second group of OCCs.

29. A communication apparatus, comprising at least one processor connected to a memory, wherein the at least one processor is configured to read and execute a program stored in the memory, to enable the apparatus to perform the following operations:

generating a sequence of a demodulation reference signal, wherein the demodulation reference signal is used to estimate a channel state of a first channel; and

mapping the sequence of the demodulation reference signal to a time-frequency resource of the demodulation reference signal for sending, wherein the time-frequency resource comprises frequency-domain resources corresponding to a first code division multiplexing CDM group, and the frequency-domain resources corresponding to the first CDM group are non-contiguous and equally spaced; time-domain resources corresponding to the first CDM group comprise a first group of symbols and a second group of symbols, the first group of symbols corresponds to a first group of orthogonal cover codes OCCs, the second group of symbols corresponds to a second group of OCCs, and the first group of OCCs is orthogonal to the second group of OCCs.

**30.** The communication apparatus according to claim 29, wherein a configuration information table of the demodulation reference signal comprises a correspondence between a demodulation reference signal type, a demodulation reference signal port index, a CDM group frequency-domain offset, and an OCC, the OCC comprises a frequency-domain OCC and a time-domain OCC, the time-domain OCC comprises a first group of OCCs and a second group of OCCs, the first group of OCCs corresponds to a first demodulation reference signal type, the second group of OCCs corresponds to a second demodulation reference signal type, the first demodulation reference signal type corresponds to the first group of symbols, and the second demodulation reference signal type corresponds to the second group of symbols.

**31.** The communication apparatus according to claim 30, wherein the mapping the sequence of the demodulation reference signal to a time-frequency resource of the demodulation reference signal comprises:

obtaining, based on the configuration information table, a CDM group frequency-domain offset, a frequency-domain OCC, and a time-domain OCC that correspond to a first RE *(k, l)*, wherein the first RE *(k, l)* has a subcarrier index of *k* and a symbol index of *l* in the time-frequency resource; and
obtaining, based on the CDM group frequency-domain offset, the frequency-domain OCC, and the time-domain OCC, data $\widetilde{\alpha}_{k,l}^{(\widetilde{p}_j,\mu)}$ of the sequence of the demodulation reference signal mapped to the first RE *(k, l)*, wherein

the data $\widetilde{\alpha}_{k,l}^{(\widetilde{p}_j,\mu)}$ mapped to the first RE *(k, l)* satisfies:

$$\widetilde{\alpha}_{k,l}^{(\widetilde{p}_j,\mu)} = W_f(k')W_t(l',s)r(2n + k')$$

$$k = 4n + 2k' + \Delta$$

$k' = 0,1$
$s = 0,1$
$l = \overline{l} + l'$
$n = 0,1,\cdots$
$j = 0,1,\cdots,v - 1$
wherein $W_f(k')$ is a frequency-domain OCC, $W_t(l')$ is a time-domain OCC, and $r(2n + k')$ is an initial sequence of the demodulation reference signal; and $\Delta$ is a CDM group frequency-domain offset, $\overline{l}$ is an index of a start symbol of the demodulation reference signal, $l'$ is a symbol offset of the demodulation reference signal, and v is a quantity of transmission layers, wherein when s=0, the time-domain OCC is a first group of OCCs; and when s=1, the time-domain OCC is a second group of OCCs.

**32.** The communication apparatus according to claim 29, wherein a configuration information table of the demodulation reference signal comprises a correspondence between a demodulation reference signal type, a demodulation reference signal port index, a CDM group frequency-domain offset, and an OCC, the OCC comprises a frequency-domain OCC and a time-domain OCC, the frequency-domain OCC comprises a first group of OCCs and a second group of OCCs, the first group of OCCs corresponds to a first demodulation reference signal type, the second group of OCCs corresponds to a second demodulation reference signal type, the first demodulation reference signal type corresponds to the first group of symbols, and the second demodulation reference signal type corresponds to the second group of symbols.

**33.** The communication apparatus according to claim 32, wherein the mapping the sequence of the demodulation reference signal to a time-frequency resource of the demodulation reference signal comprises:

obtaining, based on the configuration information table, a CDM group frequency-domain offset, a frequency-domain OCC, and a time-domain OCC that correspond to a first RE *(k, l)*, wherein the first RE *(k, l)* has a subcarrier index of *k* and a symbol index of *l* in the time-frequency resource; and
obtaining, based on the CDM group frequency-domain offset, the frequency-domain OCC, and the time-domain OCC, data $\widetilde{\alpha}_{k,l}^{(\widetilde{p}_j,\mu)}$ of the sequence of the demodulation reference signal mapped to the first RE *(k, l)*, wherein

the data $\widetilde{\alpha}_{k,l}^{(\widetilde{p}_j,\mu)}$ mapped to the first RE *(k, l)* satisfies:

$$\widetilde{\alpha}_{k,l}^{(\widetilde{p}_j,\mu)} = W_f(k',s)W_t(l')r(2n + k')$$

$$k = 4n + 2k' + \Delta$$

k' = 0,1
s = 0,1
$l = \bar{l} + l'$
n = 0,1,···
j = 0,1,···,v - 1
wherein $W_f(k')$ is a frequency-domain OCC, $W_t(l')$ is a time-domain OCC, and r(2n + k') is an initial sequence of the demodulation reference signal; and $\Delta$ is a CDM group frequency-domain offset, $\bar{l}$ is an index of a start symbol of the demodulation reference signal, l' is a symbol offset of the demodulation reference signal, and v is a quantity of transmission layers, wherein when s=0, the frequency-domain OCC is a first group of OCCs; and when s=1, the frequency-domain OCC is a second group of OCCs.

34. A communication apparatus, comprising at least one processor connected to a memory, wherein the at least one processor is configured to read and execute a program stored in the memory, to enable the apparatus to perform the following operations:

generating a sequence of a demodulation reference signal, wherein the demodulation reference signal is used to estimate a channel state of a first channel; and

mapping the sequence of the demodulation reference signal to a time-frequency resource of the demodulation reference signal for sending, wherein

the time-frequency resource comprises a frequency-domain resource corresponding to a first port of a demodulation reference signal in a first code division multiplexing CDM group and a frequency-domain resource corresponding to a second port of the demodulation reference signal, the frequency-domain resource corresponding to the first port is the same as the frequency-domain resource corresponding to the second port, the frequency-domain resource corresponding to the first port and the frequency-domain resource corresponding to the second port are non-contiguous and equally spaced, a first physical resource block PRB in the frequency-domain resource corresponding to the first port and the frequency-domain resource corresponding to the second port comprises at least two subcarrier groups, each of the at least two subcarrier groups comprises two subcarriers, and the at least two subcarrier groups comprise a first subcarrier group and a second subcarrier group, or comprise a first subcarrier group, a second subcarrier group, and a third subcarrier group; and

orthogonal cover codes OCCs used on REs corresponding to all subcarriers in the at least two subcarrier groups for the frequency-domain resource corresponding to the first port form a first OCC code sequence, and OCC codes used on the REs corresponding to all the subcarriers in the at least two subcarrier groups for the frequency-domain resource corresponding to the second port form a second OCC code sequence; and for the frequency-domain resource corresponding to the first port or the second port, OCC codes used on the REs corresponding to two subcarriers in the first subcarrier group form a third OCC code sequence, and OCC codes used on REs corresponding to two subcarriers in the second subcarrier group form a fourth OCC code sequence, wherein the second OCC code sequence is obtained by performing cyclic shift based on the first OCC code sequence, and the third OCC code sequence is different from the fourth OCC code sequence.

35. The apparatus according to claim 34, wherein a configuration information table of the demodulation reference signal comprises a correspondence between a demodulation reference signal port index, a CDM group frequency-domain offset, an OCC, and a cyclic shift factor, wherein the OCC comprises a frequency-domain OCC and a time-domain OCC; and

the processor is further configured to:

obtain, based on the configuration information table, a frequency-domain OCC, a time-domain OCC, and a cyclic shift factor that correspond to a demodulation reference signal port index, and perform cyclic shift on the obtained frequency-domain OCC and the obtained time-domain OCC based on the obtained cyclic shift factor.

36. The apparatus according to claim 34 or 35, wherein the processor is specifically configured to:

obtain, based on the configuration information table, a CDM group frequency-domain offset, a frequency-domain OCC, a time-domain OCC, and a cyclic shift factor that correspond to a first RE *(k, l)*, wherein the first RE *(k, l)* has a subcarrier index of *k* and a symbol index of *l* in the time-frequency resource; and

obtaining, based on the CDM group frequency-domain offset, the frequency-domain OCC, the time-domain OCC, and the cyclic shift factor, data $\widetilde{\alpha}_{k,l}^{(\widetilde{p}_j,\mu)}$ of the sequence of the demodulation reference signal mapped to the first RE *(k, l)*, wherein the data $\widetilde{\alpha}_{k,l}^{(\widetilde{p}_j,\mu)}$ mapped to the first RE *(k, l)* satisfies:

$$\widetilde{\alpha}_{k,l}^{(\widetilde{p}_j,\mu)} = e^{\frac{j2\phi\pi m}{6M}} W_f(k') W_t(l') r(2n + k')$$

$$k = 4n + 2k' + \Delta$$

k' = 0,1
$$m = \mathrm{mod}(\lfloor k/2 \rfloor, 6M)$$
*l* = $\overline{l}$ + *l'*
n = 0,1,···
j = 0,1,···,v - 1

or the data $\widetilde{\alpha}_{k,l}^{(\widetilde{p}_j,\mu)}$ mapped to the first RE *(k, l)* satisfies:

$$\widetilde{\alpha}_{k,l}^{(\widetilde{p}_j,\mu)} = e^{\frac{j2\phi\pi m}{4}} W_f(k') W_t(l') r(2n + k')$$

$$k = 4n + 2k' + \Delta$$

k' = 0,1
$$m = \mathrm{mod}(\lfloor k/2 \rfloor, 4)$$
*l* = $\overline{l}$ + *l'*
n = 0,1,···
j = 0,1,···,v - 1

wherein $W_f(k')$ is a frequency-domain OCC, $W_t(l')$ is a time-domain OCC, and r(2n + k') is an initial sequence of the demodulation reference signal; and $\Delta$ is a CDM group frequency-domain offset, $\overline{l}$ is an index of a start symbol of the demodulation reference signal, *l'* is a symbol offset of the demodulation reference signal, v is a quantity of transmission layers, $\phi$ is a cyclic shift factor, and M is a positive integer greater than or equal to 1.

37. A communication apparatus, comprising at least one processor connected to a memory, wherein the at least one processor is configured to read and execute a program stored in the memory, to enable the apparatus to perform the following operations:

receiving, on a time-frequency resource of a demodulation reference signal, the demodulation reference signal sent by a sending device, wherein the demodulation reference signal is used to estimate a channel state of a first channel; the time-frequency resource comprises frequency-domain resources corresponding to a first code division multiplexing CDM group, and the frequency-domain resources corresponding to the first CDM group are non-contiguous and equally spaced; a first physical resource block PRB in the frequency-domain resources corresponding to the first CDM group comprises a first group of subcarriers and a second group of subcarriers; and the first group of subcarriers and the second group of subcarriers each comprise two subcarriers, the first group of subcarriers corresponds to a first group of orthogonal cover codes OCCs, the second group of subcarriers corresponds to a second group of OCCs, and the first group of OCCs is orthogonal to the second group of OCCs; and
obtaining a sequence of the demodulation reference signal.

38. The communication apparatus according to claim 37, wherein a configuration information table of the demodulation reference signal comprises a correspondence between a demodulation reference signal port index, a CDM group frequency-domain offset, and an OCC, the OCC comprises a frequency-domain OCC and a time-domain OCC, and the frequency-domain OCC comprises a first group of OCCs and a second group of OCCs.

39. The communication apparatus according to claim 37, wherein a configuration information table of the demodulation reference signal comprises a first configuration information table and a second configuration information table;

the first configuration information table comprises a correspondence between a demodulation reference signal port index, a CDM group frequency-domain offset, and an OCC, and the OCC comprises a frequency-domain OCC and a time-domain OCC; and
the second configuration information table comprises a correspondence between a demodulation reference signal port index, a CDM group frequency-domain offset, and an OCC, the OCC comprises a frequency-domain OCC and a time-domain OCC, the frequency-domain OCC comprises a first group of OCCs and a second group of OCCs, and the demodulation reference signal port indexes comprised in the second configuration information table and the first configuration information table are different.

40. The communication apparatus according to claim 38 or 39, wherein the obtaining a sequence of the demodulation reference signal comprises:

obtaining, based on the configuration information table, a CDM group frequency-domain offset, a frequency-domain OCC, and a time-domain OCC that correspond to a first RE *(k, l)*, wherein the first RE *(k, l)* has a subcarrier index of *k* and a symbol index of *l* in the time-frequency resource; and
obtaining, based on the CDM group frequency-domain offset, the frequency-domain OCC, and the time-domain OCC, data $\widetilde{\alpha}_{k,l}^{(\widetilde{p}_j,\mu)}$ of the sequence of the demodulation reference signal mapped to the first RE *(k, l)*, wherein the data $\widetilde{\alpha}_{k,l}^{(\widetilde{p}_j,\mu)}$ mapped to the first RE *(k, l)* satisfies:

$$\widetilde{\alpha}_{k,l}^{(\widetilde{p}_j,\mu)} = W_f(k' + 2t)W_t(l')r(2n + k')$$

$$k = 4n + 2k' + \Delta$$

k' = 0,1
t = mod(n, 2)
*l* = $\overline{l}$ + *l'*
n = 0,1,··· .
j = 0,1,···,v - 1
wherein $W_f(k' + 2t)$ is a frequency-domain OCC, $W_t(l')$ is a time-domain OCC, and r(2n + k') is an initial sequence of the demodulation reference signal; and $\Delta$ is a CDM group frequency-domain offset, $\overline{l}$ is an index of a start symbol of the demodulation reference signal, *l'* is a symbol offset of the demodulation reference signal, and v is a quantity of transmission layers, wherein when t=0, the frequency-domain OCC is a first group of OCCs; and when t=1, the frequency-domain OCC is a second group of OCCs.

41. A communication apparatus, comprising at least one processor connected to a memory, wherein the at least one processor is configured to read and execute a program stored in the memory, to enable the apparatus to perform the following operations:

receiving, on a time-frequency resource of a demodulation reference signal, the demodulation reference signal sent by a sending device, wherein the demodulation reference signal is used to estimate a channel state of a first channel; the time-frequency resource comprises frequency-domain resources corresponding to first code division multiplexing CDM groups, and the frequency-domain resources corresponding to the first CDM group are non-contiguous and equally spaced; time-domain resources corresponding to the first CDM group comprise a first group of symbols and a second group of symbols, the first group of symbols corresponds to a first group of orthogonal cover codes OCCs, the second group of symbols corresponds to a second group of OCCs, and the first group of OCCs is orthogonal to the second group of OCCs; and

obtaining a sequence of the demodulation reference signal.

42. The communication apparatus according to claim 41, wherein a configuration information table of the demodulation reference signal comprises a correspondence between a demodulation reference signal type, a demodulation reference signal port index, a CDM group frequency-domain offset, and an OCC, the OCC comprises a frequency-domain OCC and a time-domain OCC, the time-domain OCC comprises a first group of OCCs and a second group of OCCs, the first group of OCCs corresponds to a first demodulation reference signal type, the second group of OCCs corresponds to a second demodulation reference signal type, the first demodulation reference signal type corresponds to the first group of symbols, and the second demodulation reference signal type corresponds to the second group of symbols.

43. The communication apparatus according to claim 42, wherein the obtaining a sequence of the demodulation reference signal comprises:

obtaining, based on the configuration information table, a CDM group frequency-domain offset, a frequency-domain OCC, and a time-domain OCC that correspond to a first RE *(k, l)*, wherein the first RE *(k, l)* has a subcarrier index of *k* and a symbol index of *l* in the time-frequency resource; and
obtaining, based on the CDM group frequency-domain offset, the frequency-domain OCC, and the time-domain OCC, data $\widetilde{\alpha}_{k,l}^{(\widetilde{p}_j,\mu)}$ of the sequence of the demodulation reference signal mapped to the first RE *(k, l)*, wherein the data $\widetilde{\alpha}_{k,l}^{(\widetilde{p}_j,\mu)}$ mapped to the first RE *(k, l)* satisfies:

$$\widetilde{\alpha}_{k,l}^{(\widetilde{p}_j,\mu)} = W_f(k')W_t(l',s)r(2n + k')$$

$$k = 4n + 2k' + \Delta$$

k' = 0,1
s = 0,1
$l = \overline{l} + l'$
n = 0,1,···
j = 0,1,···,v - 1
wherein $W_f(k')$ is a frequency-domain OCC, $W_t(l')$ is a time-domain OCC, and r(2n + k') is an initial sequence of the demodulation reference signal; and $\Delta$ is a CDM group frequency-domain offset, $\overline{l}$ is an index of a start symbol of the demodulation reference signal, *l'* is a symbol offset of the demodulation reference signal, and v is a quantity of transmission layers, wherein when s=0, the time-domain OCC is a first group of OCCs; and when s=1, the time-domain OCC is a second group of OCCs.

44. The communication apparatus according to claim 41, wherein a configuration information table of the demodulation reference signal comprises a correspondence between a demodulation reference signal type, a demodulation reference signal port index, a CDM group frequency-domain offset, and an OCC, the OCC comprises a frequency-domain OCC and a time-domain OCC, the frequency-domain OCC comprises a first group of OCCs and a second group of OCCs, the first group of OCCs corresponds to a first demodulation reference signal type, the second group of OCCs corresponds to a second demodulation reference signal type, the first demodulation reference signal type corresponds to the first group of symbols, and the second demodulation reference signal type corresponds to the second group of symbols.

45. The communication apparatus according to claim 44, wherein the obtaining a sequence of the demodulation reference signal comprises:

obtaining, based on the configuration information table, a CDM group frequency-domain offset, a frequency-domain OCC, and a time-domain OCC that correspond to a first RE *(k, l)*, wherein the first RE *(k, l)* has a subcarrier index of *k* and a symbol index of *l* in the time-frequency resource; and

obtaining, based on the CDM group frequency-domain offset, the frequency-domain OCC, and the time-domain OCC, data $\widetilde{\alpha}_{k,l}^{(\widetilde{p}_j,\mu)}$ of the sequence of the demodulation reference signal mapped to the first RE *(k, l)*, wherein

the data $\widetilde{\alpha}_{k,l}^{(\widetilde{p}_j,\mu)}$ mapped to the first RE *(k, l)* satisfies:

$$\widetilde{\alpha}_{k,l}^{(\widetilde{p}_j,\mu)} = W_f(k',s)W_t(l')r(2n + k')$$

$$k = 4n + 2k' + \Delta$$

k' = 0,1
s = 0,1
$l = \overline{l} + l'$
n = 0,1,···
j = 0,1,···,v - 1

wherein $W_f(k')$ is a frequency-domain OCC, $W_t(l')$ is a time-domain OCC, and r(2n + k') is an initial sequence of the demodulation reference signal; and Δ is a CDM group frequency-domain offset, $\overline{l}$ is an index of a start symbol of the demodulation reference signal, l' is a symbol offset of the demodulation reference signal, and v is a quantity of transmission layers, wherein when s=0, the frequency-domain OCC is a first group of OCCs; and when s=1, the frequency-domain OCC is a second group of OCCs.

46. A communication apparatus, comprising at least one processor connected to a memory, wherein the at least one processor is configured to read and execute a program stored in the memory, to enable the apparatus to perform the following operations:

receiving, on a time-frequency resource of a demodulation reference signal, the demodulation reference signal sent by a sending device, wherein the demodulation reference signal is used to estimate a channel state of a first channel;

obtaining a sequence of the demodulation reference signal, wherein

the time-frequency resource comprises a frequency-domain resource corresponding to a first port of a demodulation reference signal in a first code division multiplexing CDM group and a frequency-domain resource corresponding to a second port of the demodulation reference signal, the frequency-domain resource corresponding to the first port is the same as the frequency-domain resource corresponding to the second port, the frequency-domain resource corresponding to the first port and the frequency-domain resource corresponding to the second port are non-contiguous and equally spaced, a first physical resource block PRB in the frequency-domain resource corresponding to the first port and the frequency-domain resource corresponding to the second port comprises at least two subcarrier groups, each of the at least two subcarrier groups comprises two subcarriers, and the at least two subcarrier groups comprise a first subcarrier group and a second subcarrier group, or comprise a first subcarrier group, a second subcarrier group, and a third subcarrier group; and

orthogonal cover codes OCCs used on REs corresponding to all subcarriers in the at least two subcarrier groups for the frequency-domain resource corresponding to the first port form a first OCC code sequence, and OCC codes used on the REs corresponding to all the subcarriers in the at least two subcarrier groups for the frequency-domain resource corresponding to the second port form a second OCC code sequence; and for the frequency-domain resource corresponding to the first port or the second port, OCC codes used on the REs corresponding to two subcarriers in the first subcarrier group form a third OCC code sequence, and OCC codes used on REs corresponding to two subcarriers in the second subcarrier group form a fourth OCC code sequence, wherein the second OCC code sequence is obtained by performing cyclic shift based on the first OCC code sequence, and the third OCC code sequence is different from the fourth OCC code sequence.

47. The apparatus according to claim 46, wherein a configuration information table of the demodulation reference signal comprises a correspondence between a demodulation reference signal port index, a CDM group frequency-domain offset, an OCC, and a cyclic shift factor, wherein the OCC comprises a frequency-domain OCC and a time-domain OCC; and

the processor is further configured to:

obtain, based on the configuration information table, a frequency-domain OCC, a time-domain OCC, and a cyclic shift factor that correspond to a demodulation reference signal port index, and perform cyclic shift on the obtained frequency-domain OCC and the obtained time-domain OCC based on the obtained cyclic shift factor.

**48.** The apparatus according to claim 46 or 47, wherein the processor is specifically configured to:

obtain, based on the configuration information table, a CDM group frequency-domain offset, a frequency-domain OCC, a time-domain OCC, and a cyclic shift factor that correspond to a first RE *(k, l)*, wherein the first RE *(k, l)* has a subcarrier index of *k* and a symbol index of *l* in the time-frequency resource; and

obtaining, based on the CDM group frequency-domain offset, the frequency-domain OCC, the time-domain OCC, and the cyclic shift factor, data $\widetilde{\alpha}_{k,l}^{(\widetilde{p}_j,\mu)}$ of the sequence of the demodulation reference signal mapped to the first RE *(k, l)*, wherein the data $\widetilde{\alpha}_{k,l}^{(\widetilde{p}_j,\mu)}$ mapped to the first RE *(k, l)* satisfies:

$$\widetilde{\alpha}_{k,l}^{(\widetilde{p}_j,\mu)} = e^{\frac{j2\phi\pi m}{6M}}W_f(k')W_t(l')r(2n+k')$$

$$k = 4n + 2k' + \Delta$$

k' = 0,1

$$m = \mathrm{mod}(\lfloor k/2 \rfloor, 6M)$$

*l* = $\overline{l}$ + *l'*

n = 0,1,··· .

j = 0,1,···,v - 1

or the data $\widetilde{\alpha}_{k,l}^{(\widetilde{p}_j,\mu)}$ mapped to the first RE *(k, l)* satisfies:

$$\widetilde{\alpha}_{k,l}^{(\widetilde{p}_j,\mu)} = e^{\frac{j2\phi\pi m}{4}}W_f(k')W_t(l')r(2n+k')$$

$$k = 4n + 2k' + \Delta$$

k' = 0,1

$$m = \mathrm{mod}(\lfloor k/2 \rfloor, 4)$$

*l* = $\overline{l}$ + *l'*

n = 0,1,···

j = 0,1,···,v - 1

wherein $W_f$(k') is a frequency-domain OCC, $W_t$(l') is a time-domain OCC, and r(2n + k') is an initial sequence of the demodulation reference signal; and $\Delta$ is a CDM group frequency-domain offset, $\overline{l}$ is an index of a start symbol of the demodulation reference signal, *l'* is a symbol offset of the demodulation reference signal, v is a quantity of transmission layers, $\phi$ is a cyclic shift factor, and M is a positive integer greater than or equal to 1.

**49.** A chip, wherein the chip is coupled to a memory, and is configured to read and execute program instructions stored in the memory, to implement the method according to any one of claims 1 to 12.

**50.** A chip, wherein the chip is coupled to a memory, and is configured to read and execute program instructions stored in the memory, to implement the method according to any one of claims 13 to 24.

**51.** A computer-readable storage medium, wherein the computer-readable storage medium stores computer instructions, and when the instructions are run on a computer, the computer is enabled to perform the method according to any one of claims 1 to 12.

52. A computer-readable storage medium, wherein the computer-readable storage medium stores computer instructions, and when the instructions are run on a computer, the computer is enabled to perform the method according to any one of claims 13 to 24.

53. A computer program product, wherein when the computer program product is invoked by a computer, the computer is enabled to perform the method according to any one of claims 1 to 12.

54. A computer program product, wherein when the computer program product is invoked by a computer, the computer is enabled to perform the method according to any one of claims 13 to 24.

FIG. 1

**DMRS configuration type 1**

**One symbol**

Frequency

| 11 | |
| 10 | ▨ |
| 9 | |
| 8 | ▨ |
| 7 | |
| 6 | ▨ |
| 5 | |
| 4 | ▨ |
| 3 | |
| 2 | ▨ |
| 1 | |
| 0 | ▨ |

0    Time

□ CDM group 1={p2/p3}
▨ CDM group 0={p0/p1}

**Two symbols**

Frequency

| 11 | | |
| 10 | ▨ | ▨ |
| 9 | | |
| 8 | ▨ | ▨ |
| 7 | | |
| 6 | ▨ | ▨ |
| 5 | | |
| 4 | ▨ | ▨ |
| 3 | | |
| 2 | ▨ | ▨ |
| 1 | | |
| 0 | ▨ | ▨ |

0    1    Time

□ CDM group 1={p2/p3/p6/p7}
▨ CDM group 0={p0/p1/p4/p5}

FIG. 2

A sending device generates a sequence of a demodulation reference signal, where the demodulation reference signal is used to estimate a channel state of a first channel ⟶ S301

The sending device maps the sequence of the demodulation reference signal to a time-frequency resource of the demodulation reference signal for sending, where the time-frequency resource includes frequency-domain resources corresponding to a first CDM group, and the frequency-domain resources corresponding to the first CDM group are non-contiguous and equally spaced; a first PRB in the frequency-domain resource corresponding to the first CDM group includes a first group of subcarriers and a second group of subcarriers; and the first group of subcarriers and the second group of subcarriers each include two subcarriers, the first group of subcarriers corresponds to a first group of OCCs, the second group of subcarriers corresponds to a second group of OCCs, and the first group of OCCs is orthogonal to the second group of OCCs ⟶ S302

FIG. 3

**DMRS configuration type 1**

FIG. 4

Frequency

11
10
9
8
7

Second group of subcarriers {subcarriers 4, 6} corresponding to a CDM group 0

6
5
4
3

First group of subcarriers {subcarriers 0, 2} corresponding to the CDM group 0

2
1
0

2    3    Time

| Port | First group of OCCs in frequency domain (first group of subcarriers) | | | | Second group of OCCs in frequency domain (second group of subcarriers) | | | |
|------|---|---|---|---|---|---|---|---|
| p0 | 1 | 1 | 1 | 1 | 1 | 1 | 1 | 1 |
| p1 | 1 | −1 | 1 | −1 | 1 | −1 | 1 | −1 |
| p4 | 1 | 1 | −1 | −1 | 1 | 1 | −1 | −1 |
| p5 | 1 | −1 | −1 | 1 | 1 | −1 | −1 | 1 |
| p8 | 1 | 1 | 1 | 1 | −1 | −1 | −1 | −1 |
| p9 | 1 | −1 | 1 | −1 | −1 | 1 | −1 | 1 |
| p12 | 1 | 1 | −1 | −1 | −1 | −1 | 1 | 1 |
| p13 | 1 | −1 | −1 | 1 | −1 | 1 | 1 | −1 |

☐ CDM group 1={p2/p3/p6/p7/p10/p11/p14/p15}

▨ CDM group 0={p0/p1/p4/p5/p8/p9/p12/p13}

FIG. 5

A receiving device receives, on a time-frequency resource of a demodulation reference signal, the demodulation reference signal sent by a sending device, where the demodulation reference signal is used to estimate a channel state of a first channel; the time-frequency resource includes frequency-domain resources corresponding to a first CDM group, and the frequency-domain resource corresponding to the first CDM group are non-contiguous and equally spaced; a first PRB in the frequency-domain resource corresponding to the first CDM group includes a first group of subcarriers and a second group of subcarriers; and the first group of subcarriers and the second group of subcarriers each include two subcarriers, the first group of subcarriers corresponds to a first group of OCCs, the second group of subcarriers corresponds to a second group of OCCs, and the first group of OCCs is orthogonal to the second group of OCCs

S601

The receiving device obtains a sequence of the demodulation reference signal

S602

FIG. 6

A sending device generates a sequence of a demodulation reference signal, where the demodulation reference signal is used to estimate a channel state of a first channel

S701

The sending device maps the sequence of the demodulation reference signal to a time-frequency resource of the demodulation reference signal for sending, where the time-frequency resource includes frequency-domain resources corresponding to a first CDM group, and the frequency-domain resource corresponding to the first CDM group are non-contiguous and equally spaced; time-domain resources corresponding to the first CDM group include a first group of symbols and a second group of symbols, the first group of symbols corresponds to a first group of OCCs, the second group of symbols corresponds to a second group of OCCs, and the first group of OCCs is orthogonal to the second group of OCCs

S702

FIG. 7

A first group of symbols {symbols 2, 3} corresponding to a CDM group 0 corresponds to a first group of OCCs

A second group of symbols {symbols 8, 9} corresponding to the CDM group 0 corresponds to a second group of OCCs, and the second group of OCCs is orthogonal to the first group of OCCs

CDM group 1={p2/p3/p6/p7/p10/p11/p14/p15}
CDM group 0={p0/p1/p4/p5/p8/p9/p12/p13}

FIG. 8

First group of symbols {symbols 2, 3} corresponding to a CDM group 0

Second group of symbols {symbols 8, 9} corresponding to the CDM group 0

CDM group 1={p2/p3/p6/p7/p10/p11/p14/p15}

CDM group 0={p0/p1/p4/p5/p8/p9/p12/p13}

| Port | First group of OCCs in time domain (first group of symbols) | | | | Second group of OCCs in time domain (second group of symbols) | | | |
|---|---|---|---|---|---|---|---|---|
| p0 | 1 | 1 | 1 | 1 | 1 | 1 | 1 | 1 |
| p1 | 1 | −1 | 1 | −1 | 1 | −1 | 1 | −1 |
| p4 | 1 | 1 | −1 | −1 | 1 | 1 | −1 | −1 |
| p5 | 1 | −1 | −1 | 1 | 1 | −1 | −1 | 1 |
| p8 | 1 | 1 | 1 | 1 | −1 | −1 | −1 | −1 |
| p9 | 1 | −1 | 1 | −1 | −1 | 1 | −1 | 1 |
| p12 | 1 | 1 | −1 | −1 | −1 | −1 | 1 | 1 |
| p13 | 1 | −1 | −1 | 1 | −1 | 1 | 1 | −1 |

FIG. 9

A receiving device receives, on a time-frequency resource of a demodulation reference signal, the demodulation reference signal sent by a sending device, where the demodulation reference signal is used to estimate a channel state of a first channel; the time-frequency resource includes frequency-domain resources corresponding to a first CDM group, and the frequency-domain resources corresponding to the first CDM group are non-contiguous and equally spaced; time-domain resources corresponding to the first CDM group include a first group of symbols and a second group of symbols, the first group of symbols corresponds to a first group of OCCs, the second group of symbols corresponds to a second group of OCCs, and the first group of OCCs is orthogonal to the second group of OCCs ⟋S1001

↓

The receiving device obtains a sequence of the demodulation reference signal ⟋S1002

FIG. 10

A sending device generates a sequence of a demodulation reference signal, where the demodulation reference signal is used to estimate a channel state of a first channel ⟋S1101

↓

The sending device maps the sequence of the demodulation reference signal to a time-frequency resource of the demodulation reference signal for sending, where a first OCC is used on an RE corresponding to a first port of a demodulation reference signal in the first CDM group, a second OCC is used on an RE corresponding to a second port of the demodulation reference signal in the first CDM group, the second OCC is obtained by performing cyclic shift on the first OCC, and the first OCC is orthogonal to the second OCC ⟋S1102

FIG. 11

FIG. 12

A receiving device receives, on a time-frequency resource of a demodulation reference signal, the demodulation reference signal sent by a network device, where the demodulation reference signal is used to estimate a channel state of a first channel; and the time-frequency resource includes a frequency-domain resource corresponding to a first CDM group, where a first OCC is used on an RE corresponding to a first port of a demodulation reference signal in the first CDM group, a second OCC is used on an RE corresponding to a second port of the demodulation reference signal in the first CDM group, the second OCC is obtained by performing cyclic shift on the first OCC, and the first OCC is orthogonal to the second OCC

S1201

The receiving device obtains a sequence of the demodulation reference signal

S1202

FIG. 13

Communication apparatus 1300

1301

Processing unit

1302

Transceiver unit

1303

Storage unit

FIG. 14

Communication apparatus 1400

**1403**

**1402**         **1401**

**1404**

Processor ───── Transceiver

Memory

FIG. 15

Communication apparatus 1500

**1501**

Processing unit

**1502**

Transceiver unit

**1503**

Storage unit

FIG. 16

Communication apparatus 1600

1602  1601  **1603**

**1604**

Processor — Transceiver

Memory

FIG. 17

## INTERNATIONAL SEARCH REPORT

International application No.

**PCT/CN2021/112306**

### A. CLASSIFICATION OF SUBJECT MATTER

H04L 5/00(2006.01)i

According to International Patent Classification (IPC) or to both national classification and IPC

### B. FIELDS SEARCHED

Minimum documentation searched (classification system followed by classification symbols)

H04L; H04W; H04B

Documentation searched other than minimum documentation to the extent that such documents are included in the fields searched

Electronic data base consulted during the international search (name of data base and, where practicable, search terms used)

CNPAT; CNKI; WPI; EPODOC; 3GPP: 参考信号, 导频, 码分复用, 载波, 组, 群, 簇, 符号, 正交, reference, signal, dmrs, cdm, occ, carrier, group, ofdm, symbol, orthogonal

### C. DOCUMENTS CONSIDERED TO BE RELEVANT

| Category* | Citation of document, with indication, where appropriate, of the relevant passages | Relevant to claim No. |
|---|---|---|
| Y | CN 110945816 A (INNOVATIVE TECHNOLOGY LAB CO., LTD.) 31 March 2020 (2020-03-31) description, paragraphs [0060]-[0070] | 1-54 |
| Y | WO 2017049646 A1 (HUAWEI TECHNOLOGIES CO., LTD.) 30 March 2017 (2017-03-30) description page 37 paragraph 2 pages 44 paragraph 4 | 1-54 |
| A | CN 110024322 A (IDAC HOLDINGS, INC.) 16 July 2019 (2019-07-16) entire document | 1-54 |
| A | WO 2017183912 A1 (LG ELECTRONICS INC.) 26 October 2017 (2017-10-26) entire document | 1-54 |

☐ Further documents are listed in the continuation of Box C.   ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **01 November 2021** | **11 November 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**EP 4 191 928 A1**

<table>
<tr><td colspan="2" align="center">INTERNATIONAL SEARCH REPORT<br>Information on patent family members</td><td colspan="2">International application No.<br><br>**PCT/CN2021/112306**</td></tr>
</table>

| Patent document cited in search report | | | Publication date (day/month/year) | Patent family member(s) | | | Publication date (day/month/year) |
|---|---|---|---|---|---|---|---|
| CN | 110945816 | A | 31 March 2020 | US | 2020228273 | A1 | 16 July 2020 |
| | | | | WO | 2018174665 | A1 | 27 September 2018 |
| | | | | US | 2018278395 | A1 | 27 September 2018 |
| | | | | EP | 3602945 | A1 | 05 February 2020 |
| | | | | IN | 201917041609 | A | 22 November 2019 |
| | | | | KR | 20190017179 | a | 22 September 2019 |
| | | | | KR | 20180107996 | A | 04 October 2018 |
| WO | 2017049646 | A1 | 30 March 2017 | CN | 107113272 | A | 29 August 2017 |
| CN | 110024322 | A | 16 July 2019 | RU | 2019108999 | A | 28 September 2020 |
| | | | | JP | 2019537856 | A | 26 December 2019 |
| | | | | US | 2020008228 | A1 | 02 January 2020 |
| | | | | EP | 3520304 | A1 | 07 August 2019 |
| | | | | WO | 2018064313 | A1 | 05 April 2018 |
| | | | | JP | 2021073775 | A | 13 May 2021 |
| | | | | KR | 20190071685 | A | 24 June 2019 |
| WO | 2017183912 | A1 | 26 October 2017 | US | 2019132837 | A1 | 02 May 2019 |

Form PCT/ISA/210 (patent family annex) (January 2015)

**EP 4 191 928 A1**

**Patent documents cited in the description**

- CN 202010821303

- CN 202110286619